# EUROPEAN PATENT SPECIFICATION

(11) **EP 4 093 837 B1**
(45) Date of publication and mention of the grant of the patent: **01.01.2025**
(21) Application number: 21711178.0
(22) Date of filing: 20.01.2021
(51) Int. Cl.: C09K 19/06, C09K 19/34, C09K 19/12, C09K 19/04, C09K 19/30

(54) **LIQUID-CRYSTAL MEDIUM**
FLÜSSIGKRISTALLMEDIUM
MILIEU À CRISTAUX LIQUIDES

(30) Priority: 23.01.2020 EP 20153383
(43) Date of publication of application: 30.11.2022
(73) Proprietor: Merck Patent GmbH, 64293 Darmstadt (DE)
(72) Inventor: LAUT, Sven Christian, 64293 DARMSTADT (DE); SCHOEN, Sabine, 64293 DARMSTADT (DE); PFEIFFER, Sabrina, 64293 DARMSTADT (DE); WINDHORST, Martina, 64293 DARMSTADT (DE)
(74) Representative: Merck Patent Association
(86) International application number: PCT/EP2021/051097
(87) International publication number: WO 2021/148421

(56) References cited:
- EP-A1- 3 460 025
- EP-A1- 3 489 329
- EP-A1- 3 666 853

## Description

The present invention relates to liquid-crystalline (LC) media having positive dielectric anisotropy and to liquid-crystal displays (LCDs) containing these media, especially to displays addressed by an active matrix and in particular to LC displays of the HB-FFS or XB-FFS type.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is generated substantially perpendicular to the substrates and the liquid-crystal layer.

Besides these modes, there are also electro-optical modes that utilise an electric field which is substantially parallel to the substrates or the liquid-crystal layer. For example, WO 91/10936 discloses a liquid-crystal display in which the electric signals are generated in such a way that the electric fields have a significant component parallel to the liquid-crystal layer, and which has since then become known as in-plane switching IPS) display. The principles of operating such a display are descried, for example, by R.A. Soref in Journal of Applied Physics, Vol. 45, No. 12, pp. 5466-5468 (1974).

IPS displays contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568, for example, discloses various possibilities for the design of the electrodes and for addressing an IPS display. DE 198 24 137 likewise describes various embodiments of such IPS displays.

Liquid-crystalline materials for IPS displays of this type are described, for example, in DE 195 28 104.

Furthermore, so-called "fringe-field switching" (FFS) displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, *i.e.* a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern desktop monitors, TV sets and multimedia applications. The liquid-crystalline media according to the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

A further improvement has been achieved by the so-called HB-FFS mode. One of the unique features of the HB-FFS mode in contrast to the traditional FFS technology is that it enables higher transmittance which allows operation of the panel with less energy consumption.

Liquid-crystal compositions which are suitable for LCDs and especially for FFS and IPS displays are known in prior art, for example, from EP 3 460 025 A1, EP 3 489 329 A1, JP 07-181 439 (A), EP 0 667 555, EP 0 673 986, DE 195 09 410, DE 195 28 106, DE 195 28 107, WO 96/23 851 and WO 96/28 521. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

The novelty over the disclosure EP 3 666 853 A1 under Article 54(3) EPC has been restored by disclaiming the following LC media:
X-1
B(S)-2O-O4 4.0 %
B(S)-2O-O5 4.0 %
CC-3-V 36.0 %
CC-V-V1 20.0 %
CCP-V-1 3.5 %
CDUQU-3-F 5.5 %
CLY-3-O2 5.0 %
COB(S)-2-O4 4.0 %
CPY-2-O2 8.5 %
DGUQU-4-F 3.5 %
PGUQU-4-F 5.5 %
Y-4O-O4 0.5 %
Σ 100.0 %
X-2
B(S)-2O-O4 4.0 %
B(S)-2O-O5 4.0 %
CC-3-V 36.0 %
CC-V-V1 20.0 %
CCP-V-1 5.0 %
CDUQU-3-F 5.0 %
CLY-3-O2 5.0 %
COB(S)-2-O4 5.0 %
CPY-2-O2 6.5 %
DGUQU-4-F 4.0 %
PGUQU-4-F 4.5 %
PY-3-O2 1.0 %
Σ 100.0 %
X-3
B(S)-2O-O4 4.0 %
B(S)-2O-O5 4.0 %
CC-2V-V2 20.0 %
CC-3-V 38.0 %
CCP-V-1 3.0 %
CDUQU-3-F 7.5 %
COB(S)-2-O4 5.5 %
CPY-2-O2 4.0 %
PGUQU-4-F 6.5 %
PY-3-O2 7.5 %
Σ 100.0 %
X-4
B(S)-2O-O4 3.0 %
B(S)-2O-O5 4.0 %
CC-3-V 36.5 %
CC-V-V1 20.0 %
CCP-V-1 2.5 %
CDUQU-3-F 4.0 %
CLY-3-O2 4.0 %
COB(S)-2-O4 5.5 %
DGUQU-4-F 4.0 %
GUQU-4-F 6.5 %
CPY-3-O2 8.0 %
CY-3-O2 2.0 %
Σ 100.0 %.

FFS and IPS displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably addressed by an active matrix, preferably by a matrix of TFT. However, the liquid crystals according to the invention can also advantageously be used in displays having other known addressing means.

Typical applications of in-plane switching (IPS) and fringe field switching (FFS) technologies are monitors, notebooks, televisions, mobile telephones, tablet PCs, etc.

Both the IPS and the FFS technology have certain advantages over other LCD technologies, such as, for example, the vertical alignment (VA) technology, e.g. a broad viewing angle dependency of the contrast.

The provision of further liquid-crystalline media and the use thereof in a display having high transmission, a good black state and a high contrast ratio is a central challenge for modern FFS and IPS applications. In addition, modern applications also require good low-temperature stability and fast addressing times.

The invention has the object of providing liquid-crystalline media, in particular for FFS and IPS displays, and in particular for active-matrix displays like those addressed by TFTs, which do not exhibit the disadvantages indicated above or only do so to a lesser extent and preferably have high specific resistance, low threshold voltage, high dielectric anisotropy, a good low temperature stability (LTS), fast response times and low rotational viscosities, and enable high brightness.

This was achieved by providing liquid-crystalline media as described and claimed hereinafter.

It was observed that a high brightness in displays like those of the HB-FFS mode can be achieved by using liquid-crystalline media having positive dielectric anisotropy and also having an increased dielectric constant ε_{⊥} perpendicular to the longitudinal axes of the liquid-crystalline molecules. This can be achieved by adding a limited amount of liquid-crystalline compounds with negative dielectric anisotropy, which have high ε_{⊥} properties, to the liquid-crystalline medium whilst maintaining a positive dielectric anisotropy of the entire medium. However, the addition of compounds with high ε_{⊥} have some drawbacks. For example this can lead to higher values of the rotational viscosity γ₁, and consequently to higher values of the ratio γ₁ /K₂₂ of the rotational viscosity γ₁ and the elastic constant K₂₂ for twist deformation, which leads to higher response times. Since K₂₂ is approximately proportional to the elastic constant K₁₁ for splay deformation (the value of K₂₂ is typically about half the value of K₁₁), this can easily be determined by measuring γ₁ and K₁₁.

Another disadvantage is that the reliability (VHR) of HB-FFS mixtures can be worse compared to conventional FFS mixtures and that the low-temperature stability (LTS) can be worse.

In particular, there is a need in the art to provide liquid crystalline media for HB-FFS displays with improved low-temperature stability (LTS).

It is an object of the present invention to provide improved liquid-crystal media suitable for the use in HB-FFS displays that do not show the disadvantages described above and which in particular have improved reliability while keeping high transmittance compared to media from the prior art and which at the same time show improved LTS.

To solve the problem, the present invention provides a liquid-crystalline medium according to claim 1.

Advantageous embodiments of the invention are subject of the dependent claims and can also be taken from the description.

The invention relates to an LC medium with positive dielectric anisotropy comprising
a) one or more compounds of formula I 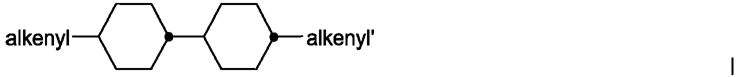 in which
   alkenyl and alkenyl', identically or differently, denote an alkenyl radical having 2 to 5 C atoms,
   and
b) one or more compounds selected from the group of compounds of the formulae II and III 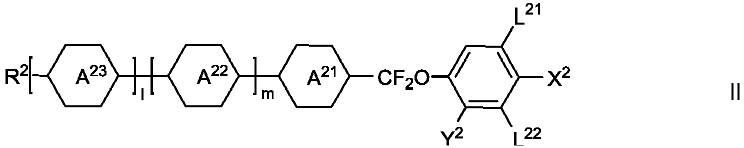 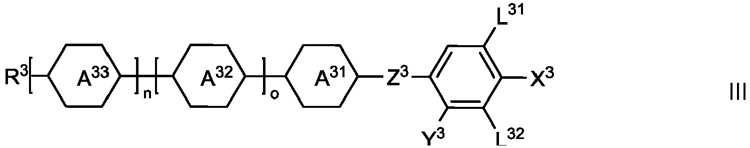 in which
   - R² and R³: denote a straight-chain or branched alkyl or alkoxy radical that is unsubstituted or halogenated and has 1 to 15 C atoms, where one or more CH₂ groups in these radicals may each be replaced, independently of one another, by 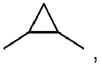 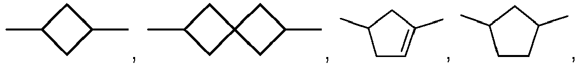 -C≡C-, -CF₂O-, -CH=CH-, -O-, -CO-O- or -O-CO- in such a way that O atoms are not linked directly to one another, 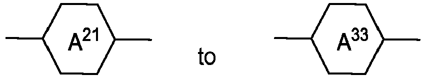 identically or differently, denote 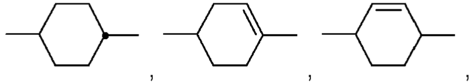 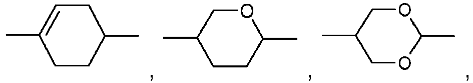 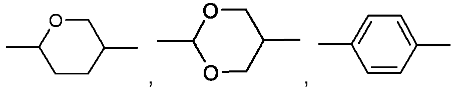 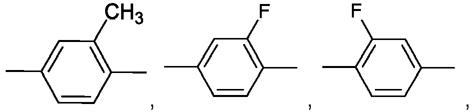 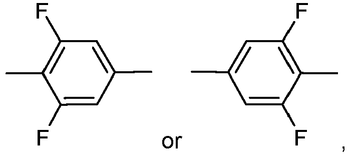 preferably 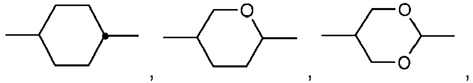 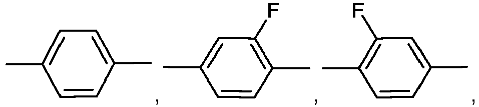 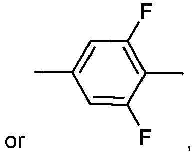
   - L²¹, L²², L³¹ and L³²: independently of each other, denote H or F, preferably F,
   - Y² and Y³: identically or differently, denote H or CH₃,
   - X² and X³: independently of each other, denote halogen, halogenated alkyl or alkoxy with 1 to 3 C-atoms or halogenated alkenyl or alkenyloxy with 2 or 3 C-atoms, preferably F, Cl, OCF₃ or CF₃, most preferably F, CF₃ or OCF₃,
   - Z³: denotes -CH₂CH₂-, -CF₂CF₂-, -COO-, *trans-* -CH=CH-, *trans-*CF=CF-, -CH₂O- or a single bond, preferably -CH₂CH₂-, -COO-, *trans-* -CH=CH- or a single bond and most preferably -COO-, *trans-* -CH=CH- or a single bond, and
   - I, m, n and o: are, independently of each other, 0 or 1, preferably I + m is 2,
   and
c) one or more compounds selected from the compounds of the formulae Y and B 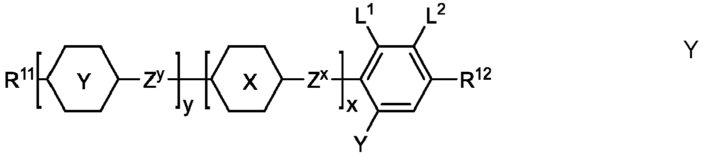 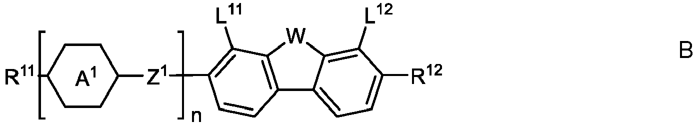 in which the individual radicals, on each occurrence identically or differently, have the following meaning: 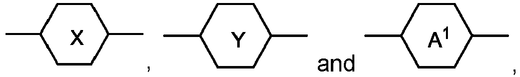 independently of one another, 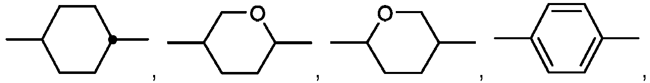 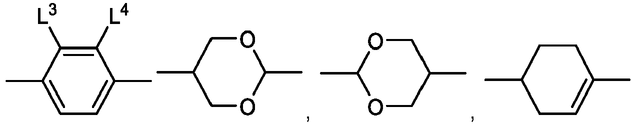 or 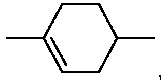
   - R¹¹, R¹²: identically or differently, a straight-chain or branched alkyl or alkoxy radical that is unsubstituted or halogenated and has 1 to 15 C atoms, where one or more CH₂ groups in these radicals may each be replaced, independently of one another, by 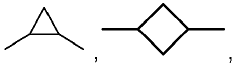 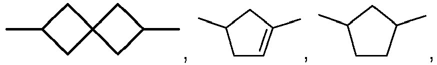 preferably 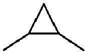 or 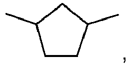 or by -C≡C-, -CF₂O-, -CH=CH-, -O-, -CO-O- or -O-CO- in such a way that O atoms are not linked directly to one another, and R¹² alternatively denotes F,
   - Z^{x}, Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
   - Z¹: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond or -CH₂O-,
   - W: OorS,
   - L¹, L², L¹¹, L¹² F or Cl,: preferably F,
   - L³, L⁴ H, F CI or CH₃,: preferably H or F,
   - Y: denotes H, F, Cl, CF₃, CHF₂ or CH₃, preferably H or CH₃, particularly preferably H,
   - x, y: 0, 1 or 2, with x+y ≤3,

   n denotes 0 or 1,
   wherein the medium comprises one or more compounds selected from the compounds of the formulae B-1 and B-2, as in claim 1 and defined below,
   with the proviso that the LC media X-1, X-2, X-3 and X-4, as in claim 1 and defined above, are excluded.

Surprisingly, the media according to the invention show extremely high LTS while having advantageously high value of ε_{⊥} and at the same time low rotational viscosity and low ratios of γ₁ /K₂₂ and γ₁ /K₁₁, which enable fast response times in displays using liquid-crystalline media as described and claimed herein. Displays that make use of the media according to the invention are further distinguished by a particularly high contrast and very high reliability.

In particular, the combination of compounds of formula I with compounds of formula II and/or III, and additionally with compounds selected from formulae B and/or Y or their sub-formulae shown below, leads to liquid-crystalline media which show a moderately positive dielectric anisotropy and at the same time an increased dielectric constant ε_{⊥} perpendicular to the longitudinal axes of the liquid-crystalline molecules, while maintaining a low rotational viscosity and a low value of the ratio γ₁ /K₁₁. This enables liquid-crystalline displays, especially of the HB-FFS, FFS and IPS mode, with high brightness and transmission and low response times.

The liquid-crystalline media according to the invention are suitable for mobile applications and TFT applications, such as, for example, mobile telephones and PDAs. Furthermore, the liquid-crystalline media according to the invention are particularly suitably for use in FFS, HB-FFS and IPS displays based on dielectrically positive liquid crystals.

The liquid-crystal media according to the present invention are especially suitable for use in liquid-crystal displays of the FFS, HB-FFS and IPS mode, based on dielectrically positive liquid crystals, and polymer stabilised variants thereof, in particular for large size TV applications.

The invention further relates to the use of a liquid-crystalline medium as described above and below for electro-optical purposes, in particular for the use in liquid-crystal displays, shutter glasses, LC windows or for 3D applications.

The invention further relates to an electro-optical liquid-crystal display containing a liquid-crystalline medium as described above and below, in particular a HB-FFS display.

In the present application, all atoms also include their isotopes. In particular, one or more hydrogen atoms (H) may be replaced by deuterium (D), which is particularly preferred in some embodiments; a high degree of deuteration enables or simplifies analytical determination of compounds, in particular in the case of low concentrations.

Herein, an alkyl radical and/or an alkoxy radical is taken to mean straight-chain or branched alkyl. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy; it may further denote cyclopropylmethyl, cyclopropylethyl, cyclopropylpropyl, cyclopropylbutyl, or cyclopropylpentyl, cyclopropylmethoxy, cyclopropylethoxy, cyclopropylpropoxy, or cyclopropyl butoxy.

Herein, branched alkyl preferably denotes an alky radical substituted by one or two, preferably one, methyl or ethyl group, very preferably selected from isopropyl, 1-methylpropyl, 1-methylbutyl, 2-ethylhexyl.

Herein, oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

Herein, alkenyl, i.e. an alkyl radical in which one CH₂ group has been replaced by -CH=CH- , may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

Herein, an alkyl or alkenyl radical which is at least monosubstituted by halogen, is preferably straight-chain, and halogen is preferably F or CI. In the case of polysubstitution, halogen is preferably F. The resultant radicals also include perfluorinated radicals. In the case of monosubstitution, the fluorine or chlorine substituent may be in any desired position, but is preferably in the ω-position.

Herein, all polar compounds, for example compounds of formula B, are optionally methylated in any position which may improve miscibility with other mesogenic cocomponents.

Halogen is F, Cl or Br, preferably Cl or F, very preferably F.

Herein, halogenated alkyl or alkyloxy is mono- or polyhalogenated alkyl or alkyloxy, which are preferably mono- or polyfluorinated.

Herein, a mono- or polyfluorinated alkyl or alkoxy radical having 1, 2 or 3 C atoms or a mono- or polyfluorinated alkenyl radical having 2 or 3 C atoms is particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ or CH=CF₂, very particularly preferably F or OCF₃, furthermore CF₃, OCF=CF₂, OCHF₂ or OCH=CF₂.

The compounds of formula I are preferably selected from the compounds of the formula I-1 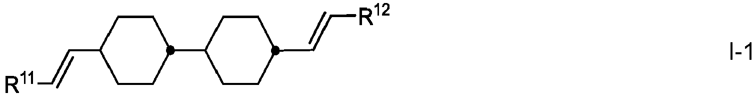 in which
R¹¹ and R¹², identically or differently, denote H, CH₃, or C₂H₅.

Preferably, the medium comprises one or more compounds of formula II, preferably selected from the group of compounds of formulae II-1 to II-3, very preferably from the group of compounds of formulae II-1 and II-2 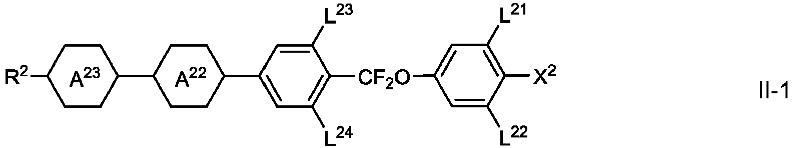 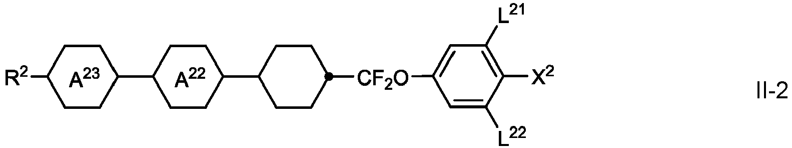 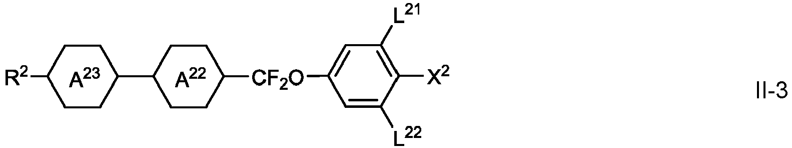 in which the occurring groups have the respective meanings given under formula II above and in formula II-1 the radicals L²³ and L²⁴ denote, independently of each other and of the other parameters, H or F and in formula II-2 preferably 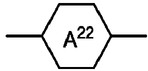 and 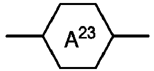 denote, independently of each other,

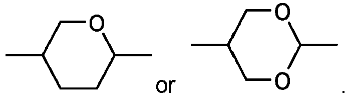

In formulae II-1 to II-3, L²¹ and L²² or L²³ and L²⁴ are preferably both F.

In another preferred embodiment in formulae II-1 and II-2, all of L²¹, L²², L²³ and L²⁴ denote F.

The compounds of formula II-1 are selected from the group of compounds of formulae II-1a to II-1h 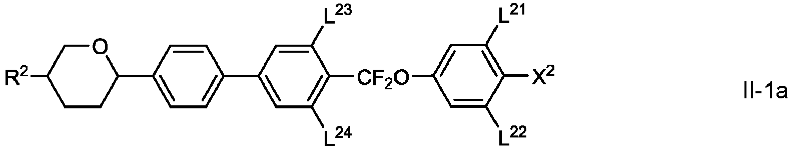 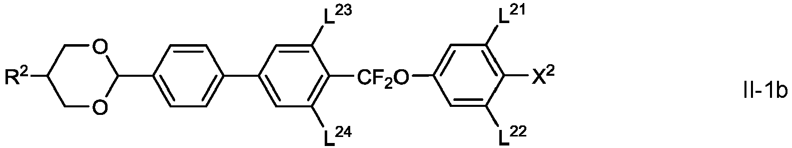 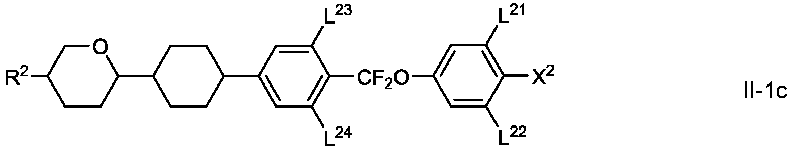 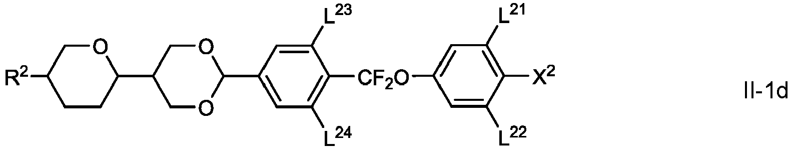 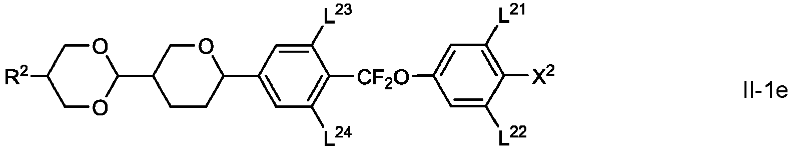 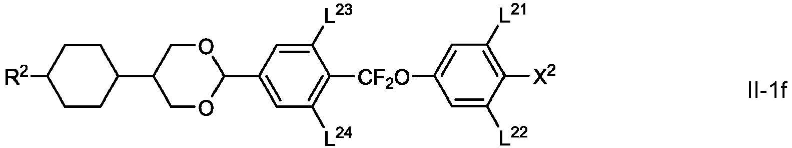 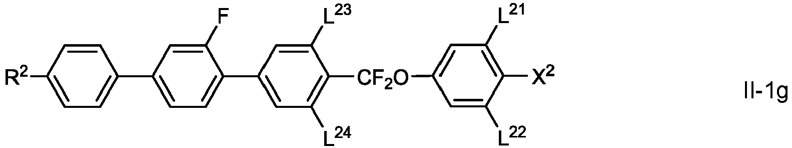 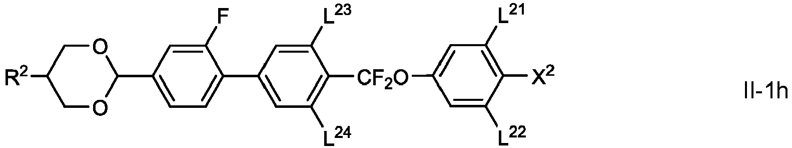 in which the occurring groups have the respective meanings given above.

In a preferred embodiment of the present invention the medium comprises one or more compounds selected from the group of compounds of the formulae II-1a to II-1 h wherein L²¹ and L²², and/or L²³ and L²⁴ are both F, respectively.

In another preferred embodiment the medium comprises compounds selected from the group of compounds of formulae II-1a to II-1h, wherein L²¹, L²², L²³ and L²⁴ all are F.

Especially preferred compounds of formula II-1 are 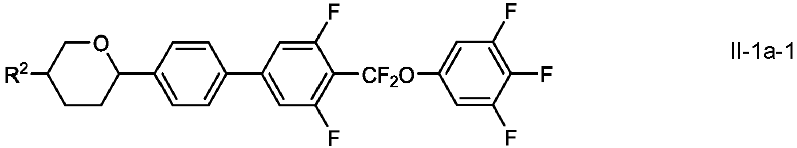 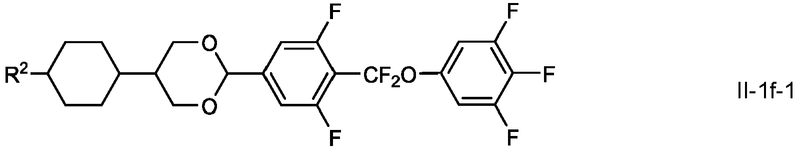 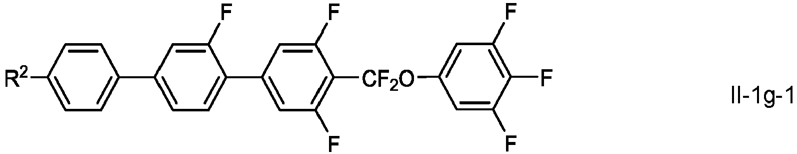 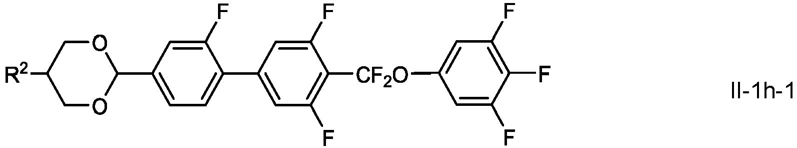 in which R² has the meaning given above.

Preferably the compounds of formula II-2 are selected from the group of compounds of formulae II-2a to II-2c 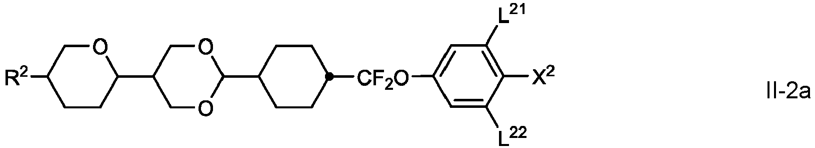 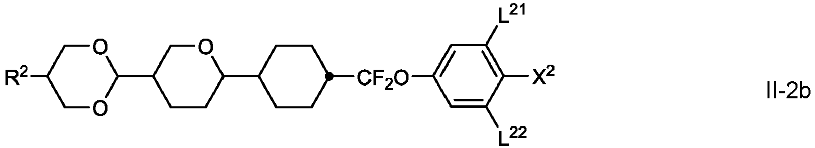 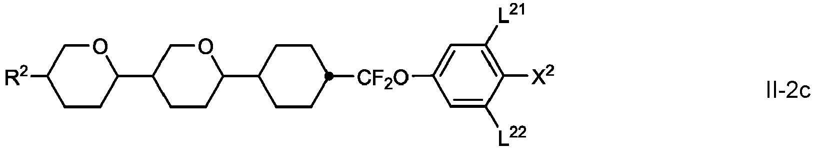 in which the occurring groups have the respective meanings given above and preferably L²¹ and L²² are both F.

Preferably the compounds of formula II-3 are selected from the group of compounds of formulae II-3a to II-3e 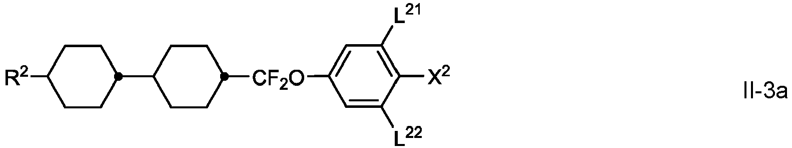 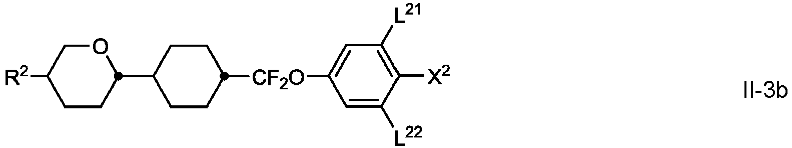 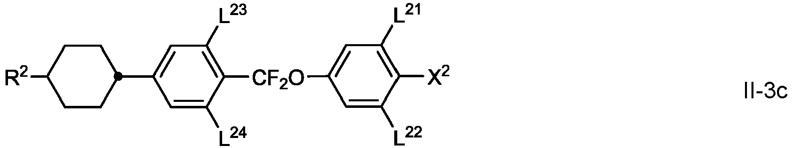 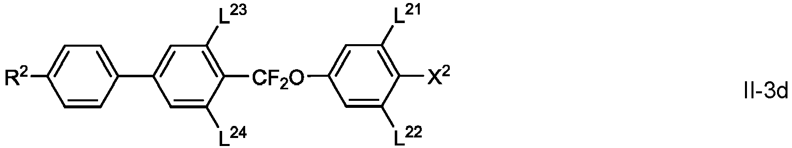 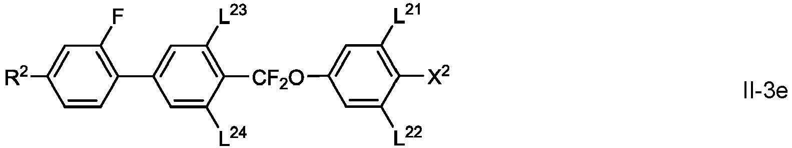
in which the occurring groups have the respective meanings given above and preferably
L²¹ and L²² are both F and L²³ and L²⁴ are both H or
L²¹, L²², L²³ and L²⁴ are all F.

Especially preferred compounds of formula II-3 are 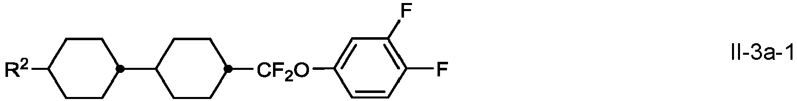 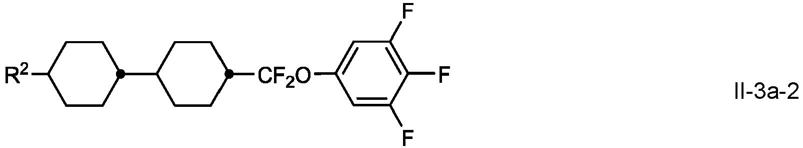 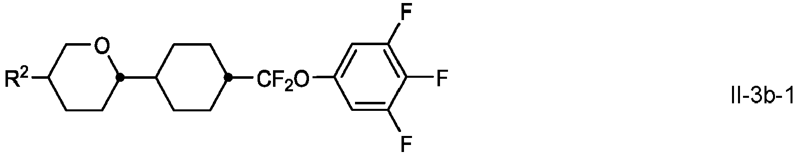 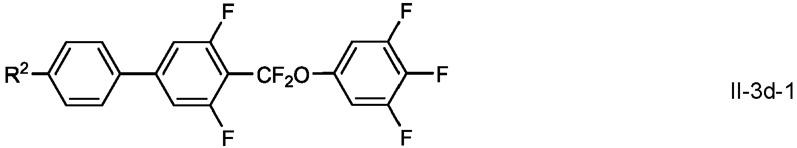 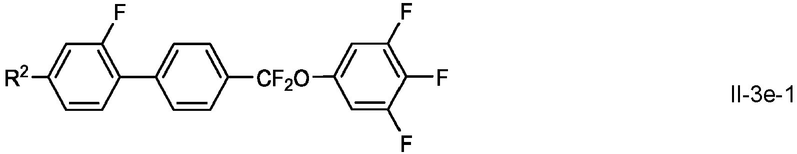 in which R² has the meaning given above.

In another preferred embodiment of the present invention compounds of formula III are selected from the group of formulae III-1 and III-2, preferably III-2 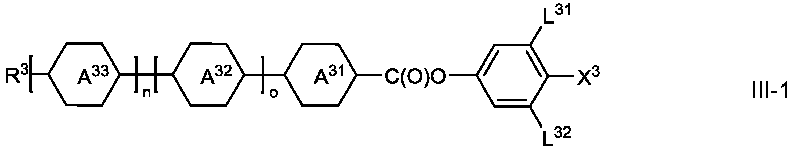 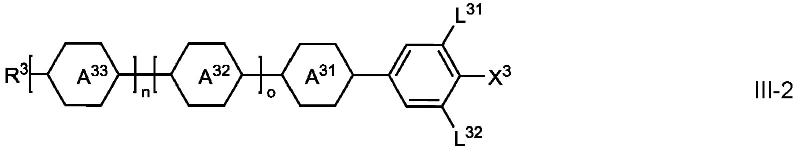 wherein the occurring groups and parameters have the respective meanings given under formula III above.

Preferably the compounds of formula III-1 are selected from the group of compounds of formulae III-1a and III-1b 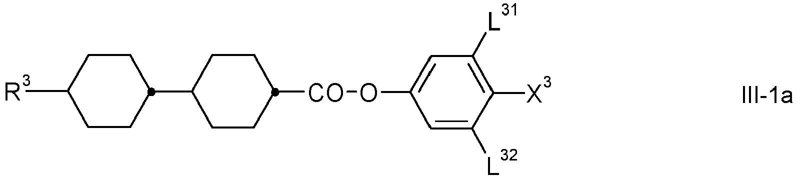 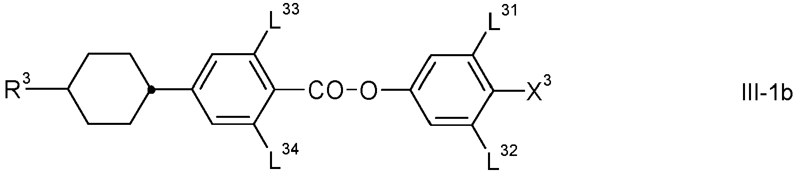 wherein the parameters have the respective meanings given above and the parameters L³³ and L³⁴, independently of each other and of the other parameters, denote H or F.

Preferably the compounds of formula III-2 are selected from the group of compounds of formulae III-2a to III-2I 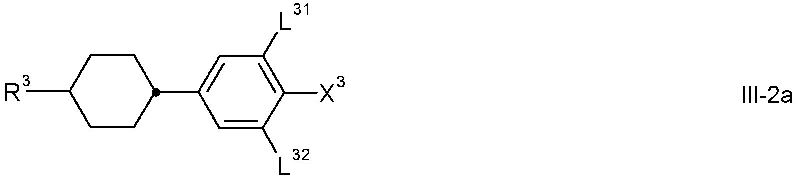 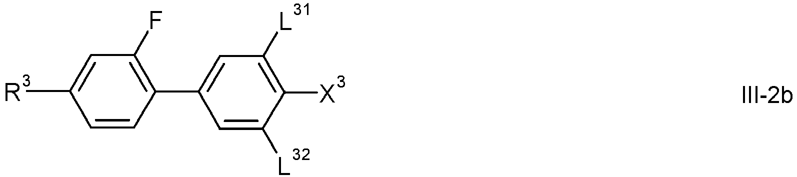 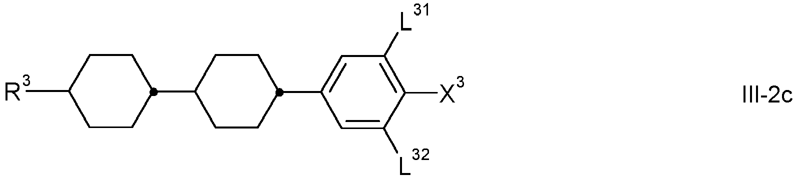 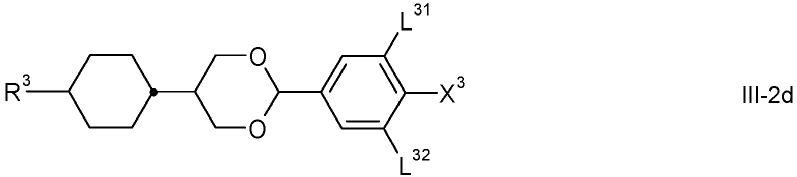 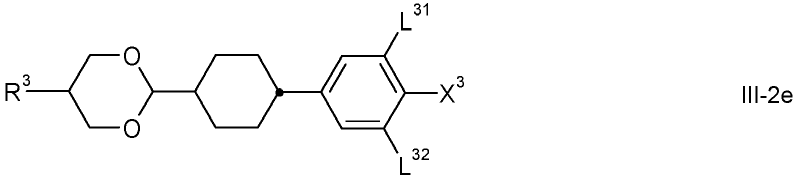 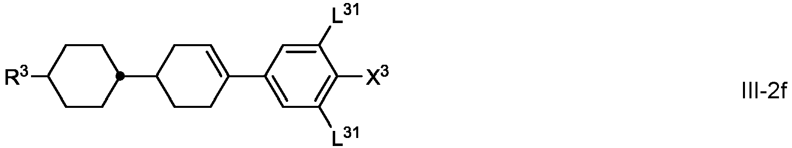 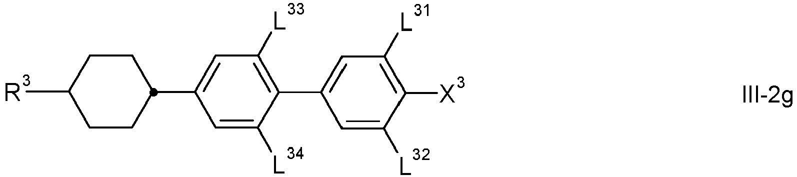 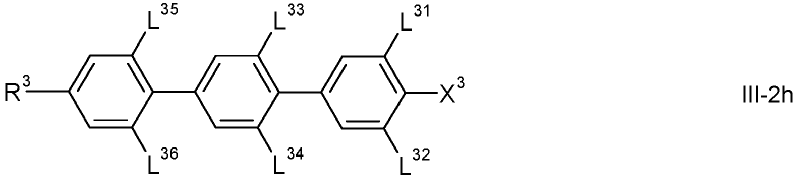 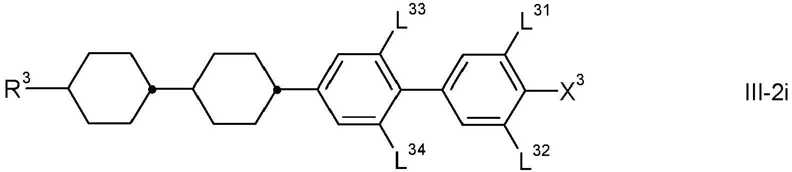 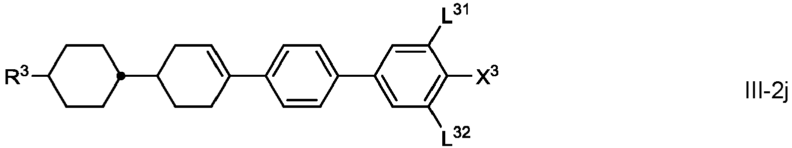 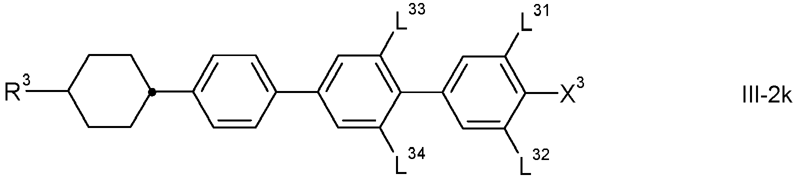 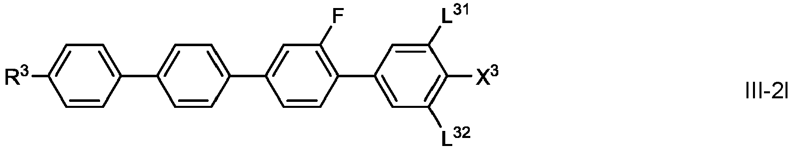 in which parameters have the respective meanings given above and L³⁵ and L³⁶, independently of one another, denote H or F.

The compounds of formula III-1a, are preferably selected from the group of compounds of formulae III-1a-1 to III-1a-6 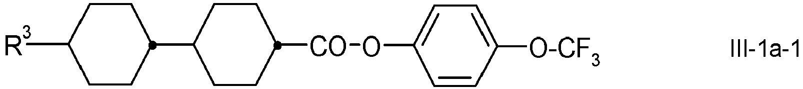 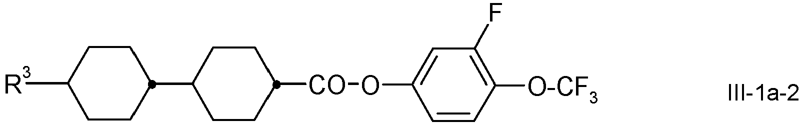 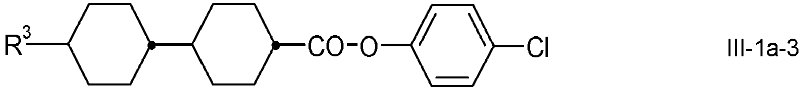 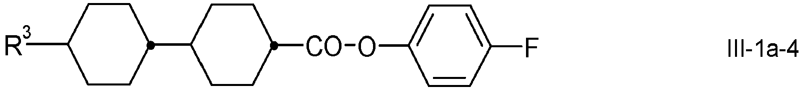 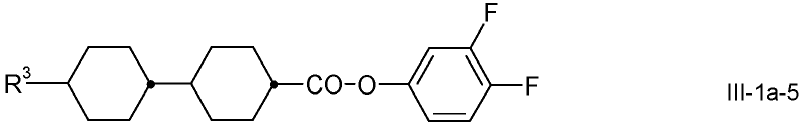 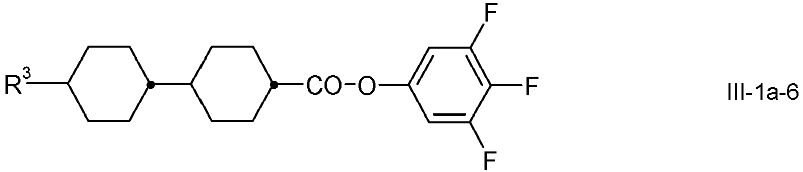 in which R³ has the meaning given above.

In another preferred embodiment the compounds of formula II-2a are selected from the group of compounds of formulae III-2a-1 to III-2a-4 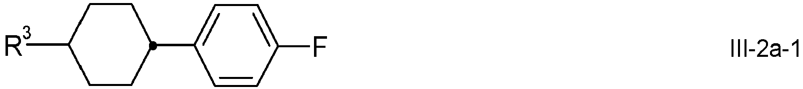 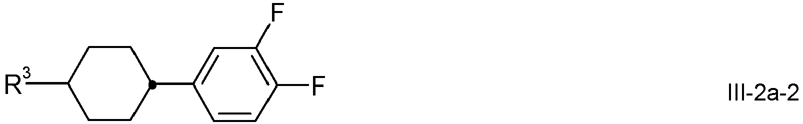 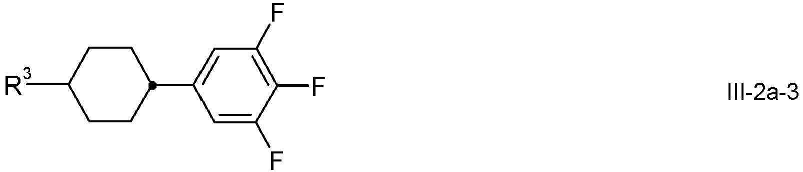 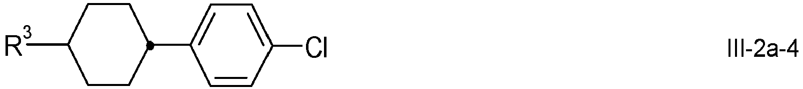 in which R³ has the meaning given above.

The compounds of formula III-2b are preferably selected from the group of compounds of formulae III-2b-1 and III-2b-2, preferably III-2b-2 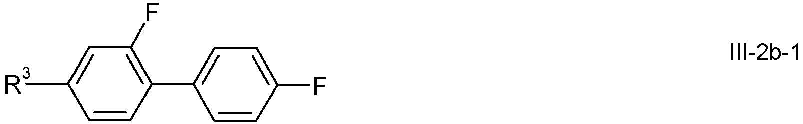 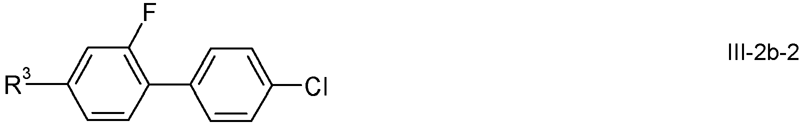 in which R³ has the meaning given above.

The compounds of formula II-2c, are preferably selected from the group of compounds of formulae III-2c-1 to III-2c-5 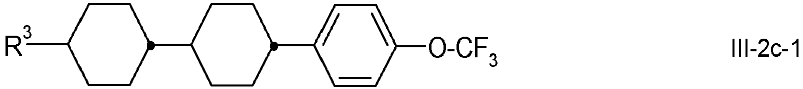 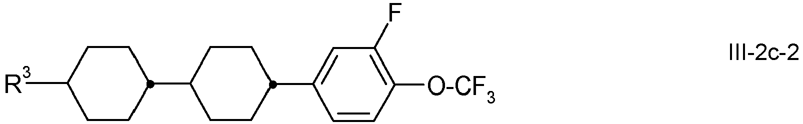 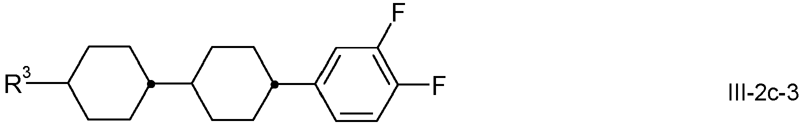 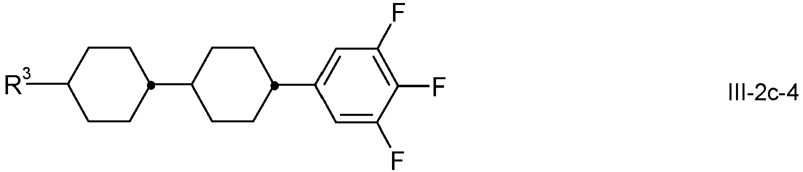 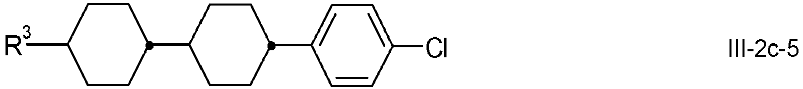 in which R³ has the meaning given above.

The compounds of formulae III-2d and III-2e are preferably selected from the group of compounds of formulae III-2d-1 and III-2e-1 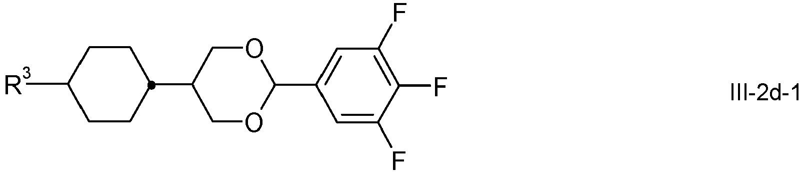 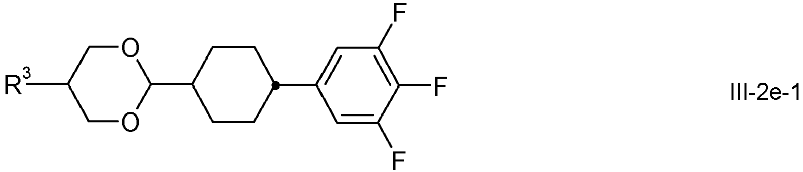 in which R³ has the meaning given above.

The compounds of formula III-2f are preferably selected from the group of compounds of formulae III-2f-1 to III-2f-7

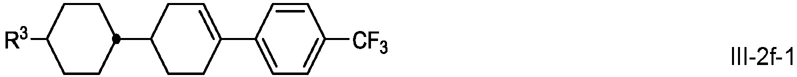

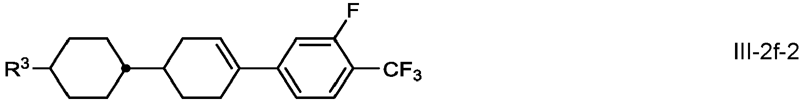

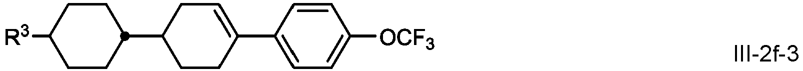

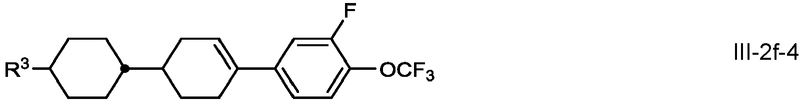

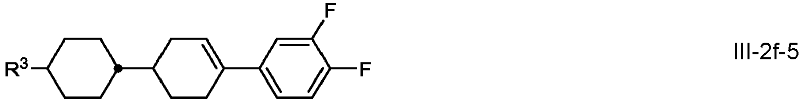

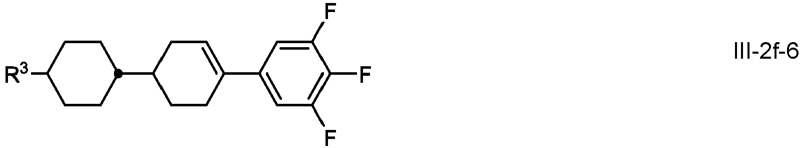

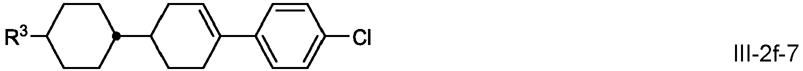

The compounds of formula III-2g are preferably selected from the group of compounds of formulae III-2g-1 to III-2g-7 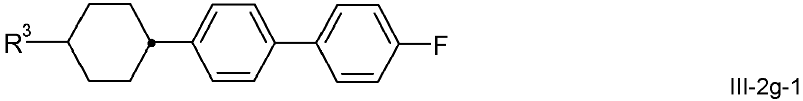 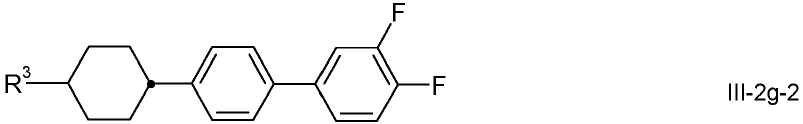 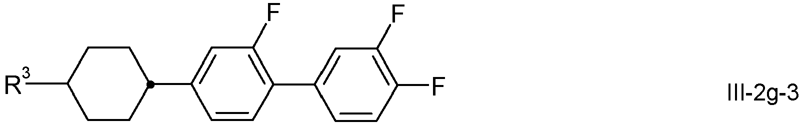 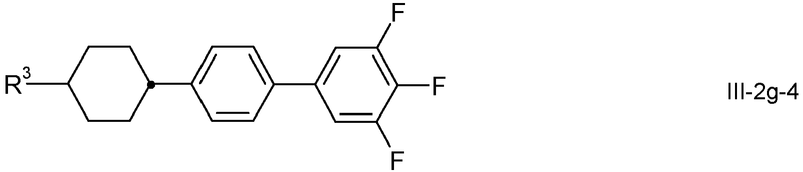 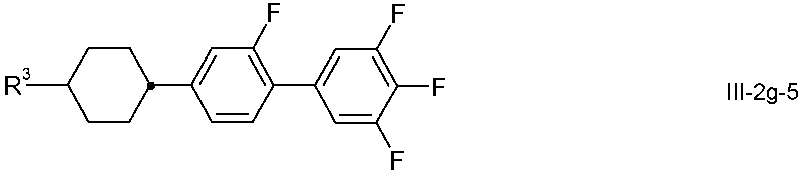 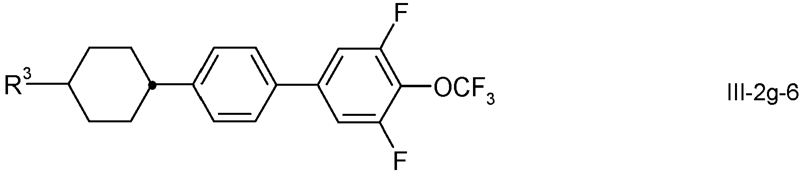 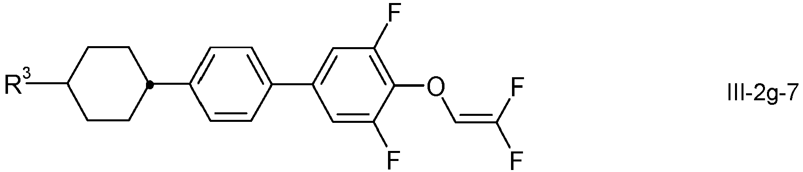 in which R³ has the meaning given above.

The compounds of formula III-2h are preferably selected from the group of compounds of formulae III-2h-1 to III-2h-5 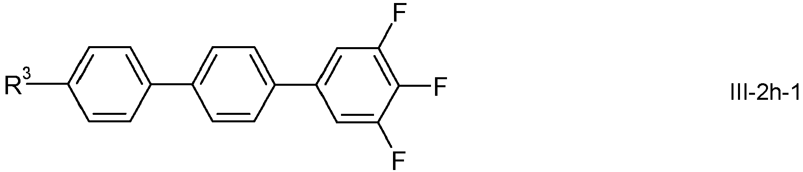 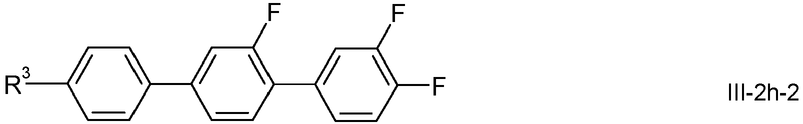 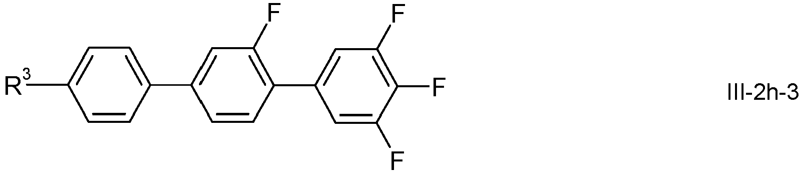 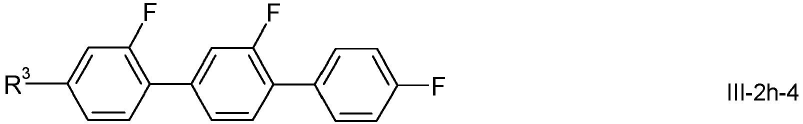 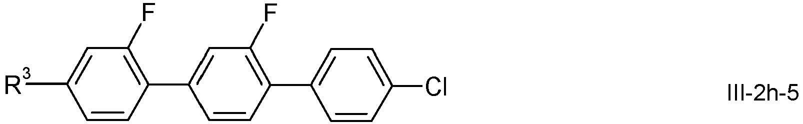 in which R³ has the meaning given above.

The compounds of formula III-2i are preferably selected from the group of compounds of formulae III-2i-1 to III-2i-3 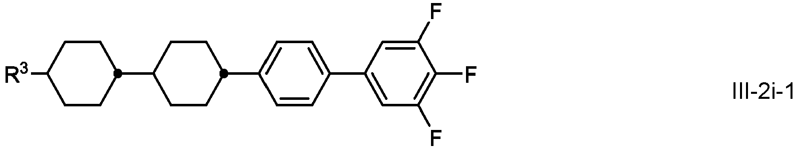 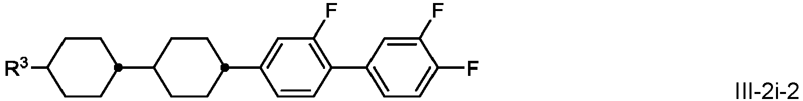 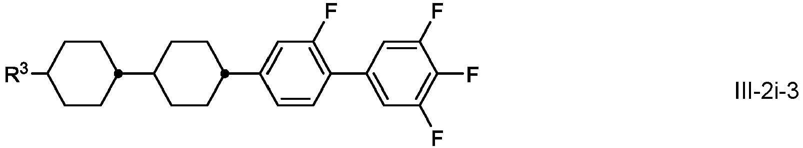 in which R³ has the meaning given above.

The compounds of formula III-2j are preferably selected from the group of compounds of formulae III-2j-1 to III-2j-3 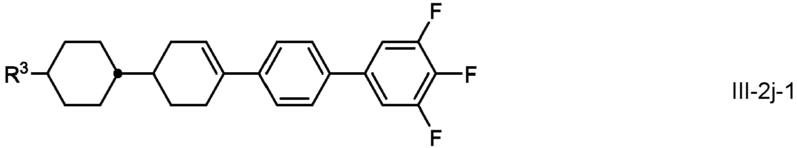 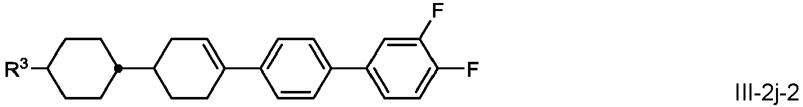 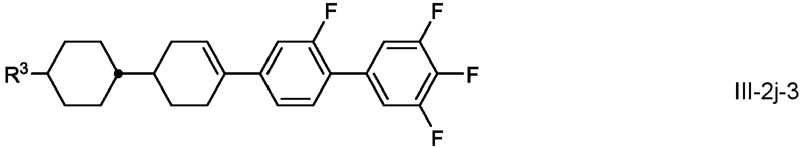 in which R³ has the meaning given above.

The compounds of formula III-2k are preferably selected from the group of compounds of formulae III-2k-1 to III-2k-6 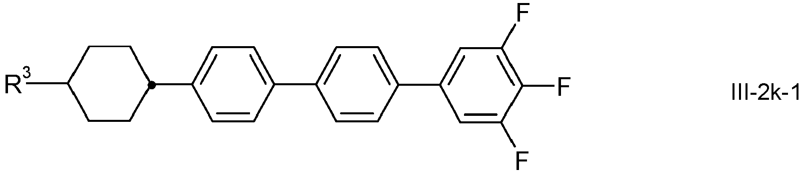 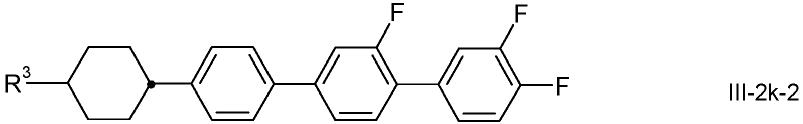 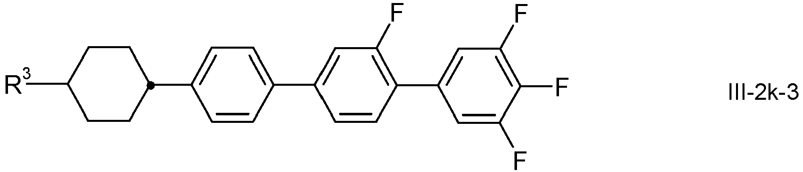 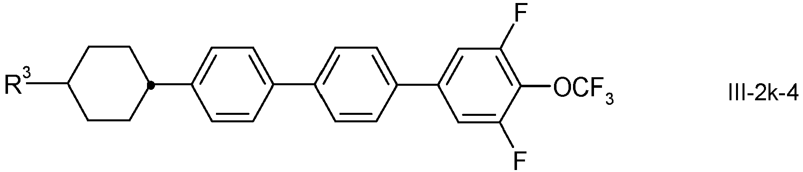 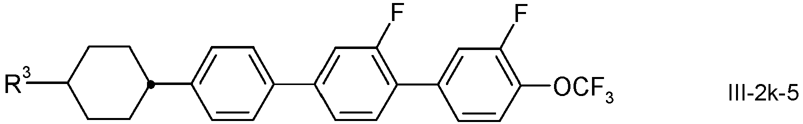 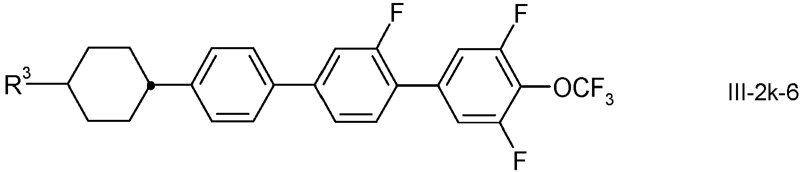 in which R³ has the meaning given above.

The compounds of formula III-2I are preferably selected from the compounds of formula III-2I-1

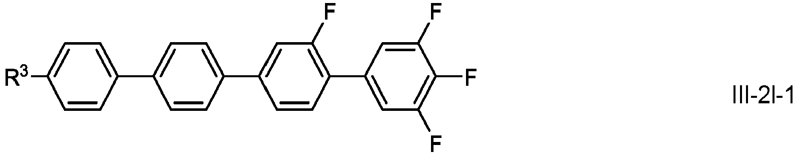

Alternatively or additionally to compounds of formulae III-1 and/or III-2 the media according to the present invention may comprise one or more compounds of formula III-3, 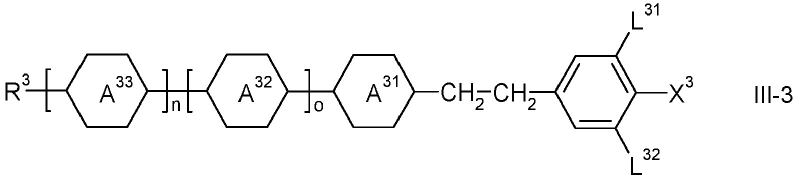
in which the parameters have the respective meanings given under formula III above,
and preferably of formula III-3a 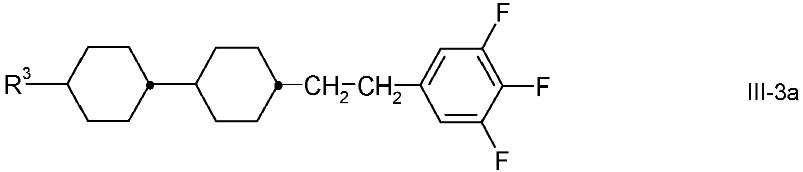
in which the R³ has the meaning given above.

Preferably, the medium according to the invention comprises one or more compounds of formula IV 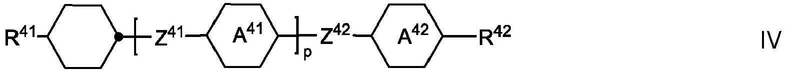 in which
- R⁴¹ and R⁴²: independently of each other have the meaning given for R² under formula II above, preferably R⁴¹ is alkyl and R⁴² is alkyl or alkoxy or R⁴¹ is alkenyl and R⁴² is alkyl, 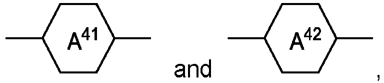 on each occurrence, identically or differently, denote 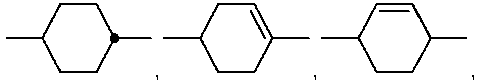 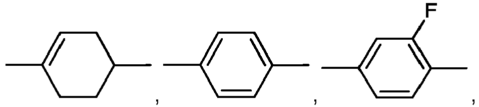 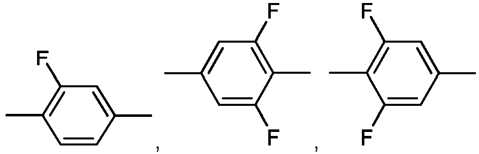 or 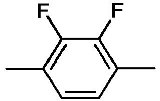 preferably at least one of 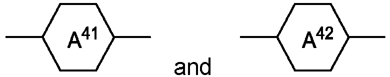 is 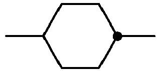
- Z⁴¹, Z⁴²: independently of each other, and in case Z⁴¹ is present twice, also these independently of each other, denote -CH₂CH₂-, -COO-, *trans-* -CH=CH-, *trans-* -CF=CF-, -CH₂O-, -CF₂O-, -C=C- or a single bond, preferably at least one of them is a single bond, and
- p: is 0, 1 or 2, preferably 0 or 1,
where the compounds of formula I are excluded.

Preferably the liquid crystalline media according to the present invention comprise one or more compounds of formula IV preferably selected from the group of compounds of formulae IV-1 to IV-6 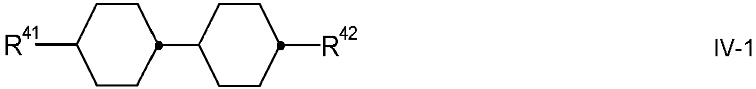 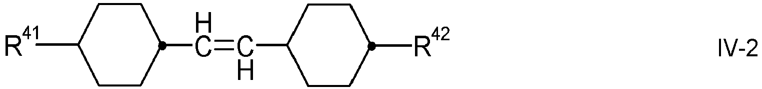 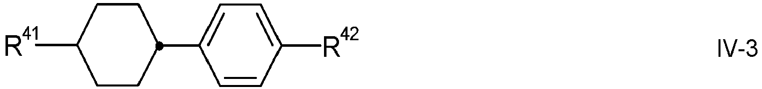 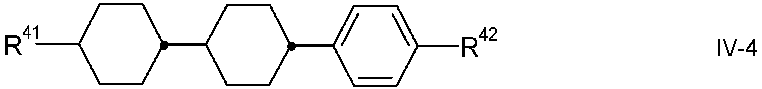 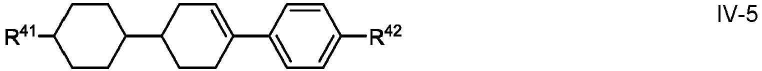 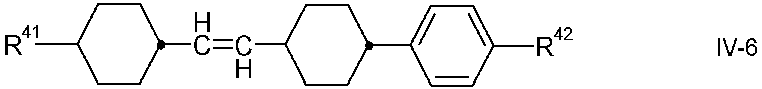 in which R⁴¹ and R⁴² have the respective meanings given under formula IV above and in formulae IV-1, IV-4, IV-5 and IV-6 R⁴¹ preferably is alkyl or alkenyl, preferably alkenyl and R⁴² preferably is alkyl or alkenyl, preferably alkyl; in formula IV-2 R⁴¹ and R⁴² preferably are alkyl and in formula IV-3 R⁴¹ preferably is alkyl or alkenyl, preferably alkyl and R⁴² preferably is alkyl or alkoxy, preferably alkoxy.

Particularly preferably, the medium according to the invention comprises one or more compounds of formula IV-1 and one or more compounds of formula IV-4 and/or IV-5.

In a preferred embodiment the medium further comprises one or more compounds of formula IV selected from the group of compounds of formulae IV-7 to IV-14 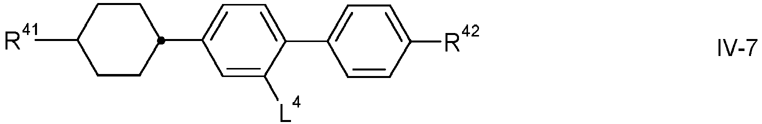 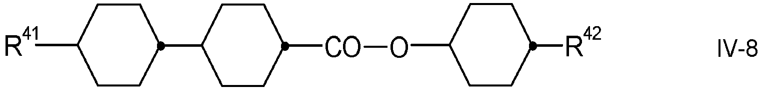 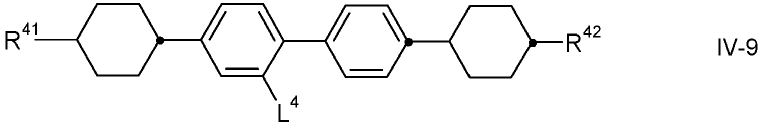 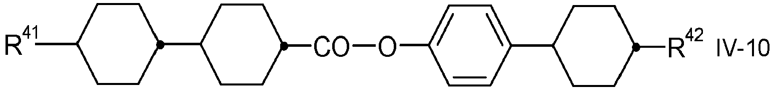 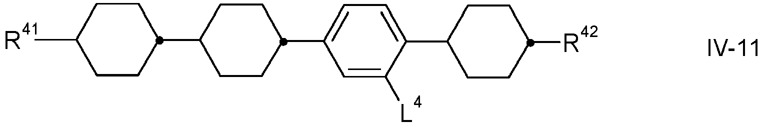 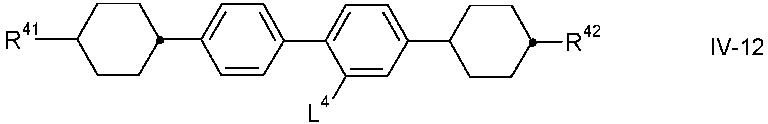 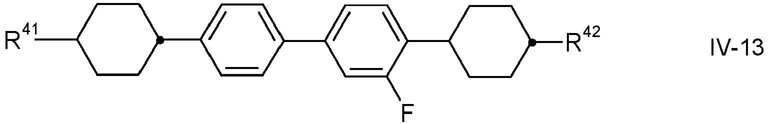 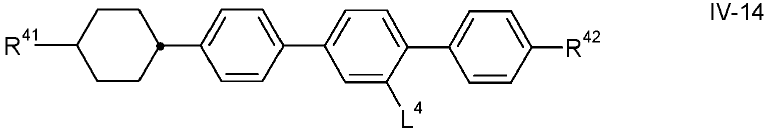 in which
- R⁴¹ and R⁴²: independently of each other, denote alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms and
- L⁴: denotes H or F.

Alternatively or additionally to compounds of formulae II and/or III the media according to the present invention may comprise one or more compounds of formula V 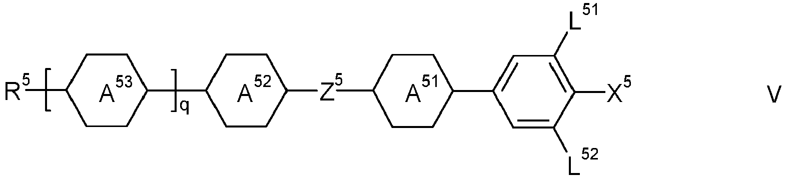 in which R⁵ has the meaning defined above for R2 under formula II and preferably
- R⁵: is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, very preferably is alkyl or alkenyl having up to 5 C atoms, 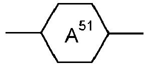 to 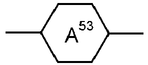 are, independently of each other, 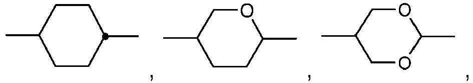 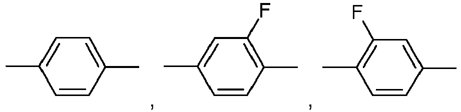 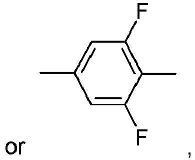
- L⁵¹ and L⁵²,: independently of each other, denote H or F, preferably L⁵¹ denotes F and
- X⁵: denotes halogen, halogenated alkyl or alkoxy with 1 to 3 C-atoms or halogenated alkenyl or alkenyloxy with 2 or 3 C-atoms, preferably F, CI, -OCF₃ or -CF₃, most preferably F, Cl or -OCF₃,
- Z⁵: denotes -CH₂CH₂-, -CF₂CF₂-, -COO-, *trans-* -CH=CH-, *trans-*CF=CF- or -CH₂O, preferably -CH₂CH₂-, -COO- or trans-CH=CH- and most preferably -COO- or -CH₂CH₂-, and
- q: is 0 or 1.

Preferably the media according to the present invention comprises one or more compounds of formula V, preferably selected from the group of compounds of formulae V-1 and V-2 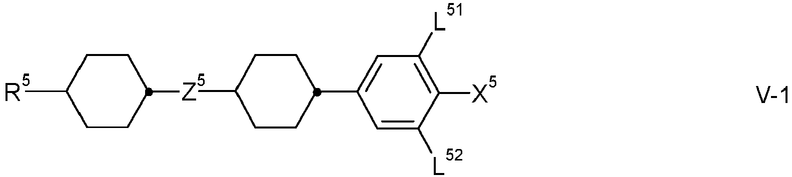 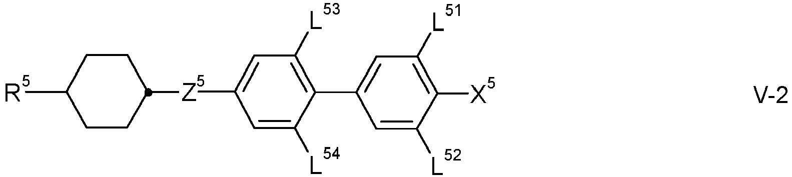 in which the parameters have the respective meanings given above and the parameters L⁵³ and L⁵⁴ are, independently of each other and of the other parameters, H or F and preferably Z⁵ is -CH₂-CH₂-.

Preferably the compounds of formula V-1 are selected from the group of compounds of formulae V-1a and V-1b 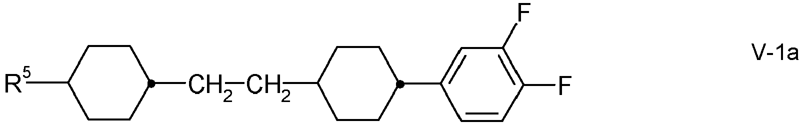 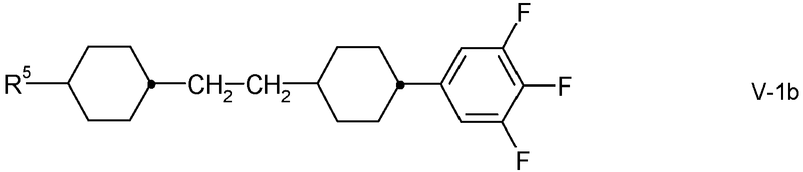 in which the R⁵ has the meaning given above.

Preferably the compounds of formula V-2 are selected from the group of compounds of formulae V-2a to V-2d 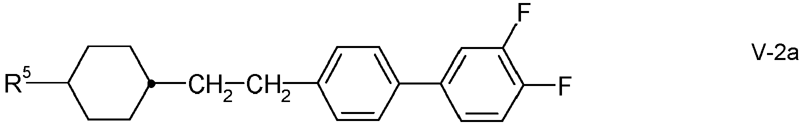 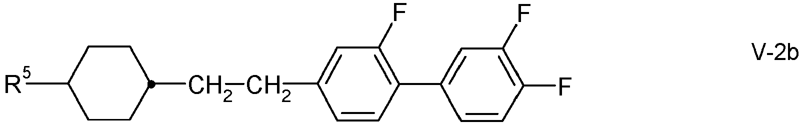 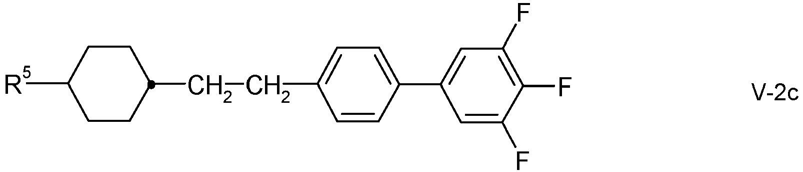 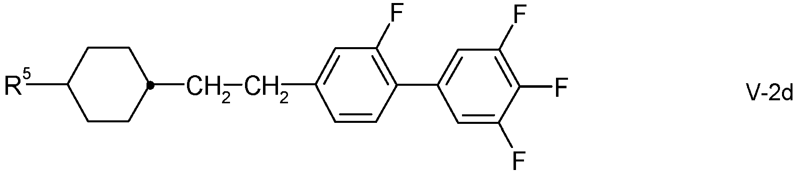 in which the R⁵ has the meaning given above.

Preferably the liquid crystalline media according to the present invention additionally comprise one or more compounds of formula VI 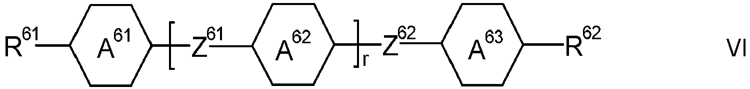 in which
- R⁶¹ and R⁶²: independently of each other have the meaning given for R² under formula II above, preferably R⁶¹ is alkyl and R⁶² is alkyl or alkenyl, each having up to 7 C atoms, 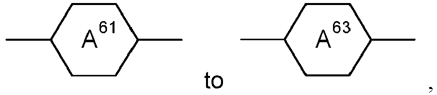 on each occurrence, identically or differently, denote 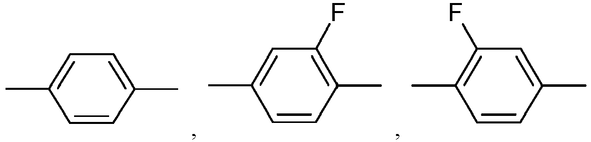 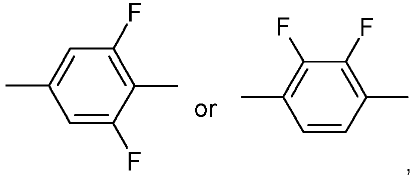
- Z⁶¹ and Z⁶²: on each occurrence, identically or differently, denote -CH₂CH₂-, -COO-, *trans-* -CH=CH-, *trans-* -CF=CF-, -CH₂O-, -CF₂O- or a single bond, preferably at least one of them is a single bond, and
- r: is 0, 1 or 2, preferably 0 or 1.

Preferably the compounds of formula VI are selected from the group of compounds of formulae VI-1 to VI-4 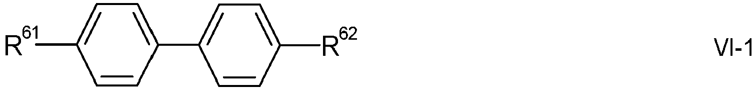 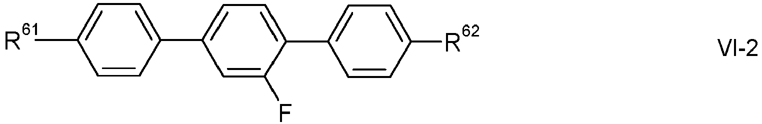 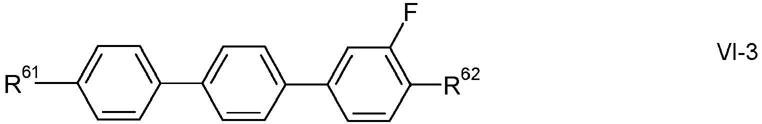 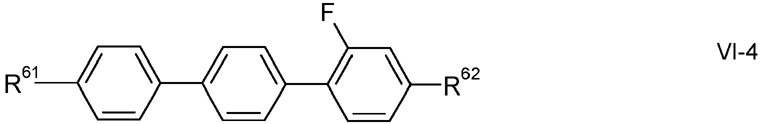
in which R⁶¹ and R⁶² have the respective meanings given under formula VI above and
R⁶¹ preferably is alkyl having 1 to 7 C atoms and
in formula VI-1 R⁶² preferably is alkenyl having up to 7 C atoms, preferably -(CH₂)₂-CH=CH-CH₃ and
in formula VI-2 R⁶² preferably is alkenyl having up to 7 C atoms, preferably -(CH₂)₂-CH=CH₂ and
in formulae VI-3 and VI-4 R⁶² preferably is alkyl having 1 to 7 C atoms.

The compounds of the formulae Y and B and their sub-formulae preferably have negative dielectric anisotropy.

In the compounds of formula Y and its subformulae, R¹¹ and R¹² preferably denote straight-chain alkyl or alkoxy having 1 to 6 C atoms, furthermore alkenyl having 2 to 6 C atoms, in particular vinyl, 1 E-propenyl, 1 E-butenyl, 3-butenyl, 1 E-pentenyl, 3E-pentenyl or 4-pentenyl.

In the compounds of formula Y and its subformulae, preferably both radicals L¹ and L² denote F. In another preferred embodiment of the present invention, in the compounds of formula Y and its subformulae one of the radicals L¹ and L² denotes F and the other denotes Cl.

In a preferred embodiment, the medium comprises one or more compounds of formula Y and/or B in which the group R¹² denotes F or fluorinated alkyl or fluorinated alkoxy each having 1 to 3 C atoms, preferably F, CF₃ or OCF₃.

In a preferred embodiment of the present invention the medium contains one or more compounds of formula Y that are selected from the following subformulae 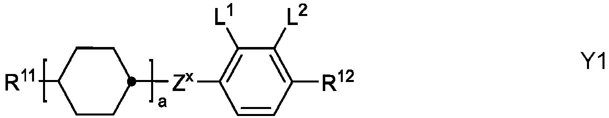 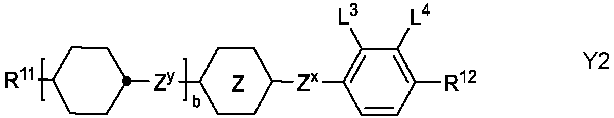 in which R¹¹, R¹², Z^{x}, Z^{y}, L¹ and L² have one of the meanings given in formula Y or one of the preferred meanings as given above and below,
- a: denotes 1 or 2,
- b: denotes 0 or 1, 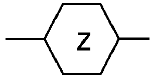 denotes 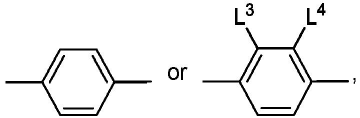
- L³, L⁴: denote F or CI, preferably F.

Preferably, in the compounds of formula Y1 and Y2 both L¹ and L² denote F or one of L¹ and L² denotes F and the other denotes Cl, or both L³ and L⁴ denote F or one of L³ and L⁴ denotes F and the other denotes Cl.

Preferably the medium comprises one or more compounds of the formula Y1 selected from the group consisting of the following subformulae 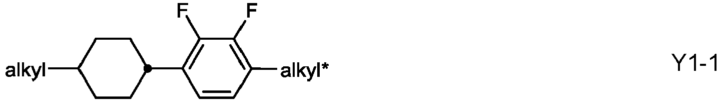 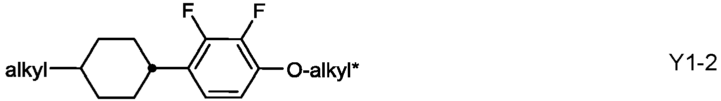 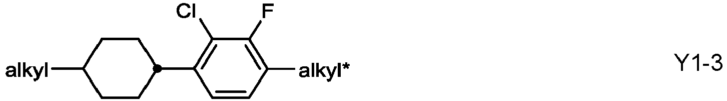 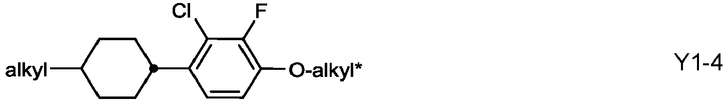 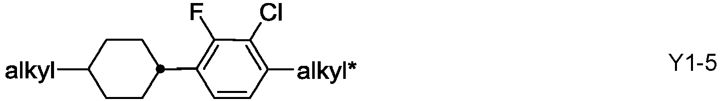 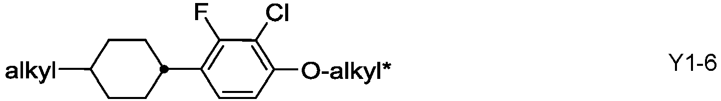 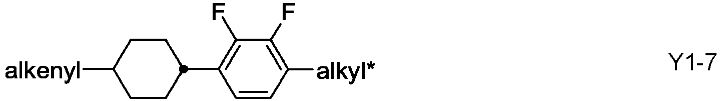 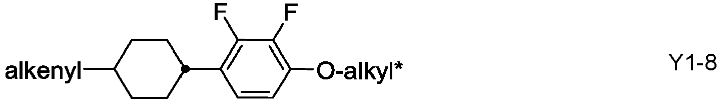 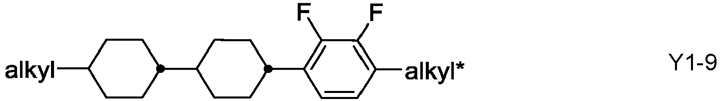 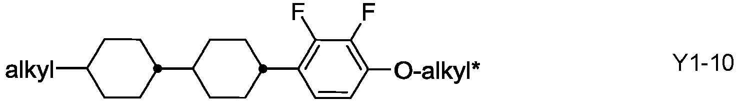 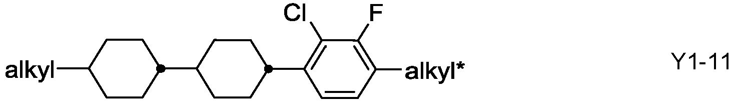 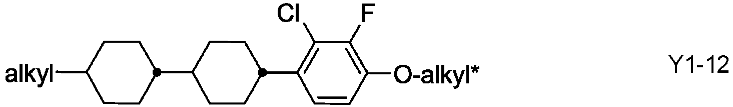 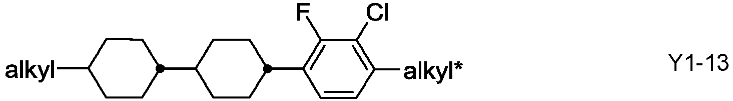 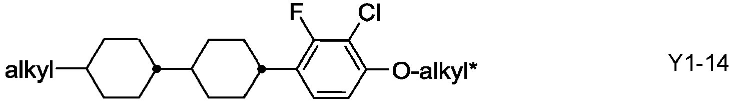 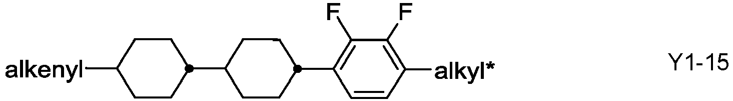 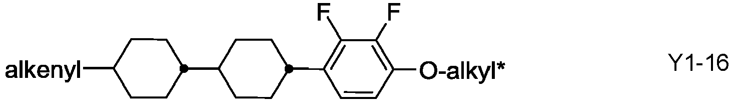 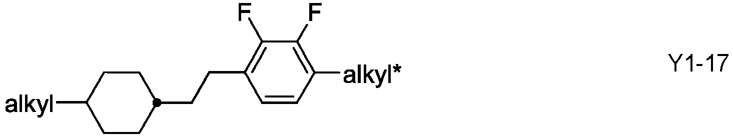 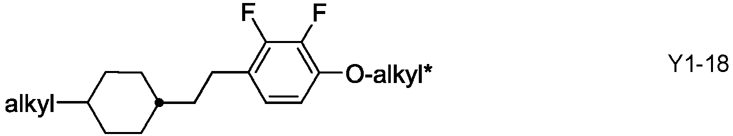 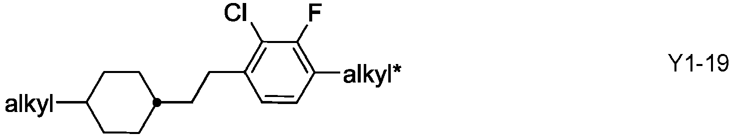 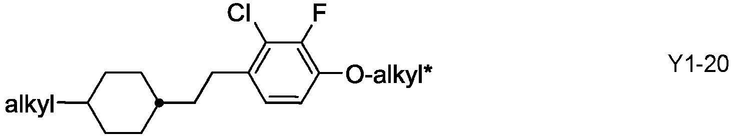 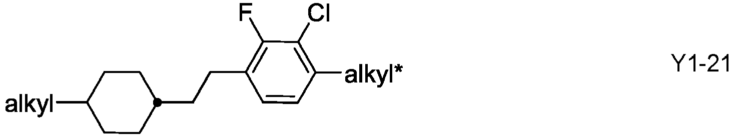 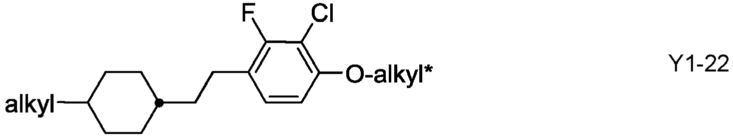 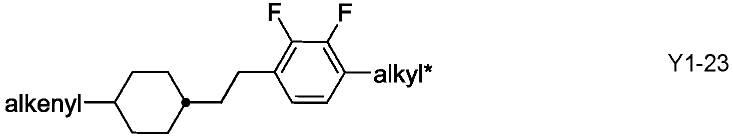 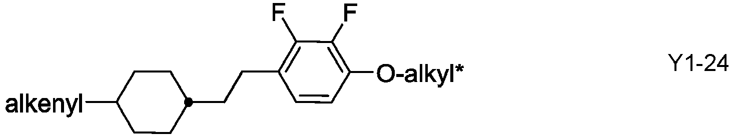 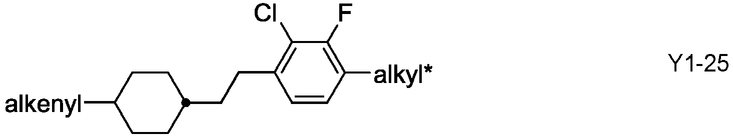 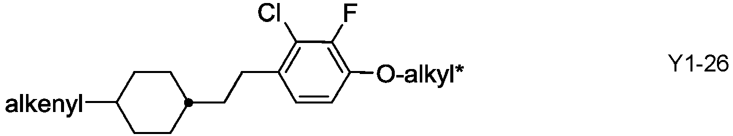 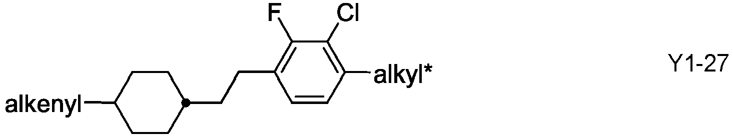 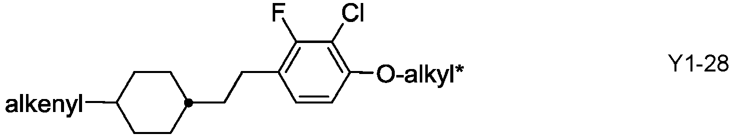 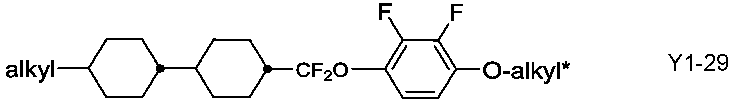 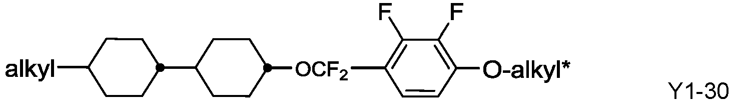 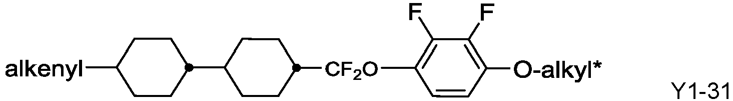 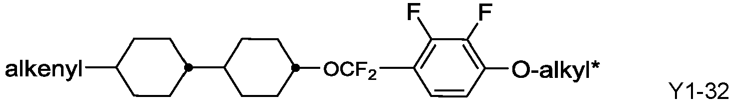 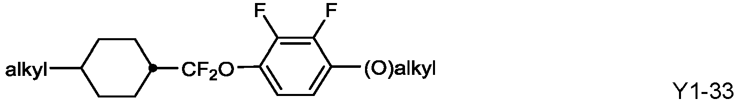 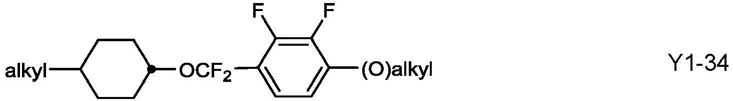 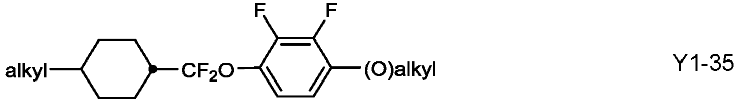 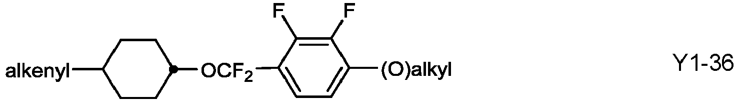 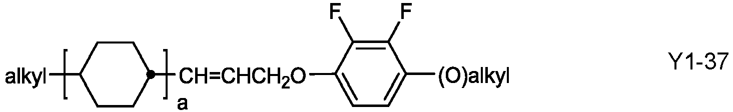 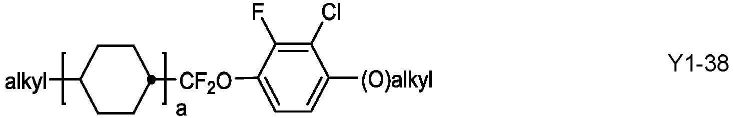 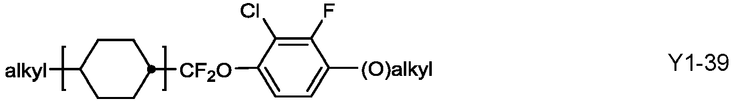 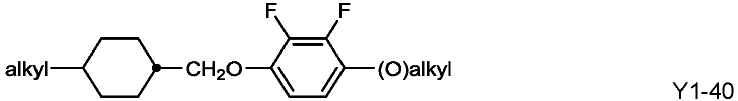 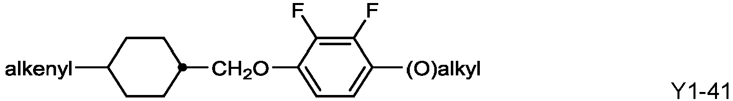 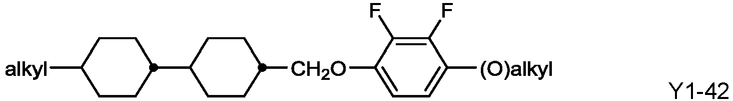 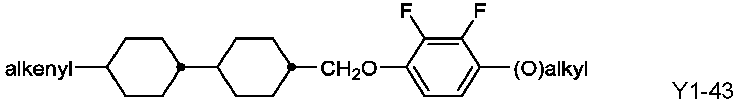 in which a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably the medium contains one or more compounds of formula Y1 selected from formulae Y1-2 and Y1-10.

Further preferably the medium comprises one or more compounds of the formula Y2 selected from the group consisting of the following subformulae: 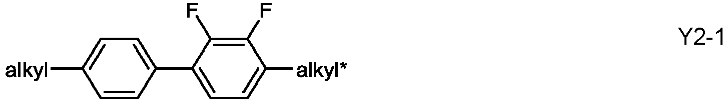 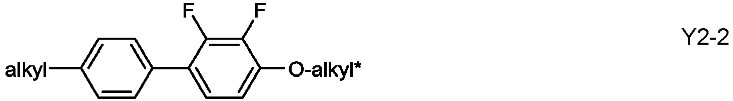 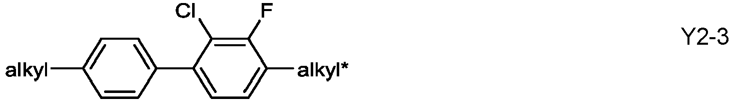 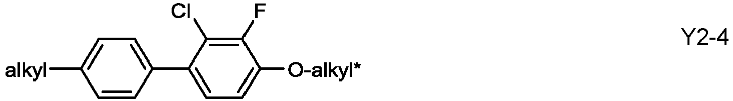 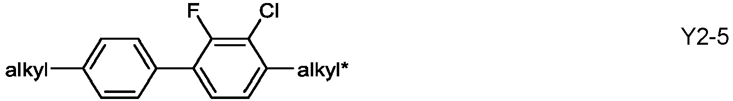 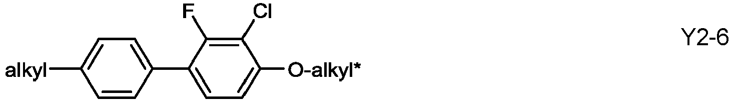 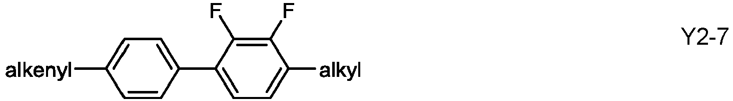 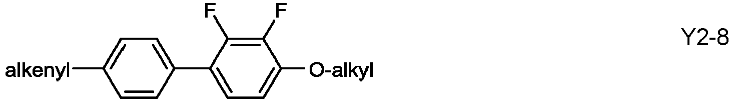 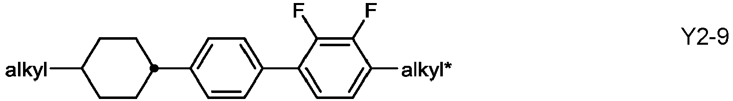 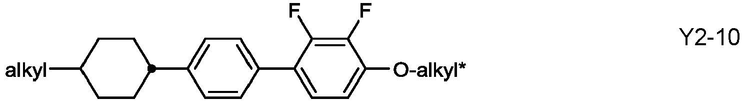 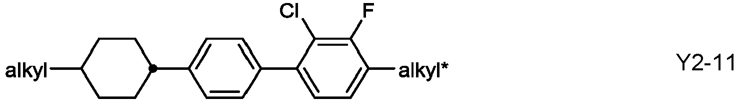 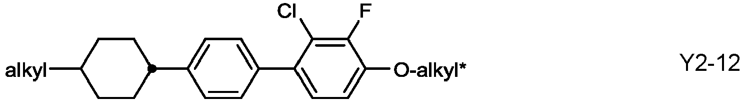 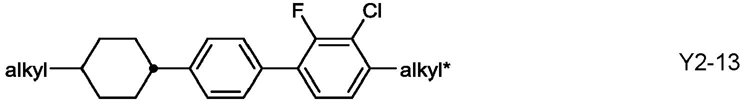 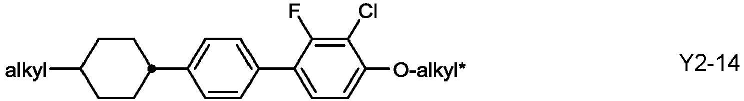 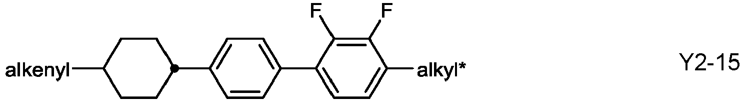 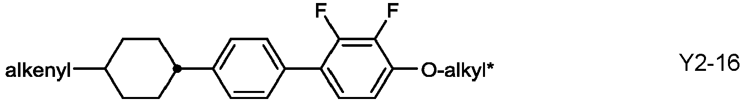 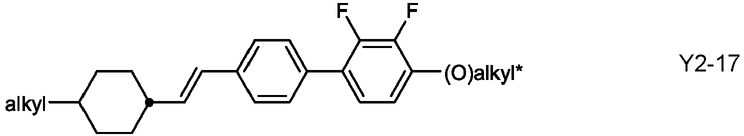 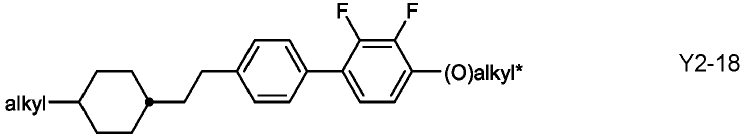 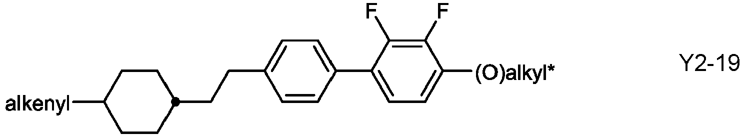 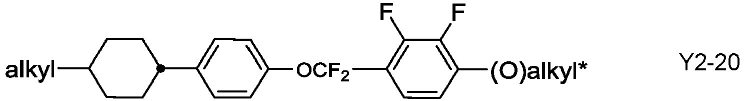 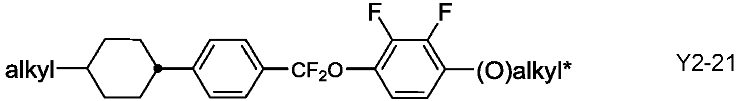 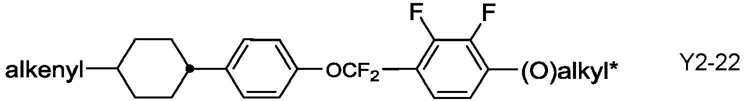 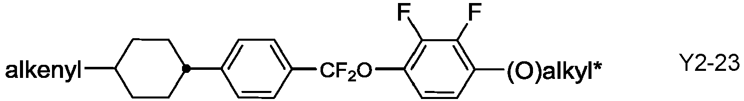 in which alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably the medium contains one or more compounds of formula Y2 selected from formulae Y2-2 and Y2-10.

The proportion of the compounds of formula Y1 or its subformulae in the medium is preferably from 1 to 10% by weight.

The proportion of the compounds of formula Y2 or its subformulae in the medium is preferably from 1 to 10% by weight.

The total proportion of the compounds of formula Y1 and Y2 or their subformulae in the medium is preferably from 1 to 20%, very preferably from 3 to 15%, most preferably from 5 to 10% by weight.

Preferably the medium contains 1, 2 or 3 compounds of formula Y1 and Y2 or their subformulae, very preferably selected from formulae Y1-2, Y1-10, Y2-2 and Y2-10.

Preferably, the medium comprises one or more compounds of formula Y selected from the following subformula 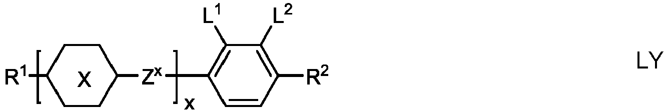 in which
R¹, R², L¹, L², X, x and Z^{x} have the meanings given in formula Y, in which at least one of the rings X is cyclohexenylene. If x is 2, preferably, one ring X is cyclohexylene-1,4-diyl and the other ring X is cyclohexylene-1,4-diyl or cyclohexane-1,4-diyl.

Preferably, both radicals L¹ and L² denote F. Further preferably one of the radicals L¹ and L² denotes F and the other denotes CI.

The compounds of the formula LY are preferably selected from the group consisting of the following sub-formulae: 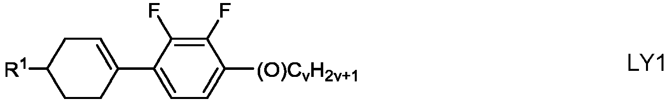 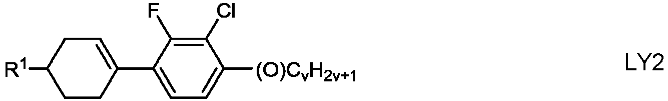 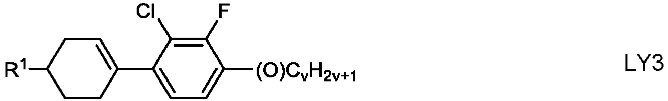 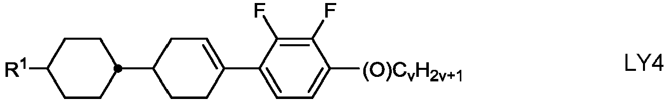 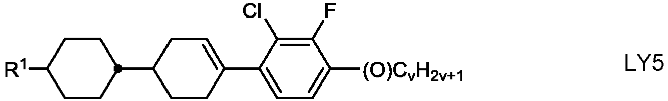 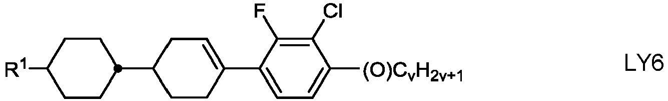 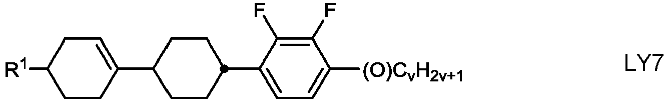 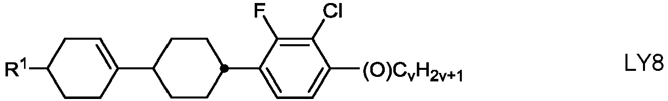 in which R¹ has the meaning indicated above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred are compounds of formula LY4.

Preferably the medium contains 1, 2 or 3 compounds of formula LY, very preferably of formula LY4.

The proportion of the compounds of formula LY or its subformulae in the medium is preferably from 1 to 10% by weight.

In a preferred embodiment, the medium according to the invention comprises one or more compounds of formula Y selected from the following subformula 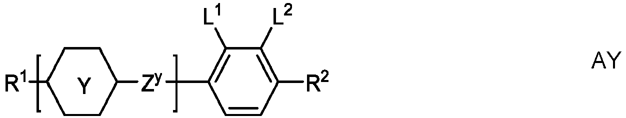 in which R¹, R², L¹, L², Y, y and Z^{y} have the meanings given in formula Y, in which at least one of the rings Y is tetrahydropyran.

The compounds of the formula AY are preferably selected from the group consisting of the following sub-formulae: 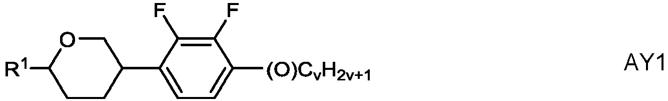 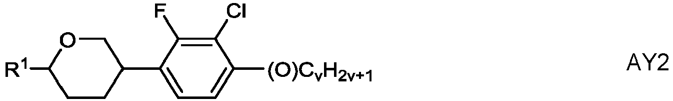 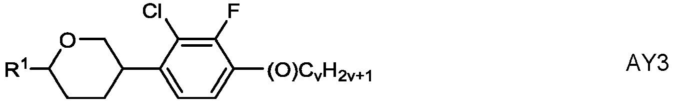 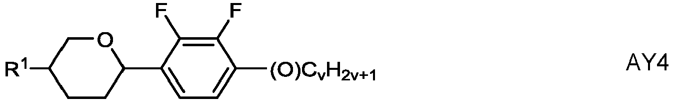 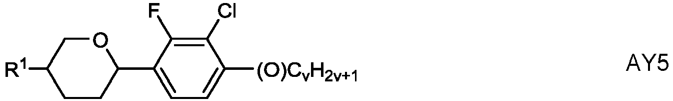 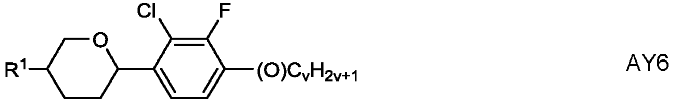 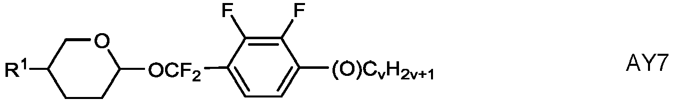 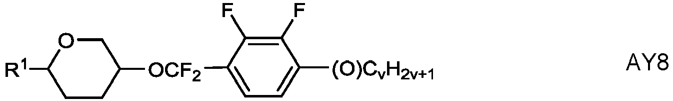 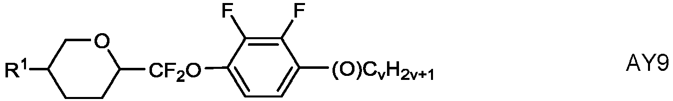 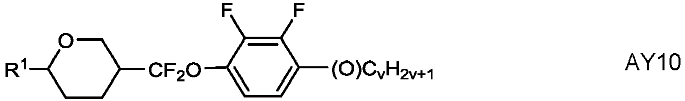 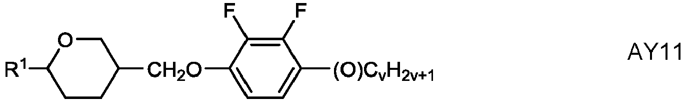 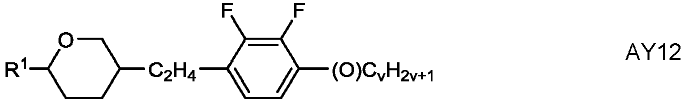 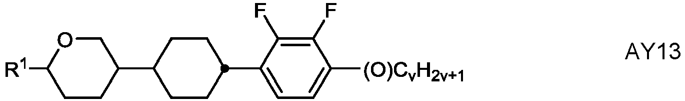 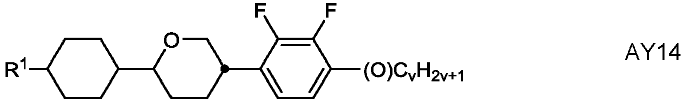 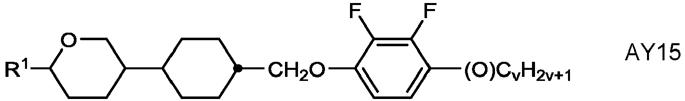 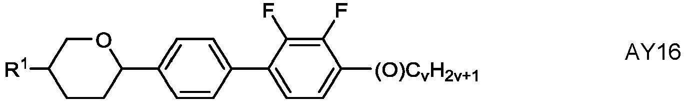 in which R¹ has the meaning indicated above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

In another preferred embodiment of the present invention the medium contains one or more compounds of formula Y selected from the following subformula 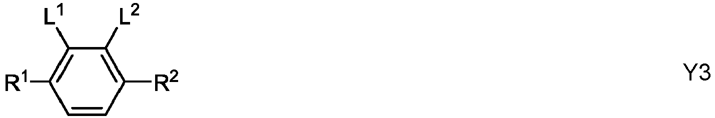 in which L¹, L², R¹ and R² have one of the meanings given in formula Y or one of the preferred meanings as given above and below.

Preferred compounds of the formula Y3 are selected from the group consisting of the following subformulae 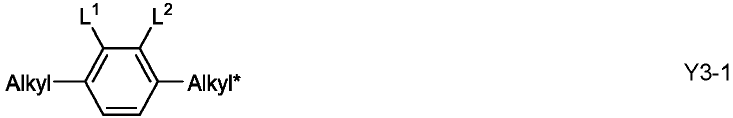 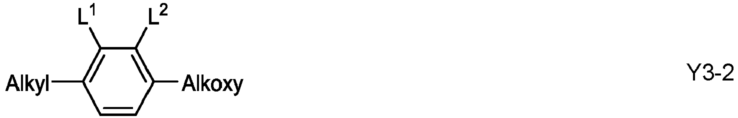 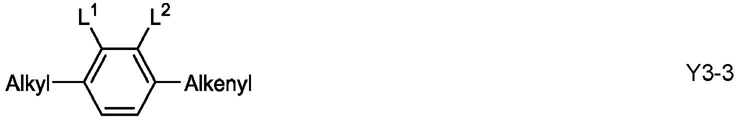 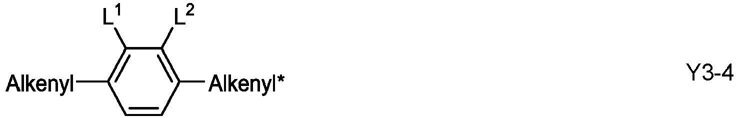 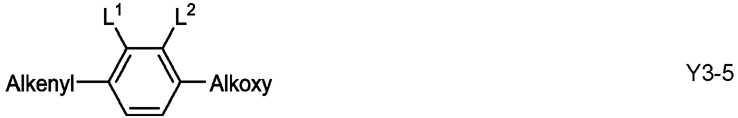 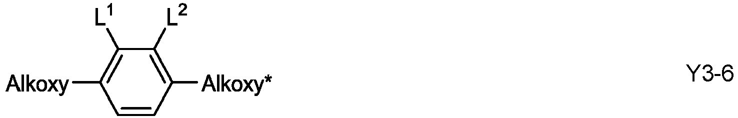 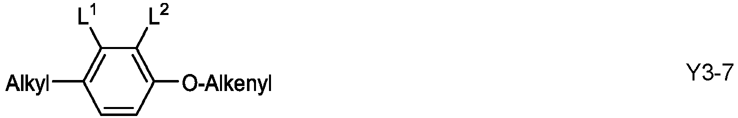 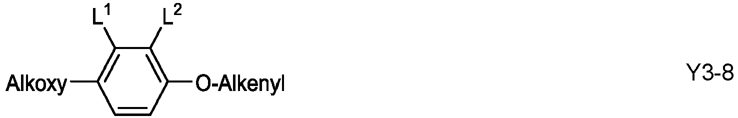 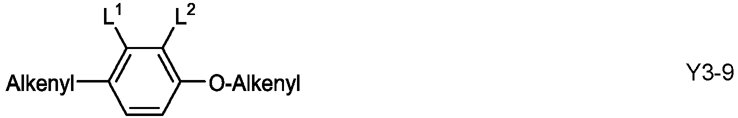 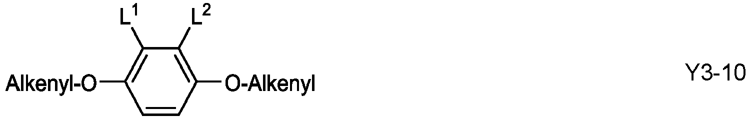 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the formula Y3 are selected from the group consisting of following subformulae: 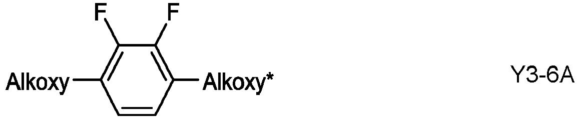 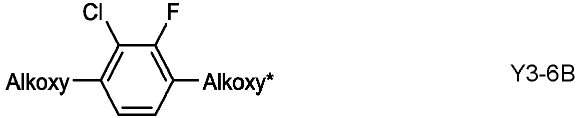 in which Alkoxy preferably denotes straight-chain alkoxy with 3, 4, or 5 C atoms.

Preferably in the compounds of formula Y3 and its subformulae both L¹ and L² denote F. Further preferably in the compounds of formula Y3 one of the radicals L¹ and L² denotes F and the other denotes CI.

The proportion of the compounds of formula Y3 or its subformulae in the medium is preferably from 1 to 10%, very preferably from 1 to 6% by weight.

Preferably the medium contains 1, 2 or 3 compounds of formula Y3 or its subformulae, preferably of formula Y3-6, very preferably of formula Y3-6A.

In a preferred embodiment of the present invention the medium additionally comprises one or more compounds of the formulae Y-4-1 to Y-4-19, 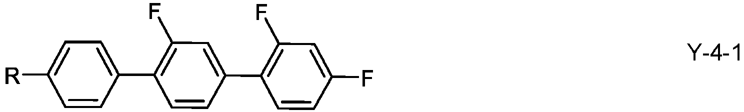 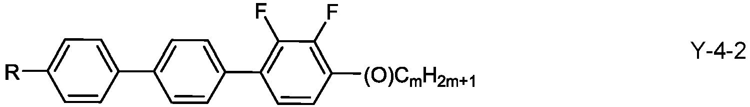 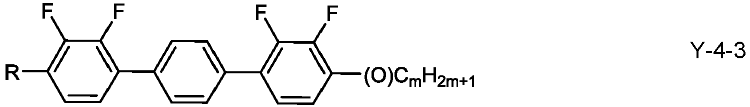 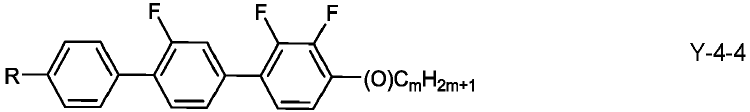 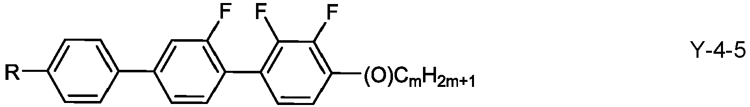 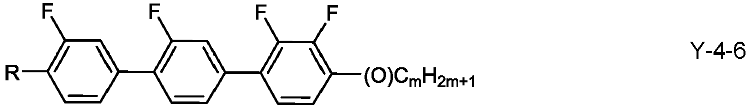 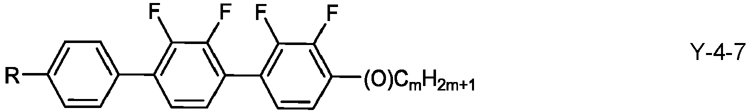 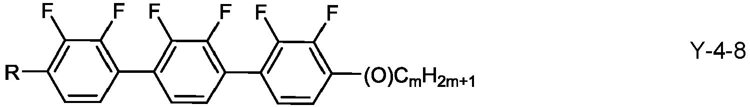 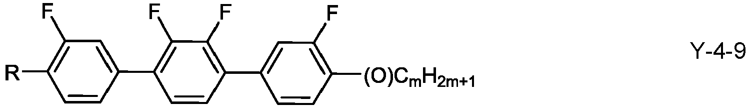 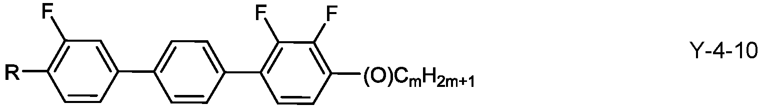 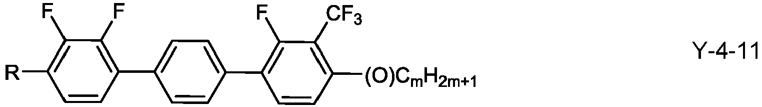 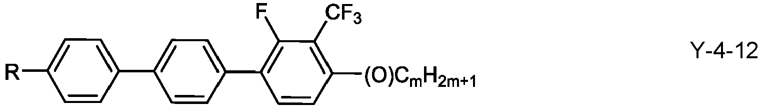 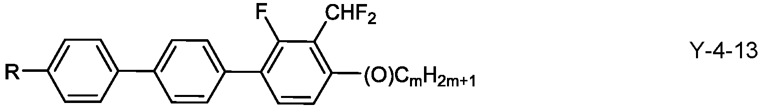 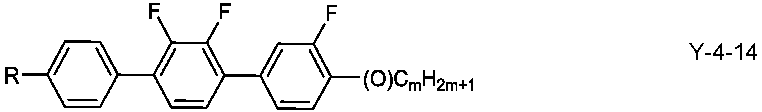 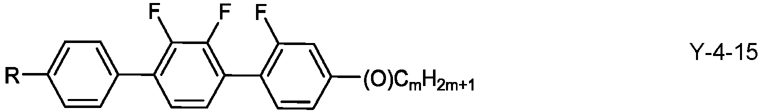 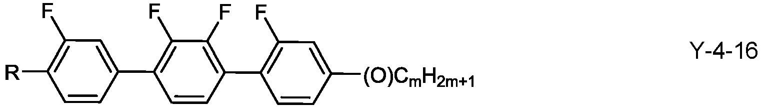 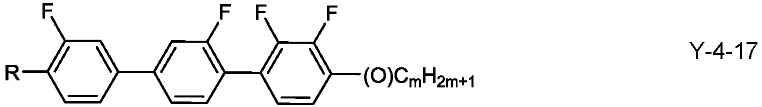 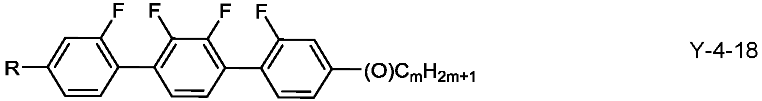 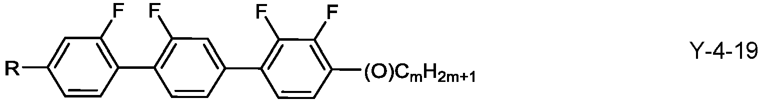 in which
R denotes a straight-chain alkyl or alkoxy radical having 1 to 6 C atoms, (O) denotes -O- or a single bond, and m = 0, 1, 2, 3, 4, 5 or 6 and n denotes 0, 1, 2, 3 or 4.

R preferably denotes methyl, ethyl, propyl, butyl, pentyl, hexyl, methoxy, ethoxy, propoxy, butoxy, pentoxy.

The medium according to the invention preferably comprises the terphenyls of the formulae Y-4-1 to Y-4-19 in amounts of 2 to 30 % by weight, in particular 5 to 20 % by weight.

Particular preference is given to compounds of the formulae Y-4-1, Y-4-2, and Y-4-4. In these compounds, R preferably denotes alkyl, furthermore alkoxy, each having 1 to 5 C atoms.

The terphenyls of the formulae Y-4-1 to Y-4-19 are preferably employed in the mixtures according to the invention if the Δn value of the mixture is to be ≥ 0.12. Preferred mixtures comprise 2 to 20 % by weight of one or more terphenyl compounds selected from the group of the compounds Y-4-1 to Y-4-19.

In another preferred embodiment the present invention the medium contains one or more compounds of formula Y selected from the the group consisting of the following subformulae 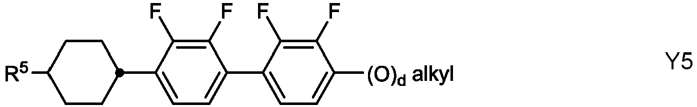 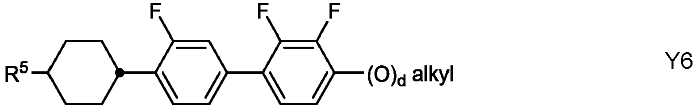 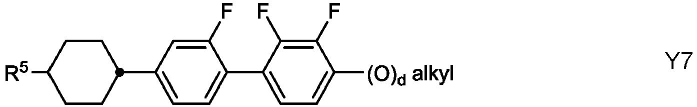 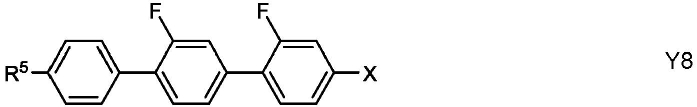 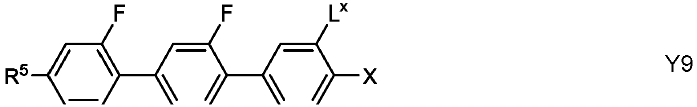 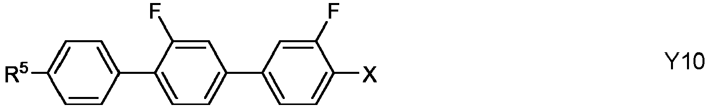 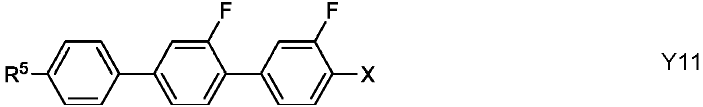 in which R⁵ has one of the meanings indicated above for R¹ of formula Y, alkyl denotes C₁₋₆-alkyl, L^{x} denotes H or F, X denotes F, Cl, OCF₃, OCHF₂ or OCH=CF₂, d denotes 0 or 1, and z and m each, independently of one another, denote an integer from 1 to 6.

R⁵ in these compounds is particularly preferably C₁₋₆-alkyl or -alkoxy or C₂₋₆-alkenyl, d is preferably 1. X in these compounds is particularly preferably F. The LC medium according to the invention preferably comprises one or more compounds of the above-mentioned formulae in amounts of >_ 5% by weight.

In the compounds of formula B and its subformulae, R¹ and R² preferably denote straight-chain alkyl or alkoxy having 1 to 6 C atoms, in particular methoxy, ethoxy, propoxy or butoxy. furthermore alkenyl having 2 to 6 C atoms, in particular vinvl. 1E-propenyl, 1E-butenyl, 3-butenyl, 1E-pentenyl, 3E-pentenyl or 4-pentenyl.

According to the present invention the medium comprises one or more compounds of formula B selected from the compounds of formula B-1 and/or B-2 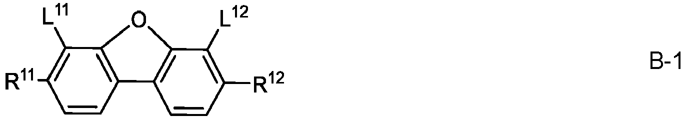 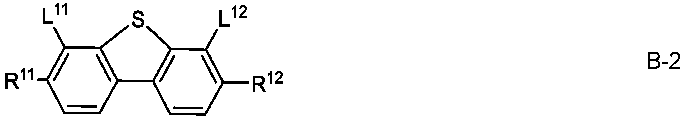 in which the occurring groups have the same meanings as given under formula B above and preferably
- R¹¹ and R¹²: each, independently of one another, an alkyl, alkenyl or alkoxy radical having up to 15 C atoms, more preferably one or both of them denote an alkoxy radical and
- L¹¹ and L¹²: each preferably denote F.

In a preferred embodiment the media comprise one or more compounds of the formula B-1 selected from the group of compounds of formulae B-1-1 to B-1-10, preferably of formula B-1-6, 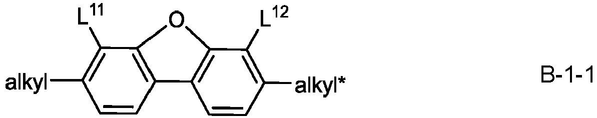 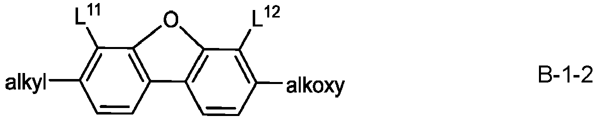 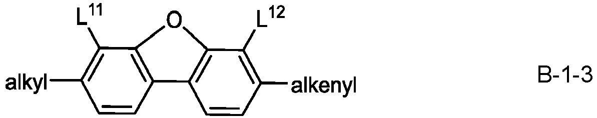 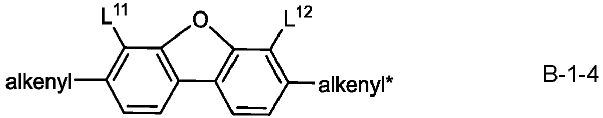 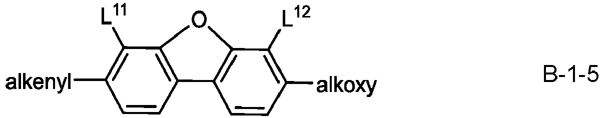 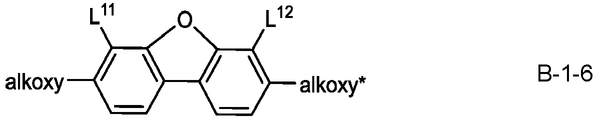 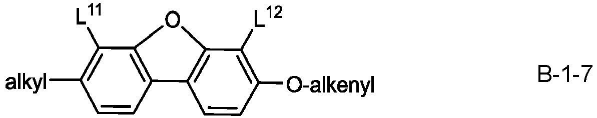 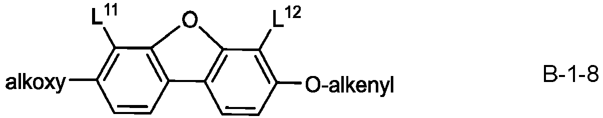 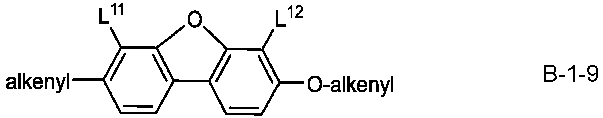 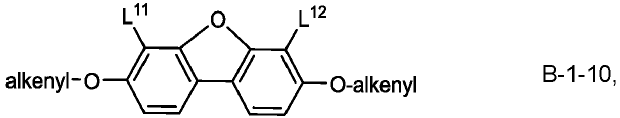 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L¹¹ and L¹² each, independently of one another, denote F or CI, preferably both F.

In a preferred embodiment the media comprise one or more compounds of the formula B-2 selected from the group of compounds of formulae B-2-1 to B-2-10, preferably of formula B-2-6, 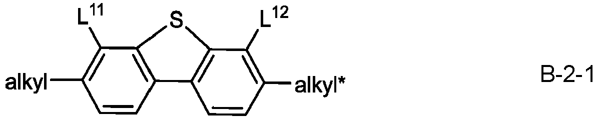 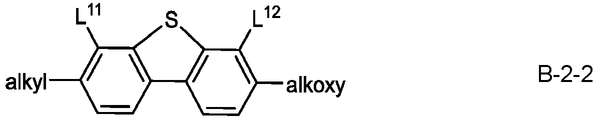 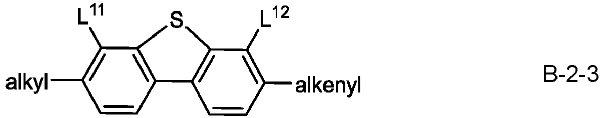 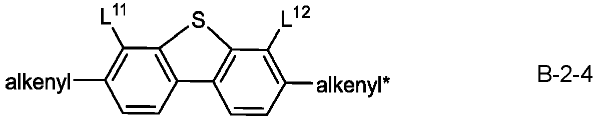 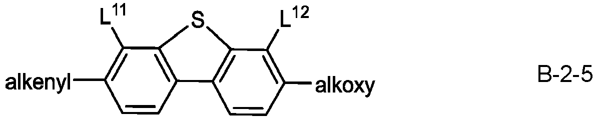 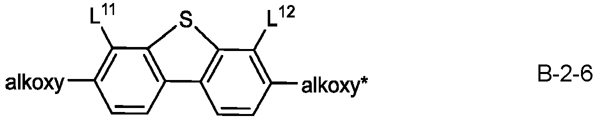 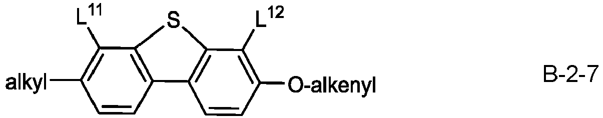 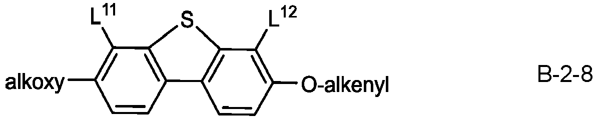 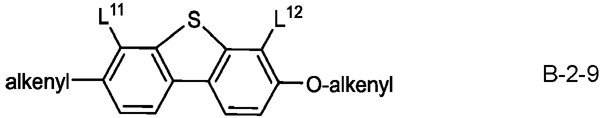 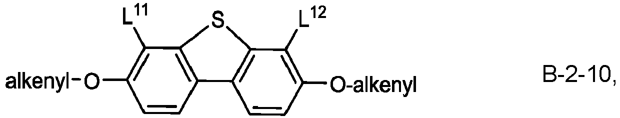 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L¹ and L² each, independently of one another, denote F or CI, preferably both F.

In a preferred embodiment of the present invention the medium comprises one or more compounds of the formula BA-1 and/or BA-2 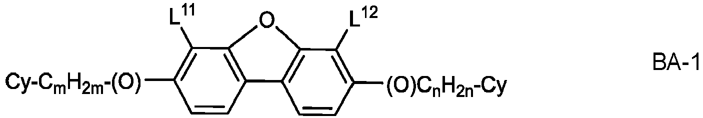 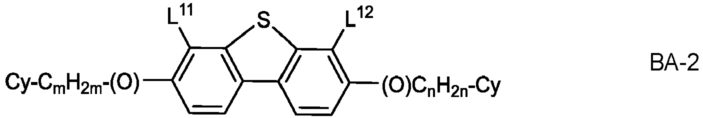
in which L¹¹ and L¹² have the same meanings as given under formula B, (O) denotes O or a single bond,
m and n are, identically or differently, 0, 1, 2, 3, 4, 5 or 6, preferably 1, 2 or 3, very preferably 1,
   - Cy: denotes a cycloaliphatic or cycloheteroaliphatic group having 3, 4 or 5 ring atoms, which is optionally substituted with alkyl or alkenyl each having up to 3 C atoms, or halogen or CN, and preferably denotes cyclopropyl, cyclobutyl or cyclopentyl.

The compounds of formula BA-1 and/or BA-2 are contained in the medium either alternatively or additionally to the compounds of formula B, preferably additionally.

Very preferred compounds of the formulae BA-1 and BA-2 are the following: 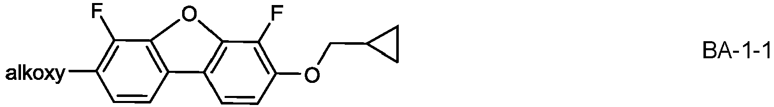 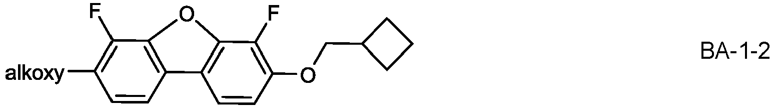 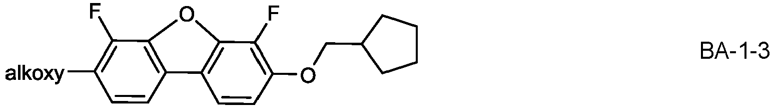 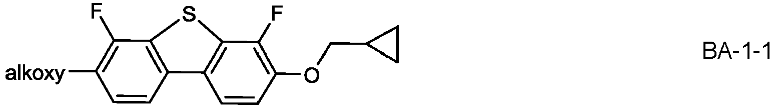 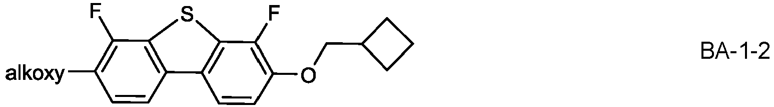 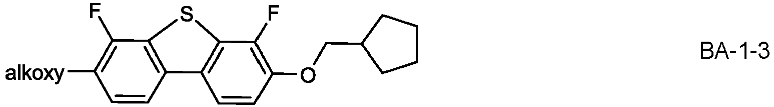 in which alkoxy denotes a straight-chain alkoxy radical having 1-6 C atoms.

In a preferred embodiment of the present invention, the medium comprises one or more compounds of formula B-3 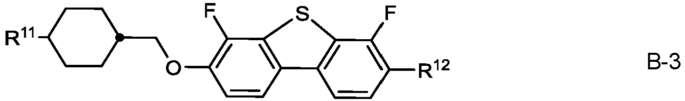 in which
- R¹¹, R¹²: identically or differently, denote H, an alkyl or alkoxy radical having 1 to 15 C atoms, in which one or more CH₂ groups in these radicals are optionally replaced, independently of one another, by -C≡C-, -CF₂O-, -OCF₂-, -CH=CH-, by 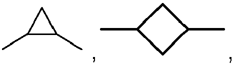 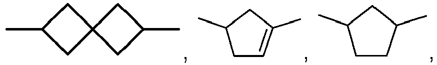 -O-, -CO-O- or -O-CO- in such a way that O atoms are not linked directly to one another, and in which, in addition, one or more H atoms may be replaced by halogen, preferably by F, and R¹² alternatively denotes F.

The compounds of formula B-3 are preferably selected from the group of compounds of the formulae B-3-1 to B-3-10: 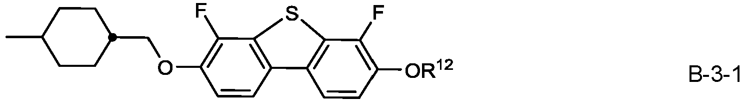 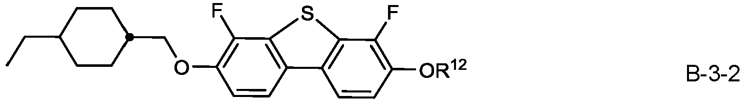 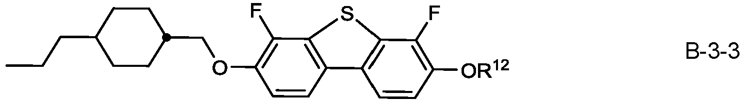 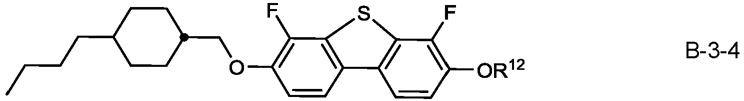 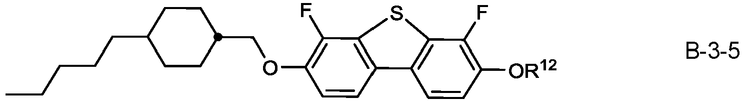 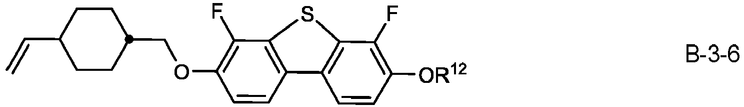 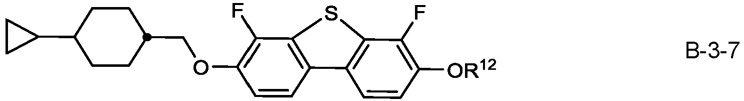 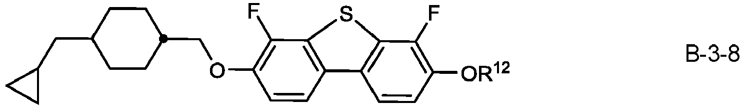 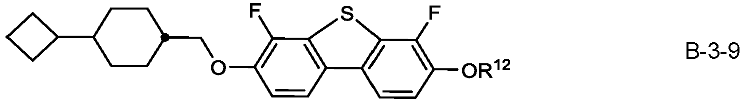 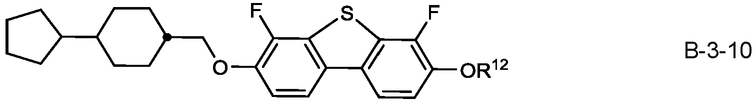 in which R¹² denotes alkyl having 1 to 7 C-atoms, preferably ethyl, n-propyl or n-butyl.

In a preferred embodiment of the present invention, the medium comprises one or more compounds of the formulae B-4 to B-6, preferably of formula B-5, 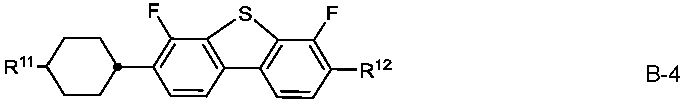 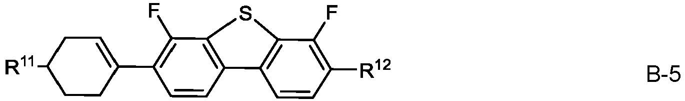 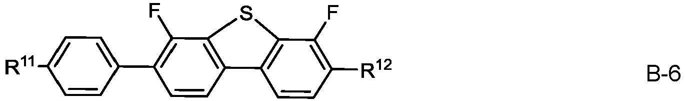 in which the occurring groups have the meanings given above for formula B, R¹¹ preferably denotes straight-chain alkyl having 1 to 7 C atoms and R¹² preferably denotes alkoxy having 1 to 7 C atoms.

In another preferred embodiment R¹² denotes F, CF₃, OCF₃.

In a preferred embodiment the media comprise one or more compounds of the formula I selected from the group of compounds of formulae B-7 to B-9, preferably of formula B-8, 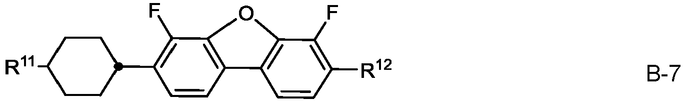 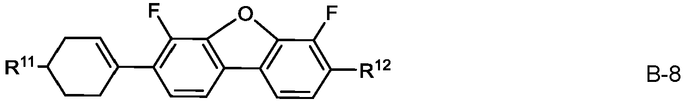 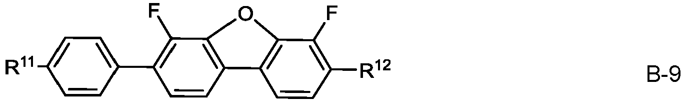 in which the occurring groups have the meanings given above for formula B, R¹¹ preferably denotes straight-chain alkyl having 1 to 7 C atoms and R¹² preferably denotes alkoxy having 1 to 7 C atoms. In another preferred embodiment R¹² denotes F, CF₃, OCF₃.

In a preferred embodiment of the present invention the liquid crystalline medium comprises one or more compounds of formula T, preferably in a concentration in the range of from 1 % to 60 %, more preferably from 5 % to 40 %, particularly preferably from 8 % to 35 %, 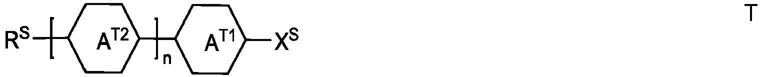 in which 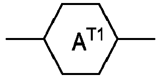 denotes 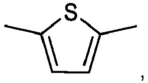 one of 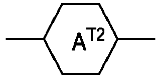 on each occurrence, identically or differently, denotes 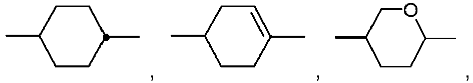 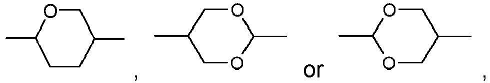 preferably 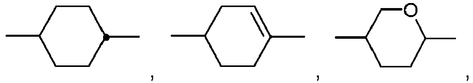 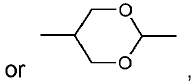 more preferably 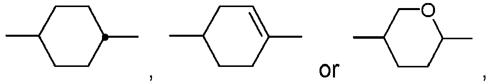 and, in case n is 2,
one of 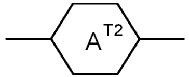 alternatively denotes 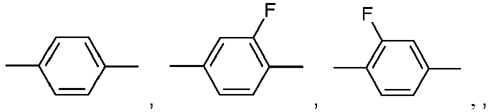 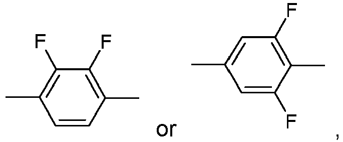 preferably 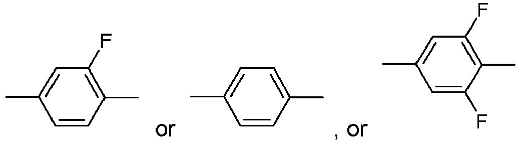 in which the rings, and preferably the phenylene rings, optionally may each be substituted by one or two alkyl groups, preferably by methyl and/or ethyl groups, preferably by one methyl group,
- n: denotes 1 or 2, preferably 2,
- R^{S}: denotes alkyl, alkoxy, fluorinated alkyl or fluorinated alkoxy, preferably having 1 o 7 C atoms, wherein one -CH₂- group may be replaced by cyclo-propylene, 1,3-cyclobutylene, 1,3-cyclopentylene, 1,3-cyclo-pentenylene, preferably by cyclopropylene or 1,3-cyclopentylene, alkenyl, alkenyloxy, alkoxyalkyl or fluorinated alkenyl having 2 to 7 C atoms and preferably alkyl or alkenyl, wherein one -CH₂- group may be replaced by cyclo-propylene, 1,3-cyclobutylene, 1,3-cyclopentylene, 1,3-cyclo-pentenylene, preferably by cyclopropylene or 1,3-cyclopentylene,

1,3-Cyclopentenylene is a moiety selected from the group of the formulae 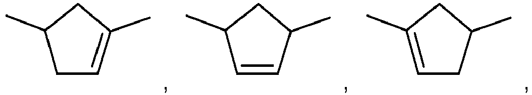 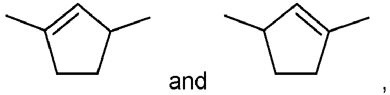 preferably 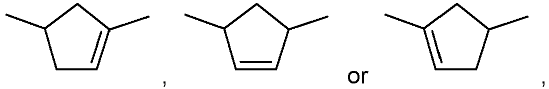 most preferably 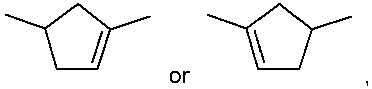 and
- X^{S}: denotes F, Cl, CN, NCS, fluorinated alkyl, fluorinated alkenyl, fluorinated alkoxy or fluorinated alkenyloxy, the latter four groups preferably having 1 to 4, preferably 1 or 2, C atoms, preferably F, CI, CF₃ or OCF₃, more preferably F, CF₃ or OCF₃, most preferably CF₃ or OCF₃.

Preferably the compounds of formula T are selected from the group of compounds of the formulae T-1 to T-4: 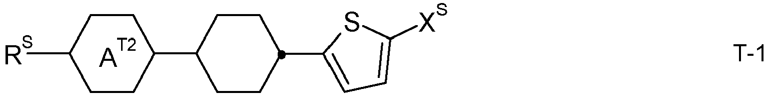 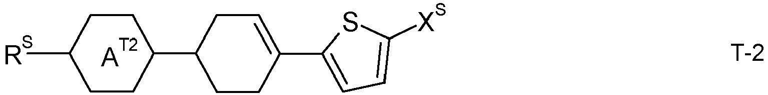 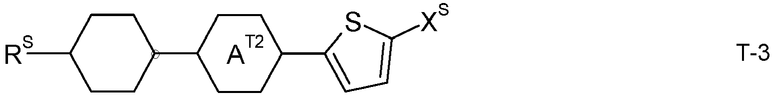 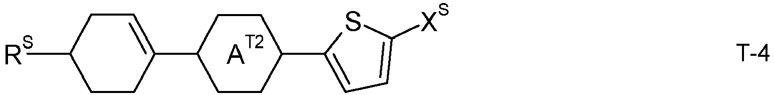 in which
- R^{S}: denotes alkyl, alkoxy, fluorinated alkyl or fluorinated alkoxy, preferably having 1 to 7 C atoms, wherein one -CH₂- group may be replaced by cyclopropylene, 1,3-cyclobutylene, 1,3-cyclopentylene, 1,3-cyclo-pentenylene, preferably by cyclopropylene or 1,3-cyclopentylene, alkenyl, alkenyloxy, alkoxyalkyl or fluorinated alkenyl having 2 to 7 C atoms, , wherein one -CH₂- group may be replaced by cyclopropylene, 1,3-cyclobutylene, 1,3-cyclopentylene, 1,3-cyclo-pentenylene, preferably by cyclopropylene or 1,3-cyclopentylene and preferably alkyl, alkoxy, alkenyl or alkenyloxy, most preferably alkoxy or alkenyloxy,
- X^{S}: denotes F, Cl, CN, NCS, fluorinated alkyl, fluorinated alkenyl, fluorinated alkoxy or fluorinated alkenyloxy, the latter four groups preferably having 1 to 4 C atoms, preferably F, CI, CF₃ or OCF₃, more preferably CF₃ or OCF₃, and 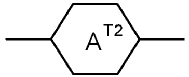 has the meaning given above, and
in which the compounds of the formulae T-1 and T-2 are excluded from formulae T-3 and T-4.

Especially preferred compounds of formulae T-1, T-2, T-3 and T-4 are selected from the group of compounds of the following formulae T-1-1, T-2-1, T-3-1 to T-3-4 and T-4-1 to T4-4: 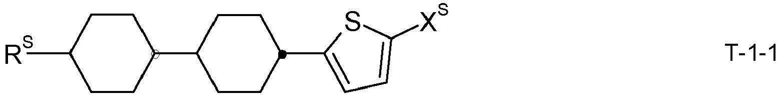 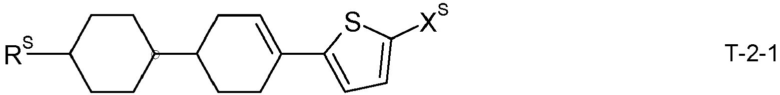 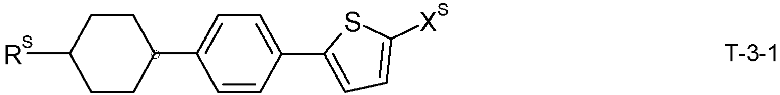 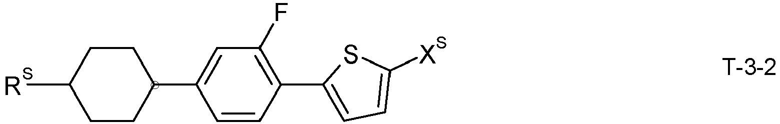 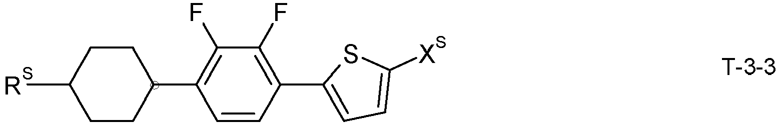 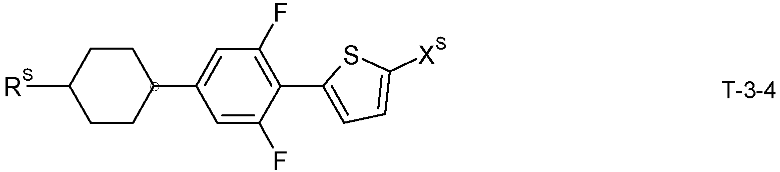 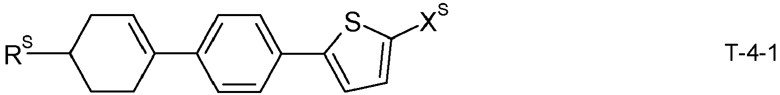 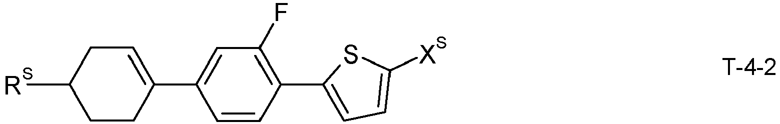 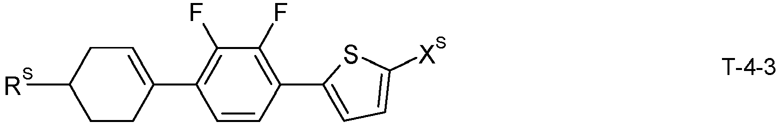 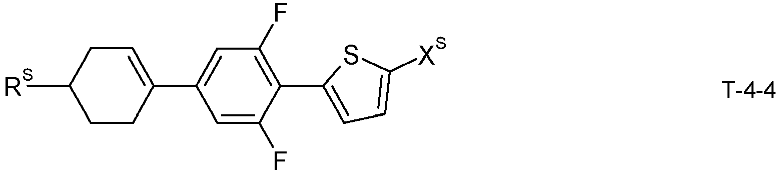 in which R^{S} and X^{S} have the meanings given above and preferably R^{S} denotes alkyl having 1 to 7 C atoms and X^{S} denotes CF₃.

Above and below, the definitions of the abbreviations (acronyms) of preferred compounds are given in table A to C below.

The liquid-crystal mixture preferably has a nematic phase range having a width of at least 70 K.

The liquid-crystal media according to the invention preferably have a nematic phase from at least -10°C to 70°C, preferably from -20°C to 72°C, particularly preferably from -30°C to 73°C and most preferably from -40°C to 75°C.

The medium according to the invention preferably has a clearing temperature of 70°C or more, preferably of 75°C or more.

The expression "to have a nematic phase" here means on the one hand that no smectic phase and no crystallisation is observed at low temperatures. The upper limit of the nematic phase is the clearing temperature, at which the medium is transformed into the isotropic state. The investigation at low temperatures is carried out in a flow viscometer at the corresponding temperature and checked by storage in test cells having a cell thickness corresponding to the electro-optical application for at least 100 hours. If the storage stability at a temperature of -20°C in a corresponding test cell is 1,000 h or more, the medium is regarded as stable at this temperature. At temperatures of -30°C and -40°C, the corresponding times are 500 h and 250 h respectively. At high temperatures, the clearing point is measured in capillaries by conventional methods.

Preferably, the medium according to the invention has a birefringence Δn in the range of from 0.080 to 0.155, more preferably from 0.090 to 0.1450, and in particular from 0.095 to 0.135.

The medium according to the invention has positive dielectric anisotropy Δε, preferably in the range of from 1.5 to 20.0, more preferably from 1.7 to 16.0, very preferably from 1.8 to 12.0 and in particular from 2.0 to 9.0.

The rotational viscosity γ₁ is preferably 75 mPa·s or less, more preferably 70 mPa·s or less, very preferably 65 mPa·s or less and, in particular, 60 mPa·s or less.

In further preferred embodiments, taken alone or in combination with one another, the medium according to the invention comprises
- one or more compounds of formula I in a total concentration in the range of from 2 % to 65 %, preferably 5% to 60%, particularly preferably 10% or 15% or 20% to 55%;
   and
- one or more compounds of formula II and/or III, preferably of formula II-1 and/or II-3, very preferably of formula II-1, in particular of the sub-formulae II-1a-1 and/or II-1f-1 and/or II-1g-1 and/or II-1h-1, preferably in a total concentration in the range of from 5 % to 25 %, preferably from 6 % to 20 %, particularly preferably from 7 % to 18 %,
   and/or
- one or more compounds of the formula B, preferably in a total concentration in the range of from 1% to 15%, more preferably from 2% to 13%, very preferably from 3 %to 12%, in particular one or more compounds of formula B-1 and/or B-2 in a total concentration in the range of from 1% to 10%, preferably from 2% to 8% and one or more compounds of formula B-3 or B-5 in a total concentration in the range of from 0.5% to 5%, preferably from 1% to 4%;
   and/or
- one or more compounds of formula Y, preferably of formula Y1 and/or Y2 and/or Y3, in particular 0.5 to 8 % of a compound of formula Y3, preferably of formula Y-3-6, and/or one or more compounds of formula Y1 and/or Y2 in a total concentration in the range of from 1 to 25%, preferably from 2% to 20%, very preferably from 3% to 15%;
- one or more compounds of formula IV-1 in a total concentration in the range of from 5 % to 60 %, preferably from 10 % to 55 %; preferably selected from the subformulae of formula CC-n-V and CC-nV-m, more preferably of formula CC-n-V, preferably CC-3-V, CC-3-V1 and/or CC-3-2V1;
- one or more compounds of formula IV-4, preferably of formula CCP-V-n and/or CCP-nV-m and/or CCP-Vn-m, more preferably of formula CCP-V-n and/or CCP-V2-n and most preferably selected from the group of formulae CCP-V-1 and CCP-V2-1, preferably in a total concentration in the range of from 2 % to 20 %, more preferably from 4 % to 15 %;
   and/or
- one or more compounds of formula VI, preferably of formula VI-1, very preferably selected from its subformula PP-n-2Vm, in particular of formula PP-1-2V1, preferably in a total concentration in the range of from 2 % to 15 %, preferably from 3 to 10 %;
   and/or
- one or more compounds of formula VI-2, preferably of its subformula PGP-n-m, more preferably of its subformulae PGP-2-m and PGP-3-m, more preferably selected from of formulae PGP-2-2V, PGP-3-2, PGP-3-3, PGP-3-4, PGP-3-5, preferably in a total concentration in the range of from 2 % to 25 %, preferably from 3 % to 20%;
- a total amount of 0.2 % to 2 % of a compound of formula III-2I, preferably PPGU-n-F, in particular the compound PPGU-3-F;
- a total amount of 0.1 % to 10 % of a compound of formula III-2, preferably III-2f-1, in particular the compound CLP-3-T in a concentration in the range of from 1% to 10%;
   and/or
- one or more compounds of the formula IV-12 in a total concentration in the range of from 0.1% to 5%, preferably from 0.5% to 4%, more preferably from 1 %to 3%.

In a preferred embodiment, the medium comprises one or more compounds of formula I-1 and one or more compounds of formula II-1 and one or more compounds of formula B-2.

The term "alkyl" or "alkyl*" in this application encompasses straight-chain and branched alkyl groups having 1-6 carbon atoms, in particular the straight-chain groups methyl, ethyl, propyl, butyl, pentyl and hexyl. Groups having 2-5 carbon atoms are generally preferred.

The term "alkenyl" or "alkenyl*" encompasses straight-chain and branched alkenyl groups having 2-6 carbon atoms, in particular the straight-chain groups. Preferred alkenyl groups are C₂-C₇-1E-alkenyl, C₄-C₆-3E-alkenyl, in particular C₂-C₆-1E-alkenyl. Examples of particularly preferred alkenyl groups are vinyl, 1E-propenyl, 1E-butenyl, 1E-pentenyl, 1E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular CH₂=CH, CH₃CH=CH.

The term "fluoroalkyl" preferably encompasses straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxy" preferably encompasses straight-chain radicals of the formula CₙH₂ₙ₊₁-O-(CH₂)ₘ, in which n and m each, independently of one another, denote 1 to 6. m may also denote 0. Preferably, n = 1 and m = 1-6 or m = 0 and n = 1-3.

Through a suitable choice of the meanings of R° and X⁰, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. The mixtures according to the invention are distinguished, in particular, by high Δε values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the liquid-crystalline media according to the invention is not crucial. The mixtures can therefore comprise one or more further components for the purposes of optimisation of various properties. However, the observed effect on the desired improvement in the properties of the medium is generally greater, the higher the total concentration of compounds of the above-mentioned formulae.

The individual compounds of the above-mentioned formulae and the sub-formulae thereof which can be used in the liquid-crystalline media according to the invention are either known or can be prepared analogously to the known compounds.

In another preferred embodiment of the present invention the liquid-crystalline media contain one or more further stabilisers, preferably selected from Table D, very preferably of the following formulae 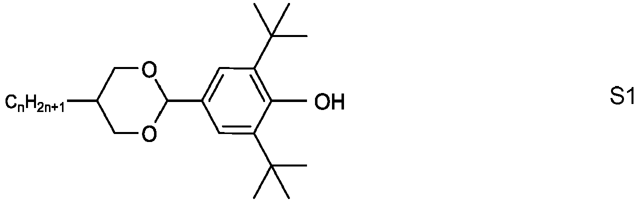 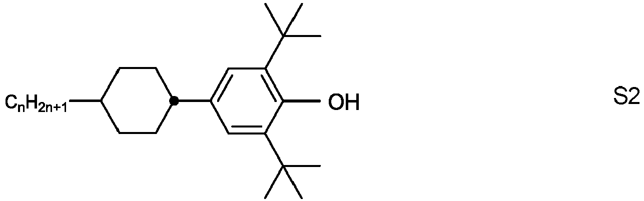 in which n is an integer from 1 to 6, preferably 3.

Preferably the proportion of stabilisers, like those of formula S1 or S2, in the liquid-crystalline medium is from 10 to 500 ppm, very preferably from 20 to 100 ppm.

In another preferred embodiment the LC medium according to the present invention contains a self-aligning (SA) additive, preferably in a concentration of 0.1 to 2.5 %. An LC medium according to this preferred embodiment is especially suitable for use in polymer stabilised SA-FFS or SA-HB-FFS displays.

In a preferred embodiment the SA-FFS or SA-HB-FFS display according to the present invention does not contain a polyimide alignment layer. In another preferred embodiment the SA-FFS or SA-HB-FFS display according to preferred embodiment contains a polyimide alignment layer.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerisable groups which are attached, optionally via spacer groups, to the mesogenic group. These polymerisable SA additives can be polymerised in the LC medium under similar conditions as applied for the RMs in the PSA process.

Suitable SA additives to induce homeotropic alignment, especially for use in SA-VA mode displays, are disclosed for example in US 2013/0182202 A1, US 2014/0838581 A1, US 2015/0166890 A1 and US 2015/0252265 A1.

In another preferred embodiment an LC medium or a polymer stabilised SA-FFS or SA-HB-FFS display according to the present invention contains one or more self-aligning additives selected from Table F below.

Furthermore, it is possible to add to the liquid-crystalline media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

n the present invention and especially in the following examples, the structures of the mesogenic compounds are indicated by means of abbreviations also referred to as acronyms. In these acronyms, the chemical formulae are abbreviated as follows using Tables A to C below. All groups CₙH₂ₙ₊₁, CₘH₂ₘ₊₁ and CₗH₂ₗ₊₁ or CₙH₂ₙ₋₁, CₘH₂ₘ₋₁ and CₗH₂ₗ₋₁ denote straight-chain alkyl or alkenyl, preferably 1E-alkenyl, having n, m and I C atoms respectively, where n, m and I, independently of one another, denote an integer from 1 to 9, preferably 1 to 7, or from 2 to 9, preferably 2 to 7, respectively. CₒH₂ₒ₊₁ denotes straight-chain alkyl having 1 to 7, preferably 1 to 4, C atoms, or branched alkyl having 1 to 7, preferably 1 to 4, C atoms.

As used herein, the expression "dielectrically positive compounds" means compounds having a Δε of > 1.5, the expression "dielectrically neutral compounds" means compounds having -1.5 ≤ Δε ≤ 1.5 and the expression "dielectrically negative compounds" means compounds having Δε < -1.5. The dielectric anisotropy of the compounds is determined here by dissolving 10% of the compounds in a liquid-crystalline host and determining the capacitance of the resultant mixture in each case in at least one test cell having a cell thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

The host mixture used for dielectrically positive and dielectrically neutral compounds is ZLI-4792 and that used for dielectrically negative compounds is ZLI-2857, both from Merck KGaA, Germany. The values for the respective compounds to be investigated are obtained from the change in the dielectric constant of the host mixture after addition of the compound to be investigated and extrapolation to 100% of the compound employed. The compound to be investigated is dissolved in the host mixture in an amount of 10%. If the solubility of the substance is too low for this purpose, the concentration is halved in steps until the investigation can be carried out at the desired temperature.

The liquid-crystal media according to the invention may, if necessary, also comprise further additives, such as, for example, stabilisers and/or pleochroitic, e.g. dichroitic, dyes and/or chiral dopants in the usual amounts. The amount of these additives employed is preferably in total 0 % or more to 10 % or less, based on the amount of the entire mixture, particularly preferably 0.1 % or more to 6 % or less. The concentration of the individual compounds employed is preferably 0.1 % or more to 3 % or less. The concentration of these and similar additives is generally not taken into account when specifying the concentrations and concentration ranges of the liquid-crystal compounds in the liquid-crystal media.

In a preferred embodiment, the liquid-crystal media according to the invention comprise a polymer precursor which comprises one or more reactive compounds, preferably reactive mesogens, and, if necessary, also further additives, such as, for example, polymerisation initiators and/or polymerisation moderators, in the usual amounts. The amount of these additives employed is in total 0 % or more to 10 % or less, based on the amount of the entire mixture, preferably 0.1 % or more to 2 % or less. The concentration of these and similar additives is not taken into account when specifying the concentrations and concentration ranges of the liquid-crystal compounds in the liquid-crystal media.

The compositions consist of a plurality of compounds, preferably 3 or more to 30 or fewer, particularly preferably 6 or more to 20 or fewer and very particularly preferably 10 or more to 16 or fewer compounds, which are mixed in a conventional manner. In general, the desired amount of the compounds used in lesser amount is dissolved in the compounds making up the principal constituent of the mixture. This is advantageously carried out at elevated temperature. If the selected temperature is above the clearing point of the principal constituent, completion of the dissolution operation is particularly easy to observe. However, it is also possible to prepare the liquid-crystal mixtures in other conventional ways, for example using pre-mixes or from a so-called "multi-bottle system".

Table A lists the codes used for the ring elements of the core structures of the compounds, while Table B shows the linking groups. Table C gives the meanings of the codes for the left-hand or right-hand end groups. Table D shows illustrative structures of compounds with their respective abbreviations.

**Table A: Ring elements**

| | | | |
|---|---|---|---|
| **C** | 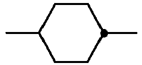 | | |
| **D** | 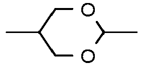 | **DI** | 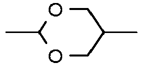 |
| **A** | 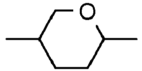 | **AI** | 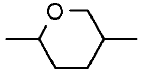 |
| **P** | 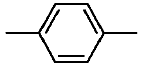 | | |
| **G** | 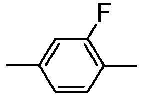 | **GI** | 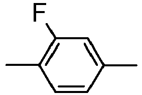 |
| **U** | 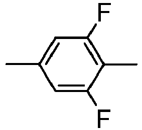 | **UI** | 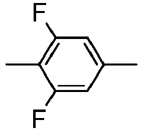 |
| **Y** | 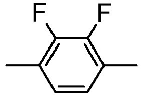 | | |
| **P(F, CI)Y** | 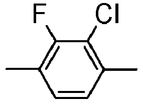 | **P(CI,F)Y** | 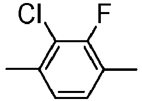 |
| **np** | 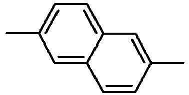 | | |
| **n3f** | 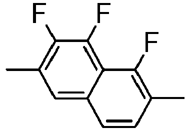 | **nN3fl** | 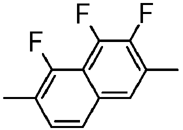 |
| **th** | 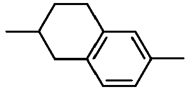 | **thl** | 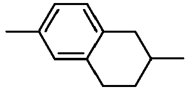 |
| **tH2f** | 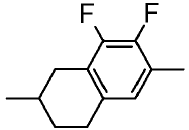 | **tH2fl** | 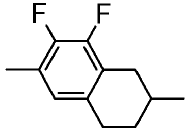 |
| **o2f** | 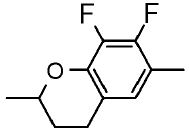 | **o2fl** | 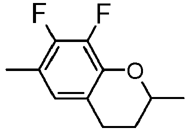 |
| **dh** | 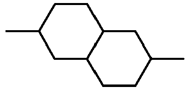 | | |
| **B** | 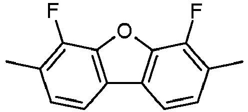 | **B(S)** | 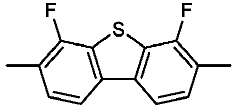 |
| **Bh** | 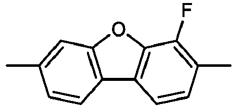 | **Bh(S)** | 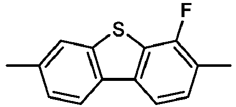 |
| **O** | 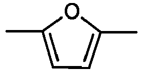 | **S** | 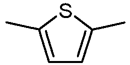 |
| **K** | 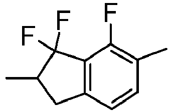 | **KI** | 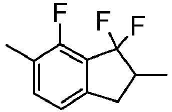 |
| **L** | 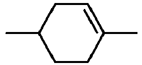 | **LI** | 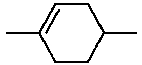 |
| **F** | 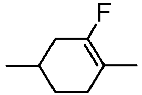 | **FI** | 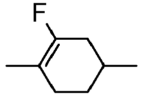 |

**Table B: Linking groups**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | | |

**Table C: End groups**

| **Left-hand side** | | **Right-hand side** | |
|---|---|---|---|
| | **Use alone** | | |
| **-n-** | CₙH₂ₙ₊₁- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| | **Use together with others** | | |
|---|---|---|---|
| **...A...** | -C≡C- | **-...A...** | -C≡C- |
| **...V...-** | CH=CH- | **-...V...** | -CH=CH- |
| **...Z...** | -CO-O- | **-...Z...** | -CO-O- |
| **...ZI...** | -O-CO- | **-...ZI...** | -O-CO- |
| **...K...** | -CO- | **-...K...** | -CO- |
| **...W...-** | -CF=CF- | **-...W...** | -CF=CF- |

in which n and m each denote integers, and the three dots "..." are placeholders for other abbreviations from this table.

The following table shows illustrative structures together with their respective abbreviations. These are shown in order to illustrate the meaning of the rules for the abbreviations. They furthermore represent compounds which are preferably used.

**Table D: Illustrative structures**

| The illustrative structures show compounds which are particularly preferably employed. |
|---|
| 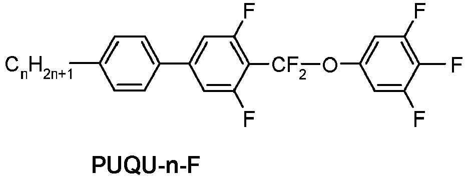 |
| 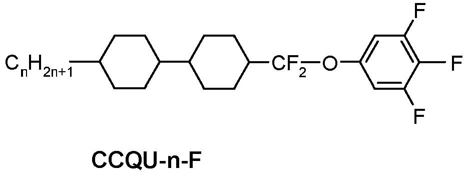 |
| 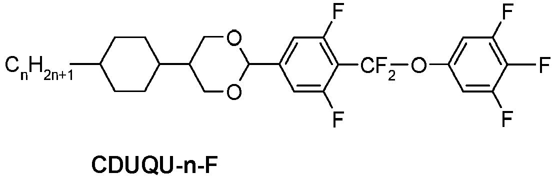 |
| 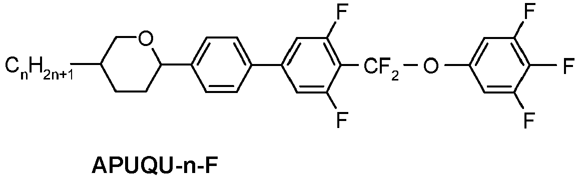 |
| 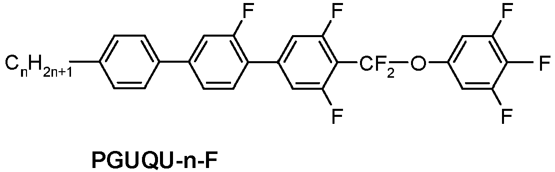 |
| 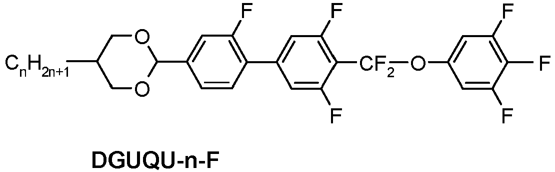 |
| 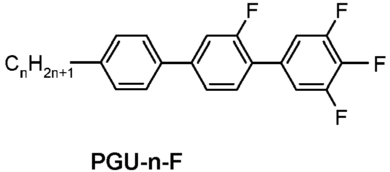 |
| 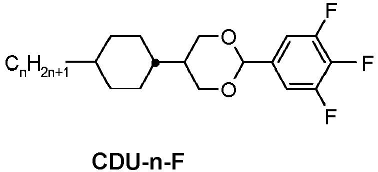 |
| 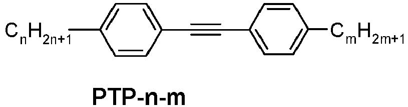 |
| 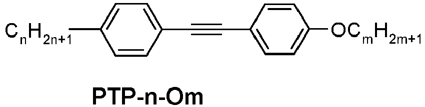 |
| 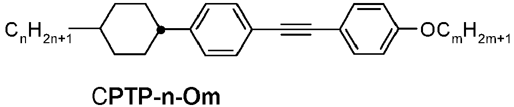 |
| 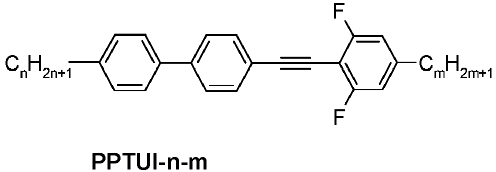 |
| 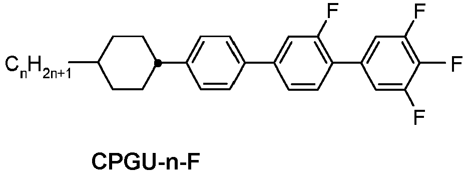 |
| 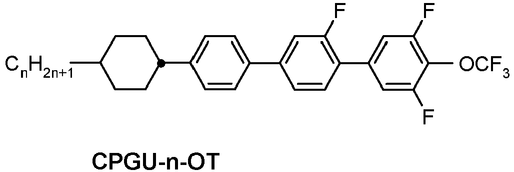 |
| 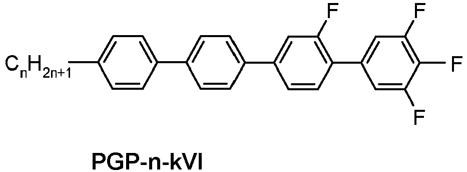 |
| 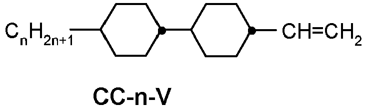 |
| 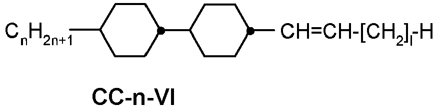 |
| 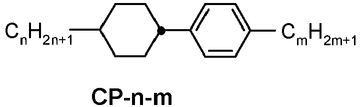 |
| 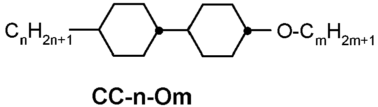 |
| 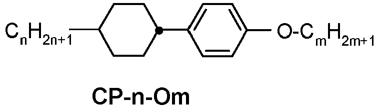 |
| 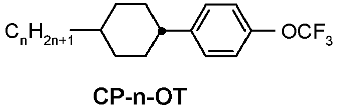 |
| 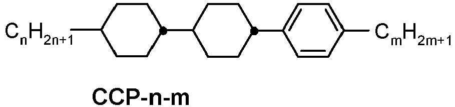 |
| 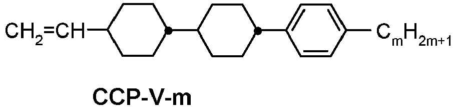 |
| 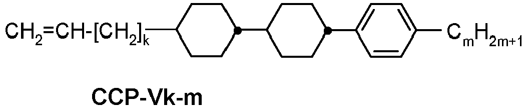 |
| 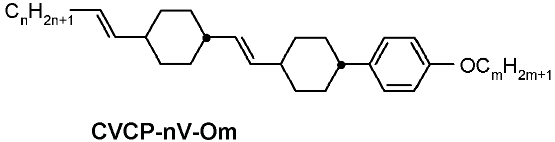 |
| 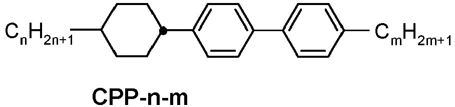 |
| 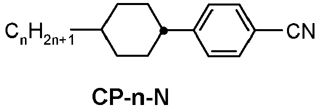 |
| 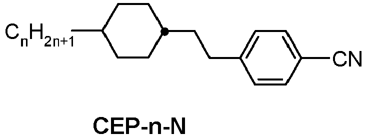 |
| 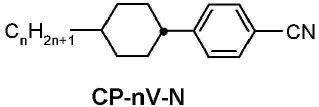 |
| 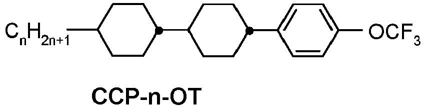 |
| 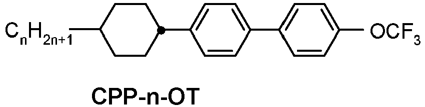 |
| 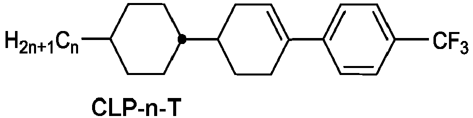 |
| 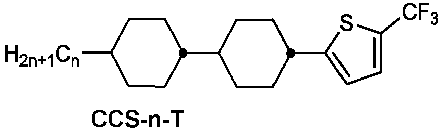 |
| 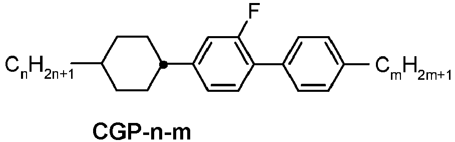 |
| 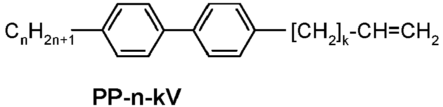 |
| 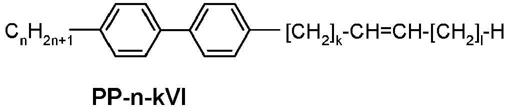 |
| 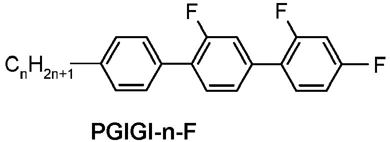 |
| 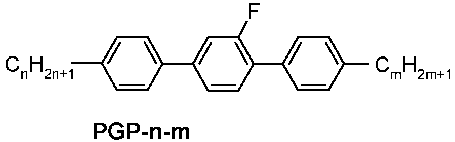 |
| 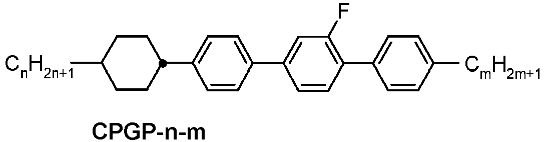 |
| 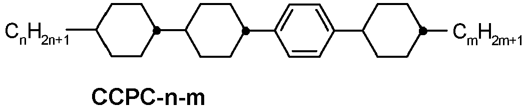 |
| 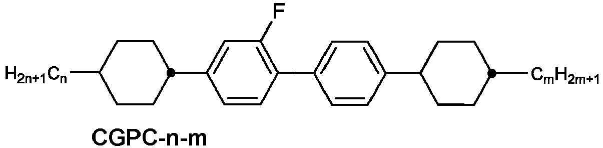 |
| 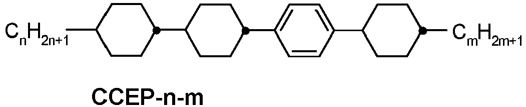 |
| 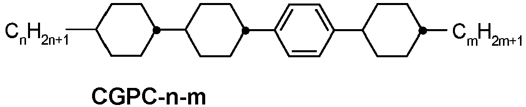 |
| 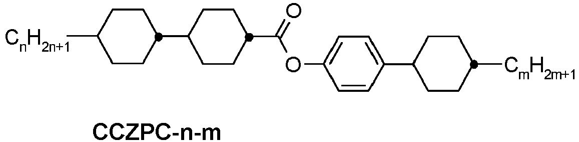 |
| 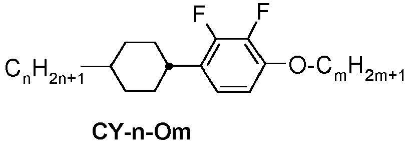 |
| 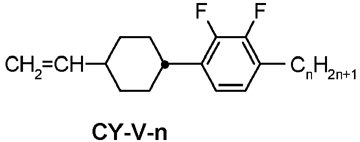 |
| 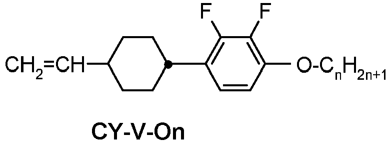 |
| 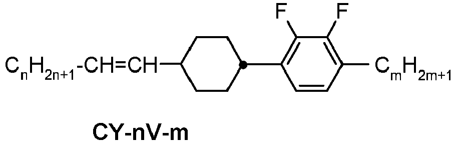 |
| 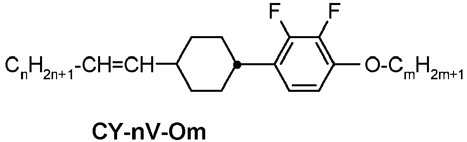 |
| 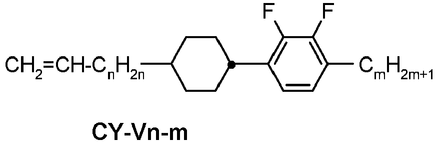 |
| 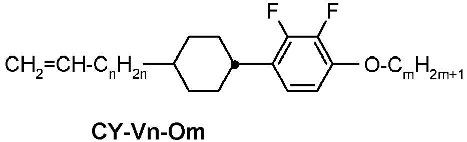 |
| 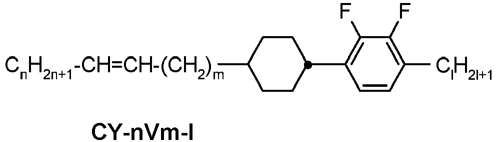 |
| 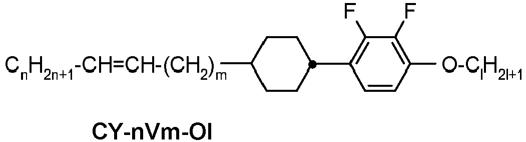 |
| 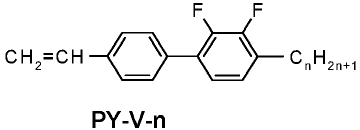 |
| 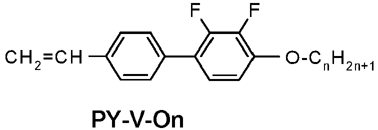 |
| 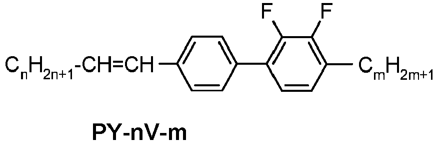 |
| 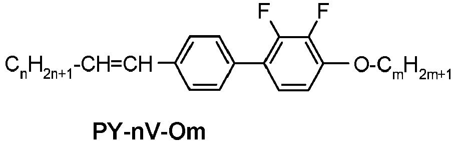 |
| 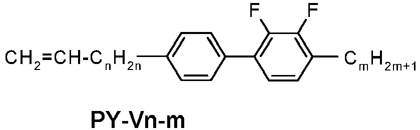 |
| 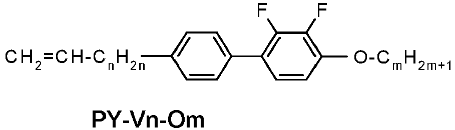 |
| 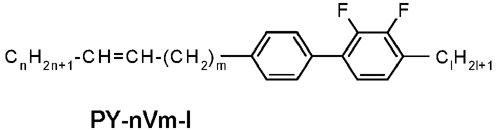 |
| 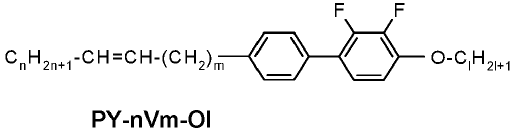 |
| 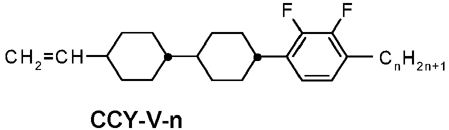 |
| 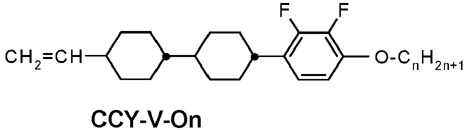 |
| 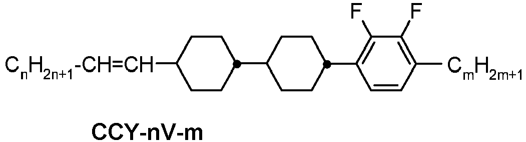 |
| 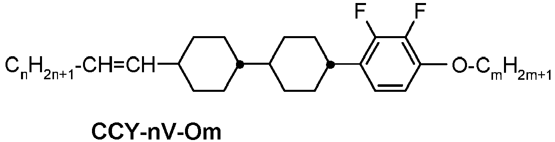 |
| 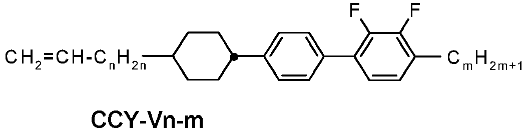 |
| 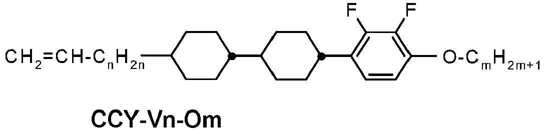 |
| 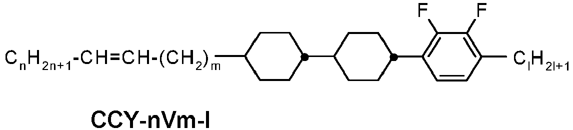 |
| 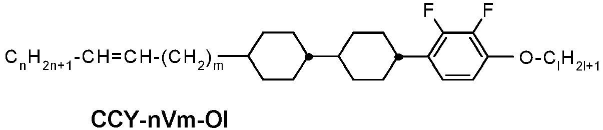 |
| 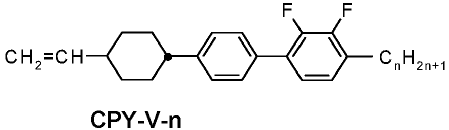 |
| 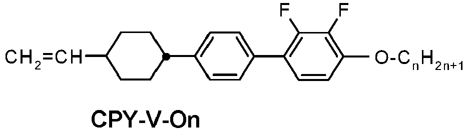 |
| 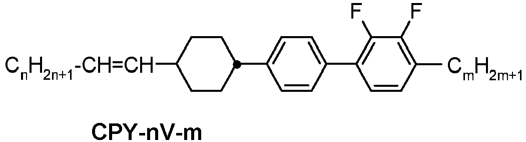 |
| 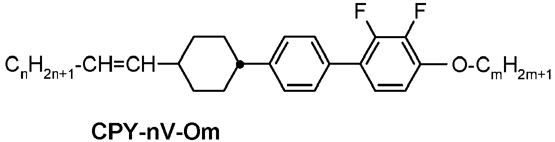 |
| 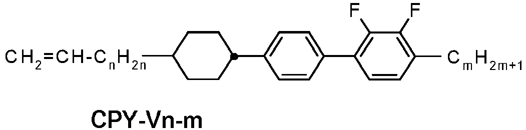 |
| 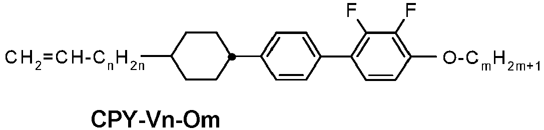 |
| 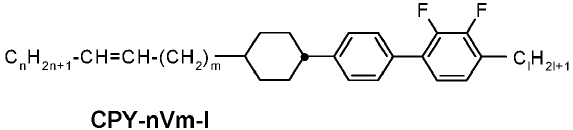 |
| 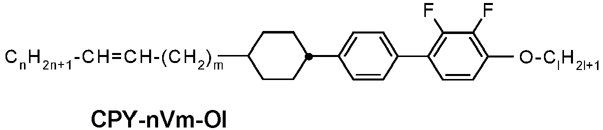 |
| 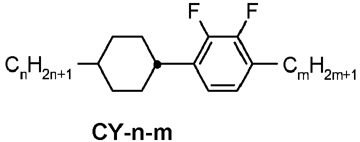 |
| 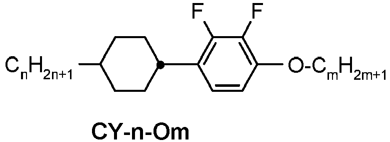 |
| 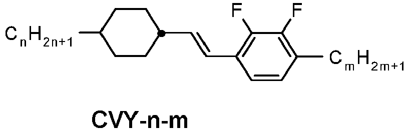 |
| 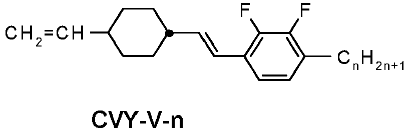 |
| 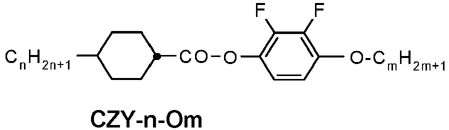 |
| 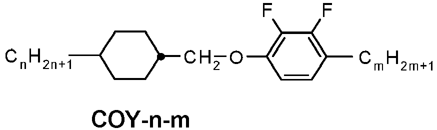 |
| 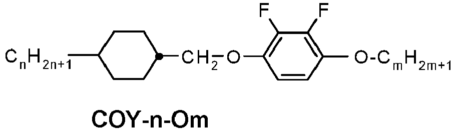 |
| 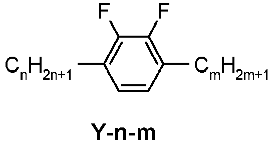 |
| 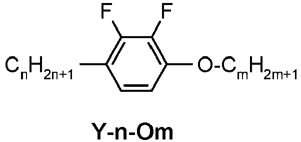 |
| 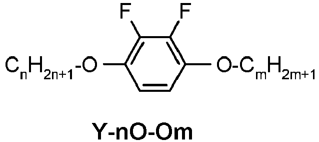 |
| 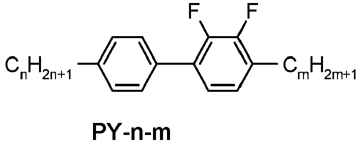 |
| 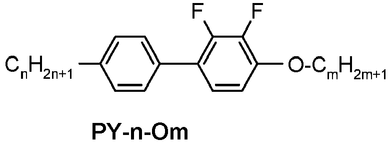 |
| 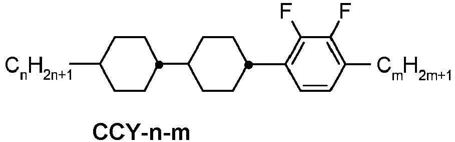 |
| 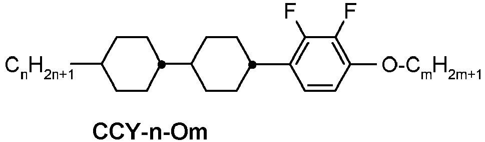 |
| 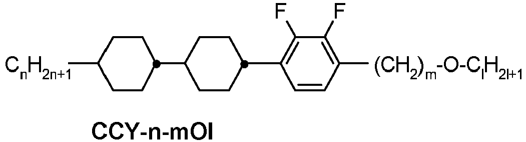 |
| 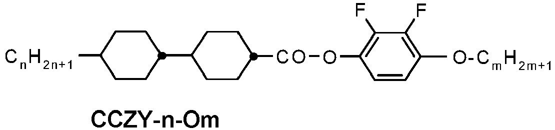 |
| 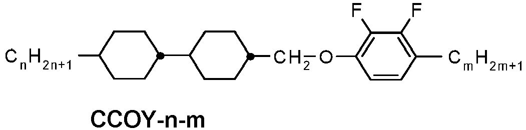 |
| 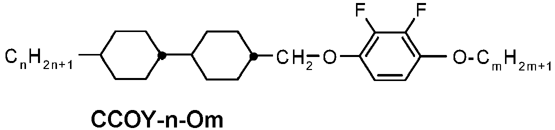 |
| 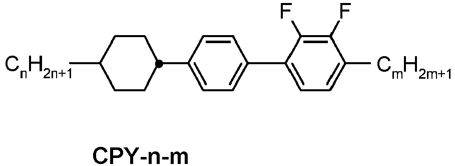 |
| 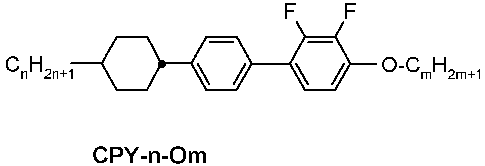 |
| 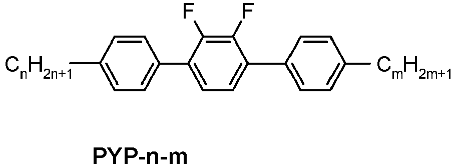 |
| 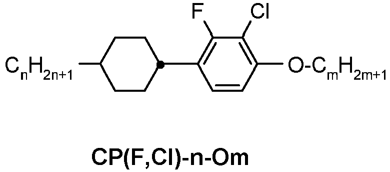 |
| 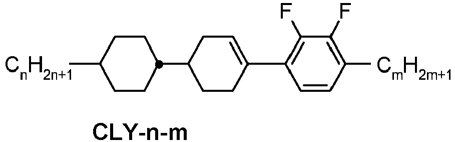 |
| 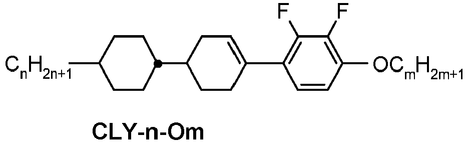 |
| 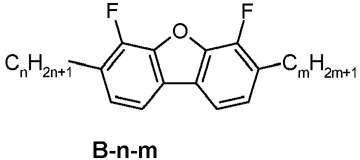 |
| 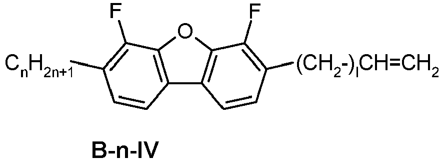 |
| 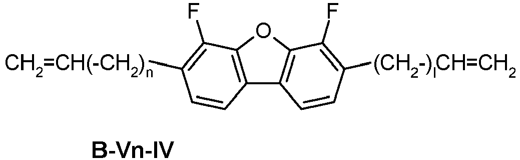 |
| 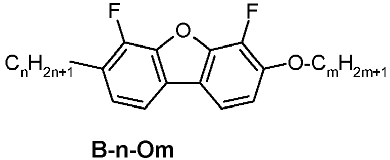 |
| 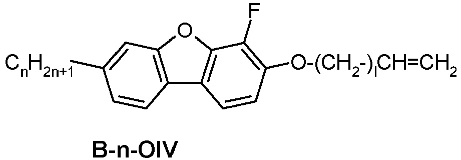 |
| 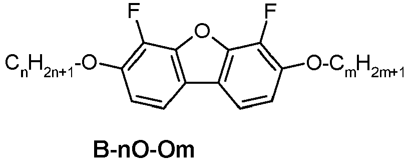 |
| 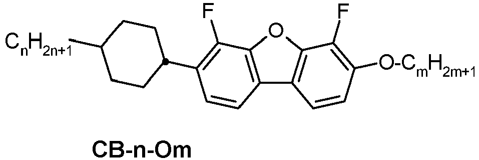 |
| 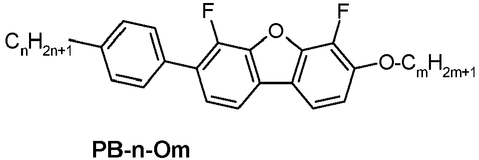 |
| 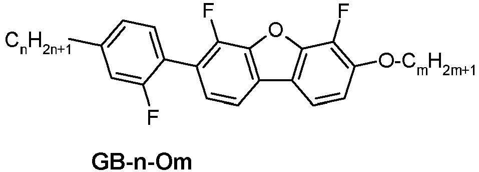 |
| 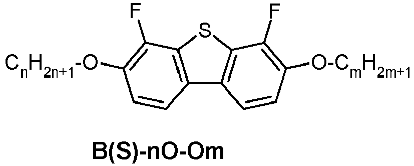 |
| 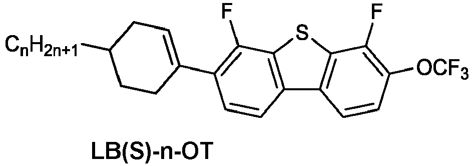 |

**Table E**

| Table E indicates chiral dopants which can generally added to the liquid-crystalline media according to the invention. The liquid-crystalline media preferably comprise 0-10% by weight, in particular 0.01-5% by weight and particularly preferably 0.1-3% by weight of dopants. | |
|---|---|
| 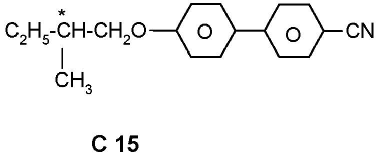 | 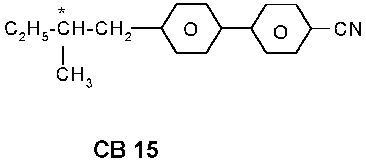 |
| 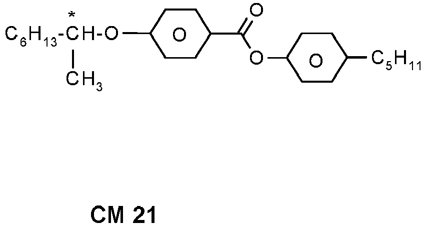 | 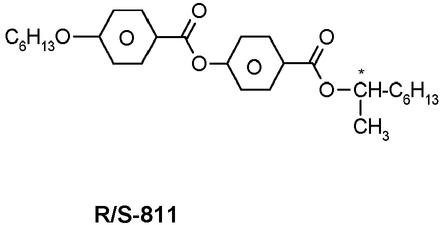 |
| 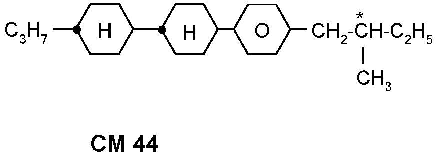 | 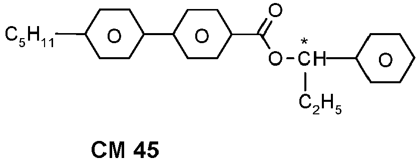 |
| 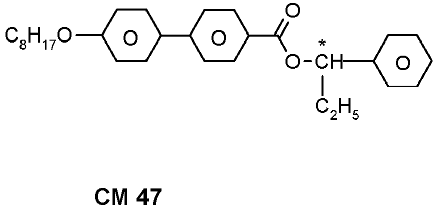 | 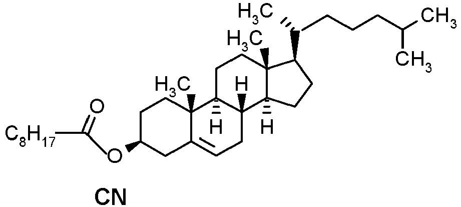 |
| 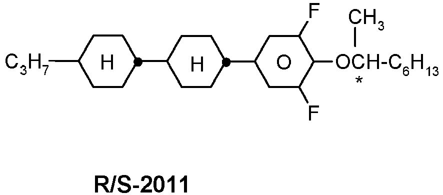 | 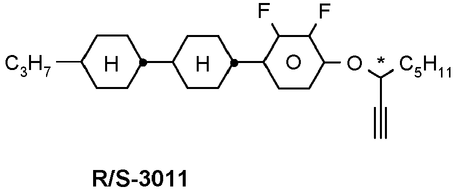 |
| 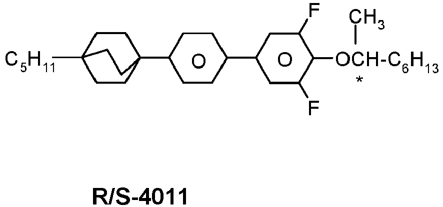 | 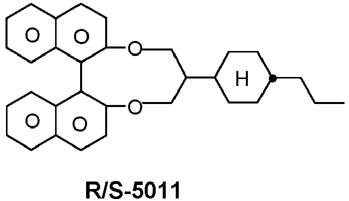 |
| 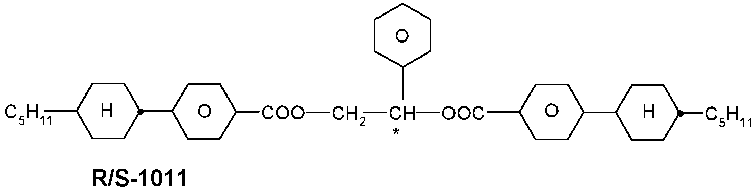 | |

Table F shows stabilisers which can preferably be employed in the mixtures according to the invention in addition to the compounds of formula I. The parameter n here denotes an integer in the range from 1 to 12.

**Table F**

| Table F shows stabilisers which can be added to the LC media according to the invention. | |
|---|---|
| (n here denotes an integer from 1 to 12, preferably 1, 2, 3, 4, 5, 6, 7 or 8, terminal methyl groups are not shown). | |
| 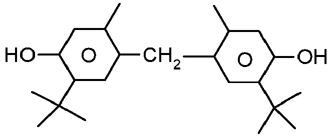 | 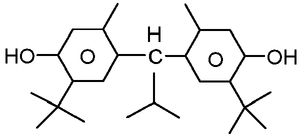 |
| 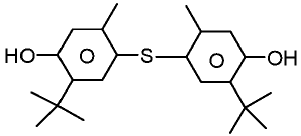 | 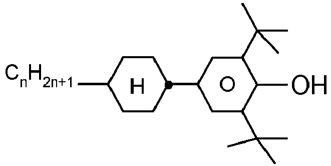 |
| 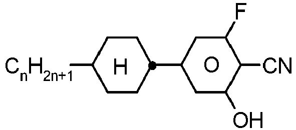 | 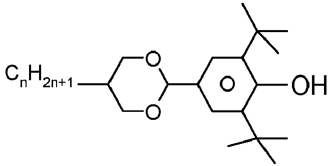 |
| 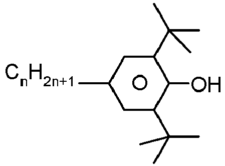 | 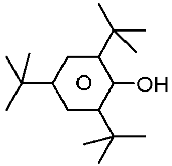 |
| 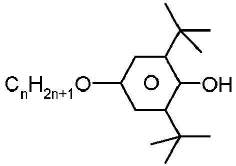 | 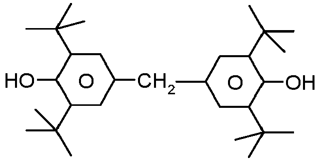 |
| 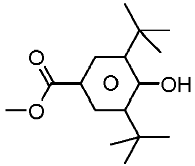 | 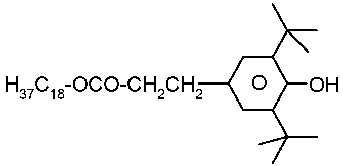 |
| 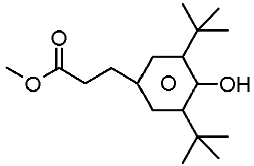 | 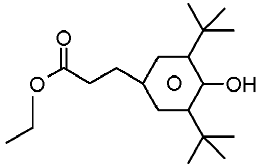 |
| 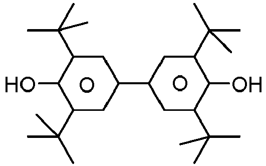 | 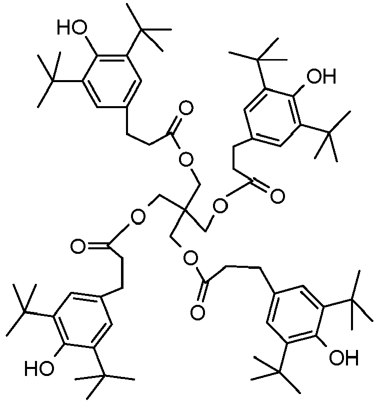 |
| 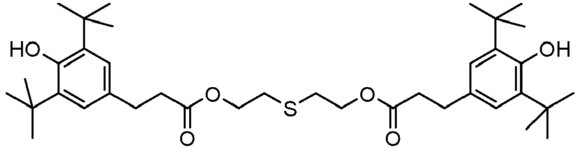 | |
| 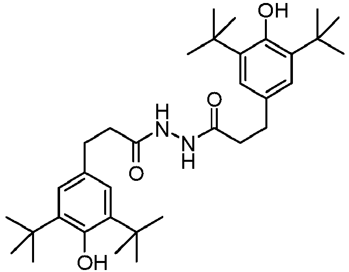 | 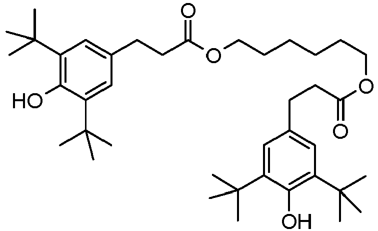 |
| 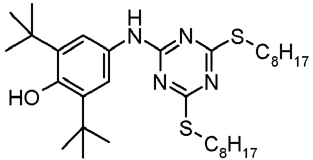 | 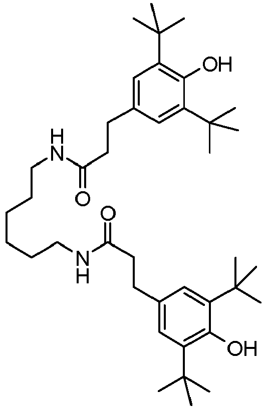 |
| 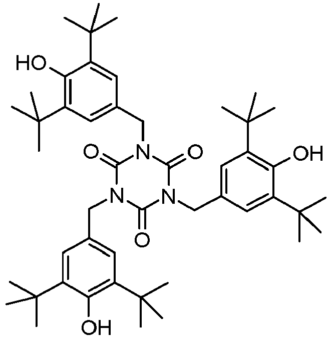 | 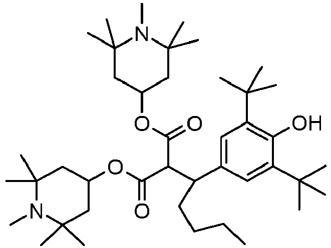 |
| 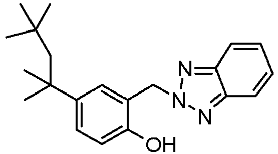 | 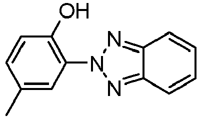 |
| 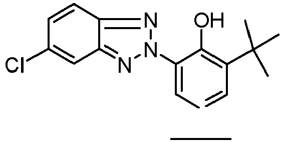 | 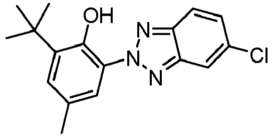 |
| 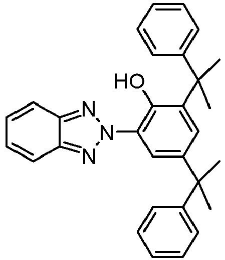 | 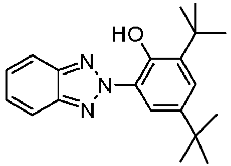 |
| 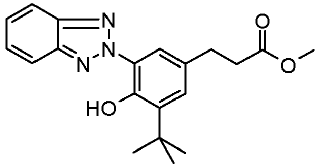 | 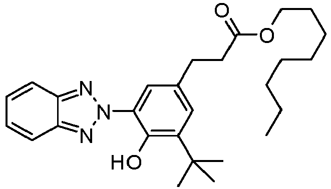 |
| 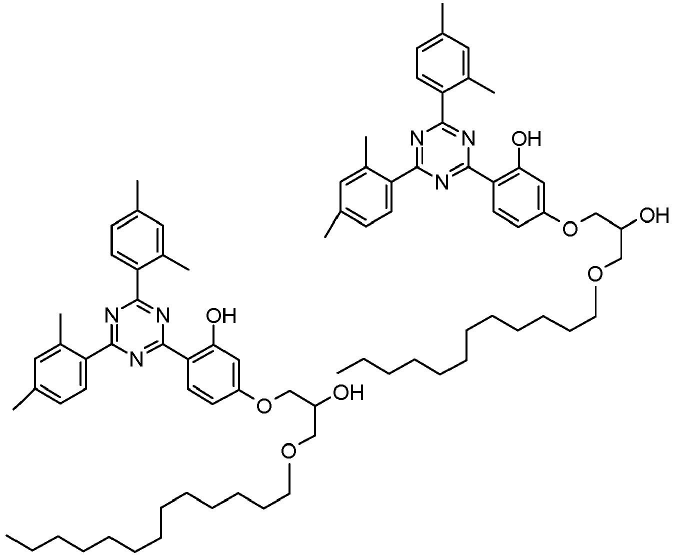 | |
| 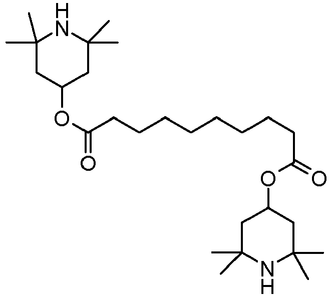 | 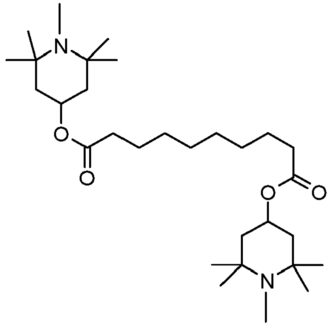 |
| 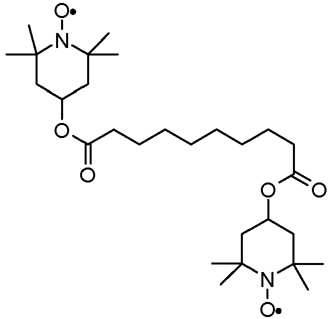 | 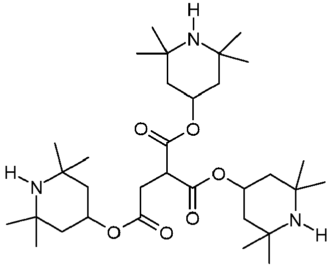 |
| 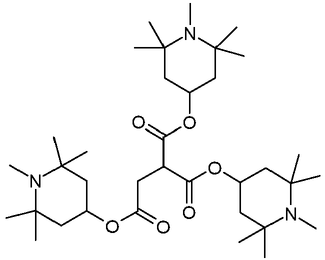 | 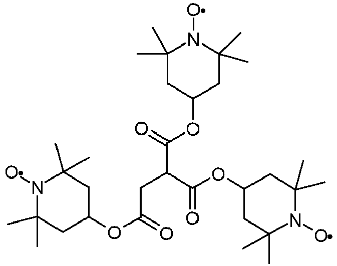 |
| 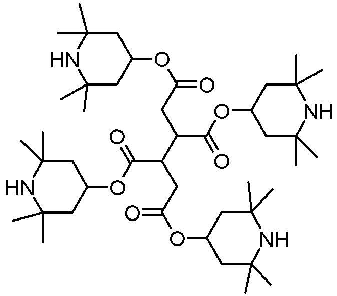 | 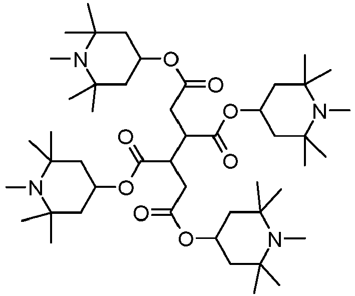 |
| 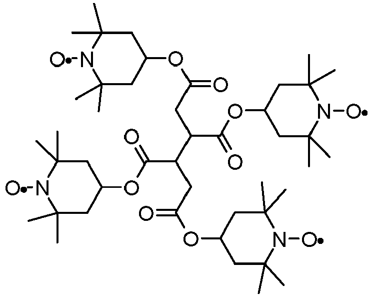 | 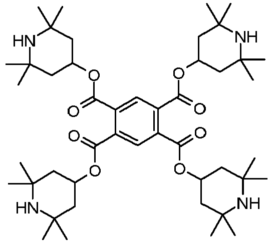 |
| 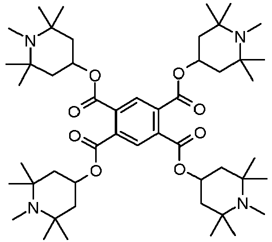 | 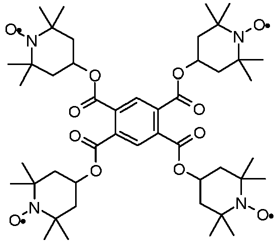 |
| 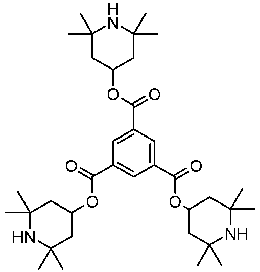 | 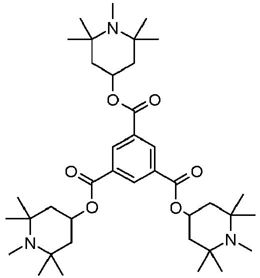 |
| 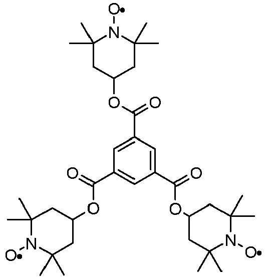 | 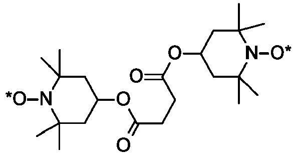 |

The LC media preferably comprise 0 to 10% by weight, in particular 1 ppm to 5% by weight, particularly preferably 1 ppm to 1% by weight, of stabilisers, preferably selected from the group of compounds of Table F.

The following mixture examples are intended to explain the invention without limiting it.

Above and below, percentage data denote per cent by weight. All temperatures are indicated in degrees Celsius, m.p. denotes melting point, cl.p. = clearing point. Furthermore, C = crystalline state, N = nematic phase, S = smectic phase and I = isotropic phase. The data between these symbols represent the transition temperatures. Furthermore, the following symbols are used
- V₀: Freedericks threshold voltage, capacitive [V] at 20°C,
- V₁₀: voltage [V] for 10% transmission,
- nₑ: extraordinary refractive index measured at 20°C and 589 nm,
- nₒ: ordinary refractive index measured at 20°C and 589 nm,
- Δn: optical anisotropy measured at 20°C and 589 nm,
- ε_{⊥}: dielectric susceptibility (or "dielectric constant") perpendicular to the longitudinal axes of the molecules at 20°C and 1 kHz,
- ε_{∥}: dielectric susceptibility (or "dielectric constant") parallel to the longitudinal axes of the molecules at 20°C and 1 kHz,
- Δε: dielectric anisotropy at 20°C and 1 kHz,
- T(N,I): clearing point [°C],
- ν: flow viscosity measured at 20°C [mm²·s⁻¹],
- γ₁: rotational viscosity measured at 20°C [mPa·s],
- K₁₁: elastic constant, "splay" deformation at 20°C [pN],
- K₂₂: elastic constant, "twist" deformation at 20°C [pN],
- K₃₃: elastic constant, "bend" deformation at 20°C [pN], and
- LTS: low-temperature stability of the phase, determined in bulk,
- VHR: voltage holding ratio.

All physical properties are determined in accordance with "Merck Liquid Crystals, Physical Properties of Liquid Crystals", status Nov. 1997, Merck KGaA, Germany, and apply for a temperature of 20°C, unless explicitly indicated otherwise.

The storage stability in the bulk of the media according to the invention at a given low temperature T (LTS) is determined by visual inspection. 2 g of the media of interest are filled into a closed glass vessel (bottle) of appropriate size and placed in a refrigerator at a predetermined temperature. The bottles are checked at defined time intervals of typically 24 h for the occurrence of smectic phases or crystallisation. For every material and at each temperature two bottles are stored. If crystallisation or the appearance of a smectic phase is observed in at least one of the two correspondent bottles the test is terminated and the time of the last inspection before the one at which the occurrence of a higher ordered phase is observed is recorded as the respective storage stability. After 1000 h the test is terminated. If after 1000 h no change is observed, an LTS value of ">1000 h" is given.

The electro-optical properties, for example the threshold voltage (V₀) (capacitive measurement), are, as is the switching behaviour, determined in test cells produced at Merck Japan. The measurement cells have soda-lime glass substrates and are constructed in an ECB or VA configuration with polyimide alignment layers (SE-1211 with diluent **26 (mixing ratio 1:1), both from Nissan Chemicals, Japan), which have been rubbed perpendicularly to one another and effect homeotropic alignment of the liquid crystals. The surface area of the transparent, virtually square ITO electrodes is 1 cm².

Unless indicated otherwise, a chiral dopant is not added to the liquid-crystal mixtures used, but the latter are also particularly suitable for applications in which doping of this type is necessary.

The rotational viscosity is determined using the transient current method and the flow viscosity in a modified Ubbelohde viscometer. For liquid-crystal mixtures ZLI-2293, ZLI-4792 and MLC-6608, all products from Merck KGaA, Darmstadt, Germany, the rotational viscosity values determined at 20°C are 161 mPa s, 133 mPa·s and 186 mPa·s respectively, and the flow viscosity values (v) are 21 mm²·s⁻¹, 14 mm²·s⁻¹ and 27 mm²·s⁻¹, respectively.

### Examples

The comparative Mixture C-1 and the nematic mixtures N-1 to N-22 are prepared as follows:

### Comparative Mixture C1

| | | | |
|---|---|---|---|
| CC-3-V | 33.0 % | Clearing point /°C: | 80.0 |
| CC-3-V1 | 7.5 % | Δn (589 nm, 20°C): | 0.0982 |
| CC-3-2V1 | 9.0 % | nₑ (589 nm, 20°C): | 1.5822 |
| CCP-V-1 | 14.0 % | nₒ (589 nm, 20°C): | 1.4840 |
| PGP-2-2V | 7.5 % | Δε (1 kHz, 20°C): | 2.5 |
| DGUQU-4-F | 8.0 % | ε_{∥} (1 kHz, 20°C): | 6.9 |
| Y-4O-O4 | 7.0 % | ε_{⊥} (1 kHz, 20°C): | 4.4 |
| B(S)-2O-O4 | 2.5 % | γ₁ (20°C)/ mPa·s: | 62 |
| B(S)-2O-O5 | 3.0 % | K₁ (pN, 20°C): | 13.8 |
| CCGU-3-F | 5.5 % | K₃ (pN, 20°C): | 16.0 |
| CGPC-3-3 | 3.0 % | LTS (-20°C) [h]: | 72 |
| Σ | 100.0 % | | |

### Mixture N-1

| | | | |
|---|---|---|---|
| CC-3-V | 33.0 % | Clearing point /°C: | 80.0 |
| CC-V-V1 | 7.5 % | Δn (589 nm, 20°C): | 0.0995 |
| CC-3-2V1 | 9.0 % | nₑ (589 nm, 20°C): | 1.5854 |
| CCP-V-1 | 15.0 % | nₒ (589 nm, 20°C): | 1.4859 |
| PGP-2-2V | 7.0 % | Δε (1 kHz, 20°C): | 2.3 |
| DGUQU-4-F | 5.5 % | ε_{∥} (1 kHz, 20°C): | 6.6 |
| PGUQU-3-F | 2.0 % | ε_{⊥} (1 kHz, 20°C): | 4.3 |
| Y-4O-O4 | 6.5 % | γ₁ (20°C)/ mPa·s: | 64 |
| B(S)-2O-O4 | 2.5 % | K₁ (pN, 20°C): | 13.4 |
| B(S)-2O-O5 | 3.0 % | K₃ (pN, 20°C): | 15.6 |
| CCGU-3-F | 6.0 % | LTS (-20°C) [h]: | >1000 |
| CGPC-3-3 | 3.0 % | | |
| ∑ | 100.0 % | | |

### Mixture N-2

| | | | |
|---|---|---|---|
| CC-3-V | 33.0 % | Clearing point /°C: | 79.5 |
| CC-1V-V2 | 7.5 % | Δn (589 nm, 20°C): | 0.0997 |
| CC-3-2V1 | 9.0 % | nₑ (589 nm, 20°C): | 1.5846 |
| CCP-V-1 | 14.5 % | nₒ (589 nm, 20°C): | 1.4849 |
| PGP-2-2V | 6.5 % | Δε (1 kHz, 20°C): | 2.6 |
| DGUQU-4-F | 6.0 % | ε_{∥} (1 kHz, 20°C): | 6.9 |
| PGUQU-3-F | 2.5 % | ε_{⊥} (1 kHz, 20°C): | 4.4 |
| Y-4O-O4 | 7.0 % | γ₁ (20°C)/ mPa·s: | 66 |
| B(S)-2O-O4 | 2.5 % | K₁ (pN, 20°C): | 13.7 |
| B(S)-2O-O5 | 3.0 % | K₃ (pN, 20°C): | 15.7 |
| CCGU-3-F | 6.0 % | LTS (-20°C) [h]: | >1000 |
| CGPC-3-3 | 2.5 % | | |
| ∑ | 100.0 % | | |

### Mixture N-3

| | | | |
|---|---|---|---|
| CC-3-V | 44.5 | Clearing point [°C]: | 78.5 |
| CC-3-V1 | 5.0 | Δn [589 nm, 20°C]: | 0.1174 |
| CC-3-2V1 | 2.0 | nₑ [589 nm, 20°C]: | 1.6074 |
| PG P-2-2 V | 12.0 | nₒ [589 nm, 20°C]: | 1.4900 |
| PGP-3-2V | 5.5 | Δε [1 kHz, 20°C]: | 2.8 |
| DGUQU-4-F | 5.5 | ε_{∥} [1 kHz, 20°C]: | 6.6 |
| PGUQU-3-F | 4.0 | ε_{⊥} [1 kHz, 20°C]: | 3.8 |
| CLP-3-T | 5.0 | γ₁ [mPa s, 20°C]: | 57 |
| B(S)-2O-O4 | 3.0 | K₁ [pN, 20°C]: | 14.8 |
| B(S)-2O-O5 | 3.0 | K₃ [pN, 20°C]: | 14.2 |
| PY-3-O2 | 3.0 | LTS bulk [h, -20°C]: | >1000 |
| CLP-V-1 | 5.0 | | |
| CC-V-V | 2.5 | | |
| ∑ | 100.0 | | |

### Mixture N-4

| | | | |
|---|---|---|---|
| DGUQU-4-F | 8.0 | Clearing point [°C]: | 80.5 |
| PGUQU-3-F | 5.5 | Δn [589 nm, 20°C]: | 0.0989 |
| CCG-V-F | 7.5 | nₑ [589 nm, 20°C]: | 1.5864 |
| CC-3-V | 36.0 | nₒ [589 nm, 20°C]: | 1.4875 |
| CCP-V-1 | 17.0 | Δε [1 kHz, 20°C]: | 3.9 |
| PP-1-2V1 | 5.5 | ε_{∥} [1 kHz, 20°C]: | 7.6 |
| CPPC-3-3 | 2.0 | ε_{⊥} [1 kHz, 20°C]: | 3.7 |
| B(S)-2O-O4 | 2.5 | γ₁ [mPa s, 20°C]: | 58 |
| B(S)-2O-O5 | 4.0 | K₁ [pN, 20°C]: | 13.0 |
| CC-V-V1 | 12.0 | K₃ [pN, 20°C]: | 15.8 |
| ∑ | 100.0 | | |

### Mixture N-5

| | | | |
|---|---|---|---|
| DGUQU-4-F | 4.0 | Clearing point [°C]: | 81.5 |
| PGUQU-3-F | 10.0 | Δn [589 nm, 20°C]: | 0.0998 |
| CCG-V-F | 8.0 | nₑ [589 nm, 20°C]: | 1.5867 |
| CC-3-V | 42.5 | nₒ [589 nm, 20°C]: | 1.4869 |
| CCP-V-1 | 16.0 | Δε [1 kHz, 20°C]: | 3.7 |
| PP-1-2V1 | 3.0 | ε_{∥} [1 kHz, 20°C]: | 7.5 |
| CPPC-3-3 | 3.0 | ε_{⊥} [1 kHz, 20°C]: | 3.8 |
| B(S)-2O-O4 | 5.0 | γ₁ [mPa s, 20°C]: | 57 |
| B(S)-2O-O5 | 2.5 | K₁ [pN, 20°C]: | 12.7 |
| CC-V-V | 6.0 | K₃ [pN, 20°C]: | 15.4 |
| ∑ | 100.0 | | |

### Mixture N-6

| | | | |
|---|---|---|---|
| DGUQU-4-F | 8.0 | Clearing point [°C]: | 80.5 |
| PGUQU-3-F | 5.5 | Δn [589 nm, 20°C]: | 0.0978 |
| PPGU-3-F | 0.5 | nₑ [589 nm, 20°C]: | 1.5834 |
| CCG-V-F | 7.0 | nₒ [589 nm, 20°C]: | 1.4856 |
| CC-3-V | 36.5 | Δε [1 kHz, 20°C]: | 3.9 |
| CCP-V-1 | 14.5 | ε_{∥} [1 kHz, 20°C]: | 7.8 |
| PP-1-2V1 | 3.0 | ε_{⊥} [1 kHz, 20°C]: | 3.9 |
| CPPC-3-3 | 2.0 | γ₁ [mPa s, 20°C]: | 58 |
| B(S)-2O-O4 | 4.0 | K₁ [pN, 20°C]: | 12.8 |
| B(S)-2O-O5 | 4.0 | K₃ [pN, 20°C]: | 15.7 |
| CC-V-V1 | 15.0 | | |
| ∑ | 100.0 | | |

### Mixture N-7

| | | | |
|---|---|---|---|
| DGUQU-4-F | 8.0 | Clearing point [°C]: | 80 |
| PGUQU-3-F | 5.5 | Δn [589 nm, 20°C]: | 0.0994 |
| PPGU-3-F | 0.5 | nₑ [589 nm, 20°C]: | 1.5863 |
| CCG-V-F | 7.0 | nₒ [589 nm, 20°C]: | 1.4869 |
| CC-3-V | 34.0 | Δε [1 kHz, 20°C]: | 3.9 |
| CCP-V-1 | 14.0 | ε_{∥} [1 kHz, 20°C]: | 7.8 |
| PP-1-2V1 | 4.0 | ε_{⊥} [1 kHz, 20°C]: | 3.9 |
| CPPC-3-3 | 2.0 | γ₁ [mPa s, 20°C]: | 58 |
| B(S)-2O-O4 | 4.0 | K₁ [pN, 20°C]: | 12.9 |
| B(S)-2O-O5 | 4.0 | K₃ [pN, 20°C]: | 16.1 |
| CC-V-V1 | 17.0 | | |
| ∑ | 100.0 | | |

### Mixture N-8

| | | | |
|---|---|---|---|
| APUQU-3-F | 4.5 | Clearing point [°C]: | 80 |
| PGUQU-3-F | 4.0 | Δn [589 nm, 20°C]: | 0.0983 |
| PGUQU-5-F | 9.0 | nₑ [589 nm, 20°C]: | 1.5831 |
| PPGU-3-F | 0.5 | nₒ [589 nm, 20°C]: | 1.4848 |
| CCP-V-1 | 17.0 | Δε [1 kHz, 20°C]: | 4.0 |
| CLP-3-T | 1.0 | ε_{∥} [1 kHz, 20°C]: | 7.7 |
| B(S)-2O-O4 | 4.0 | ε_{⊥} [1 kHz, 20°C]: | 3.7 |
| B(S)-2O-O5 | 4.0 | γ₁ [mPa s, 20°C]: | 56 |
| CC-3-V | 45.0 | K₁ [pN, 20°C]: | 13.2 |
| CC-V-V1 | 11.0 | K₃ [pN, 20°C]: | 15.7 |
| ∑ | 100.0 | LTS bulk [h, -20°C]: | 624 |

### Mixture N-9

| | | | |
|---|---|---|---|
| PGUQU-3-F | 7.5 | Clearing point [°C]: | 79 |
| PGUQU-5-F | 3.0 | Δn [589 nm, 20°C]: | 0.0978 |
| PPGU-3-F | 0.5 | nₑ [589 nm, 20°C]: | 1.5824 |
| CCP-V-1 | 16.0 | nₒ [589 nm, 20°C]: | 1.4846 |
| CLP-3-T | 1.0 | Δε [1 kHz, 20°C]: | 4.0 |
| B(S)-2O-O4 | 4.0 | ε_{∥} [1 kHz, 20°C]: | 7.9 |
| B(S)-2O-O5 | 4.0 | ε_{⊥} [1 kHz, 20°C]: | 3.9 |
| CC-3-V | 45.0 | γ₁ [mPa s, 20°C]: | 56 |
| CC-V-V1 | 11.0 | K₁ [pN, 20°C]: | 13.1 |
| LB(S)-3-OT | 3.0 | K₃ [pN, 20°C]: | 15.3 |
| DGUQU-4-F | 5.0 | LTS bulk [h, -20°C]: | 360 |
| ∑ | 100.0 | | |

### Mixture N-10

| | | | |
|---|---|---|---|
| APUQU-3-F | 8.0 | Clearing point [°C]: | 80 |
| PGUQU-3-F | 8.0 | Δn [589 nm, 20°C]: | 0.0984 |
| PGUQU-5-F | 1.5 | nₑ [589 nm, 20°C]: | 1.5835 |
| PPGU-3-F | 0.5 | nₒ [589 nm, 20°C]: | 1.4851 |
| CCP-V-1 | 13.5 | Δε [1 kHz, 20°C]: | 3.9 |
| CLP-3-T | 1.0 | ε_{∥} [1 kHz, 20°C]: | 7.9 |
| B(S)-2O-O4 | 4.0 | ε_{⊥} [1 kHz, 20°C]: | 4.0 |
| B(S)-2O-O5 | 4.0 | γ₁ [mPa s, 20°C]: | 57 |
| CC-3-V | 45.0 | K₁ [pN, 20°C]: | 13.3 |
| CC-V-V1 | 11.5 | K₃ [pN, 20°C]: | 15.4 |
| CPY-3-O2 | 3.0 | | |
| ∑ | 100.0 | | |

### Mixture N-11

| | | | |
|---|---|---|---|
| DGUQU-4-F | 3.0 | Clearing point [°C]: | 79 |
| PGUQU-3-F | 6.0 | Δn [589 nm, 20°C]: | 0.0984 |
| PGUQU-5-F | 6.0 | nₑ [589 nm, 20°C]: | 1.5831 |
| PPGU-3-F | 0.5 | nₒ [589 nm, 20°C]: | 1.4847 |
| CCP-V-1 | 13.0 | Δε [1 kHz, 20°C]: | 3.7 |
| CLP-3-T | 1.0 | ε_{∥} [1 kHz, 20°C]: | 7.7 |
| B(S)-2O-O4 | 4.0 | ε_{⊥} [1 kHz, 20°C]: | 4.0 |
| B(S)-2O-O5 | 4.0 | γ₁ [mPa s, 20°C]: | 57 |
| CC-3-V | 43.0 | K₁ [pN, 20°C]: | 12.9 |
| CC-V-V1 | 11.5 | K₃ [pN, 20°C]: | 15.4 |
| CPY-3-O2 | 3.0 | LTS bulk [h, -20°C]: | 360 |
| CCG-V-F | 5.0 | | |
| ∑ | 100.0 | | |

### Mixture N-12

| | | | |
|---|---|---|---|
| DGUQU-4-F | 8.0 | Clearing point [°C]: | 79.5 |
| PGUQU-3-F | 6.0 | Δn [589 nm, 20°C]: | 0.0997 |
| PPGU-3-F | 0.5 | nₑ [589 nm, 20°C]: | 1.5868 |
| CCG-V-F | 7.0 | nₒ [589 nm, 20°C]: | 1.4871 |
| CC-3-V | 39.5 | Δε [1 kHz, 20°C]: | 4.0 |
| CCP-V-1 | 14.5 | ε_{∥} [1 kHz, 20°C]: | 8.0 |
| PP-1-2V1 | 4.5 | ε_{⊥} [1 kHz, 20°C]: | 3.9 |
| CPPC-3-3 | 2.0 | γ₁ [mPa s, 20°C]: | 58 |
| B(S)-2O-O4 | 4.0 | K₁ [pN, 20°C]: | 13.0 |
| B(S)-2O-O5 | 4.0 | K₃ [pN, 20°C]: | 15.9 |
| CC-V-V1 | 10.0 | | |
| ∑ | 100.0 | | |

### Mixture N-13

| | | | |
|---|---|---|---|
| DGUQU-4-F | 4.0 | Clearing point [°C]: | 79.5 |
| PGUQU-3-F | 8.0 | Δn [589 nm, 20°C]: | 0.0987 |
| APUQU-3-F | 4.0 | nₑ [589 nm, 20°C]: | 1.5833 |
| PPGU-3-F | 0.5 | nₒ [589 nm, 20°C]: | 1.4846 |
| CCP-V-1 | 11.0 | Δε [1 kHz, 20°C]: | 3.8 |
| CLP-3-T | 1.0 | ε_{∥} [1 kHz, 20°C]: | 7.8 |
| B(S)-2O-O4 | 4.0 | ε_{⊥} [1 kHz, 20°C]: | 4.0 |
| B(S)-2O-O5 | 4.0 | γ₁ [mPa s, 20°C]: | 57 |
| CC-3-V | 46.0 | K₁ [pN, 20°C]: | 13.3 |
| CC-V-V1 | 11.0 | K₃ [pN, 20°C]: | 15.3 |
| CPY-3-O2 | 3.0 | | |
| CPPC-3-3 | 2.0 | | |
| PP-1-2V1 | 1.5 | | |
| ∑ | 100.0 | | |

### Mixture N-14

| | | | |
|---|---|---|---|
| B(S)-2O-O4 | 4.0 | Clearing point [°C]: | 81 |
| B(S)-2O-O5 | 4.0 | Δn [589 nm, 20°C]: | 0.1010 |
| CC-3-V | 39.5 | nₑ [589 nm, 20°C]: | 1.5875 |
| CC-V-V1 | 10.0 | nₒ [589 nm, 20°C]: | 1.4865 |
| CCGU-3-F | 6.0 | Δε [1 kHz, 20°C]: | 2.3 |
| CCP-V-1 | 15.0 | ε_{∥} [1 kHz, 20°C]: | 6.6 |
| CPY-3-O2 | 9.0 | ε_{⊥} [1 kHz, 20°C]: | 4.3 |
| PG P-2-2 V | 1.0 | γ₁ [mPa s, 20°C]: | 65 |
| PPGU-3-F | 0.5 | K₁ [pN, 20°C]: | 13.4 |
| PUQU-3-F | 11.0 | K₃ [pN, 20°C]: | 15.4 |
| ∑ | 100.0 | LTS bulk [h, -20°C]: | >1000 |

### Mixture N-15

| | | | |
|---|---|---|---|
| B(S)-2O-O4 | 4.0 | Clearing point [°C]: | 77 |
| B(S)-2O-O5 | 3.0 | Δn [589 nm, 20°C]: | 0.1009 |
| CC-2V-V2 | 10.0 | nₑ [589 nm, 20°C]: | 1.5872 |
| CC-3-V | 37.5 | nₒ [589 nm, 20°C]: | 1.4863 |
| CCP-V-1 | 19.0 | Δε [1 kHz, 20°C]: | 2.3 |
| CPY-3-O2 | 10.5 | ε_{∥} [1 kHz, 20°C]: | 6.7 |
| PG P-2-2 V | 1.0 | ε_{⊥} [1 kHz, 20°C]: | 4.4 |
| PPGU-3-F | 0.5 | γ₁ [mPa s, 20°C]: | 59 |
| PUQU-3-F | 14.5 | K₁ [pN, 20°C]: | 13.2 |
| ∑ | 100.0 | K₃ [pN, 20°C]: | 14.2 |
| | | LTS bulk [h, -20°C]: | >1000 |

### Mixture N-16

| | | | |
|---|---|---|---|
| B(S)-2O-O4 | 4.0 | Clearing point [°C]: | 79.5 |
| B(S)-2O-O5 | 4.0 | Δn [589 nm, 20°C]: | 0.0991 |
| CC-3-V | 36.0 | nₑ [589 nm, 20°C]: | 1.5831 |
| CC-V-V1 | 20.0 | nₒ [589 nm, 20°C]: | 1.4840 |
| CCP-V-1 | 3.5 | Δε [1 kHz, 20°C]: | 2.1 |
| CDUQU-3-F | 5.5 | ε_{∥} [1 kHz, 20°C]: | 7.3 |
| CLY-3-O2 | 5.0 | ε_{⊥} [1 kHz, 20°C]: | 5.2 |
| COB(S)-2-O4 | 4.0 | γ₁ [mPa s, 20°C]: | 62 |
| CPY-2-O2 | 8.5 | K₁ [pN, 20°C]: | 12.7 |
| DGUQU-4-F | 3.5 | K₃ [pN, 20°C]: | 15.1 |
| PGUQU-4-F | 5.5 | LTS bulk [h, -20°C]: | >1000 |
| Y-4O-O4 | 0.5 | | |
| ∑ | 100.0 | | |

### Mixture N-17

| | | | |
|---|---|---|---|
| B(S)-2O-O4 | 4.0 | Clearing point [°C]: | 82 |
| B(S)-2O-O5 | 4.0 | Δn [589 nm, 20°C]: | 0.1011 |
| CC-3-V | 36.0 | nₑ [589 nm, 20°C]: | 1.5862 |
| CC-V-V1 | 20.0 | nₒ [589 nm, 20°C]: | 1.4851 |
| CCP-V-1 | 5.0 | Δε [1 kHz, 20°C]: | 1.7 |
| CDUQU-3-F | 5.0 | ε_{∥} [1 kHz, 20°C]: | 7.2 |
| CLY-3-O2 | 5.0 | ε_{⊥} [1 kHz, 20°C]: | 5.6 |
| COB(S)-2-O4 | 5.0 | γ₁ [mPa s, 20°C]: | 73 |
| CPY-2-O2 | 6.5 | K₁ [pN, 20°C]: | 13.4 |
| DGUQU-4-F | 4.0 | K₃ [pN, 20°C]: | 15.5 |
| PGUQU-4-F | 4.5 | LTS bulk [h, -20°C]: | >1000 |
| PY-3-O2 | 1.0 | | |
| ∑ | 100.0 | | |

### Mixture N-18

| | | | |
|---|---|---|---|
| B(S)-2O-O4 | 4.0 | Clearing point [°C]: | 70.5 |
| B(S)-2O-O5 | 4.0 | Δn [589 nm, 20°C]: | 0.0987 |
| CC-2V-V2 | 20.0 | nₑ [589 nm, 20°C]: | 1.5818 |
| CC-3-V | 38.0 | nₒ [589 nm, 20°C]: | 1.4831 |
| CCP-V-1 | 3.0 | Δε [1 kHz, 20°C]: | 1.8 |
| CDUQU-3-F | 7.5 | ε_{∥} [1 kHz, 20°C]: | 7.2 |
| COB(S)-2-O4 | 5.5 | ε_{⊥} [1 kHz, 20°C]: | 5.4 |
| CPY-2-O2 | 4.0 | γ₁ [mPa s, 20°C]: | 61 |
| PGUQU-4-F | 6.5 | K₁ [pN, 20°C]: | 13.1 |
| PY-3-O2 | 7.5 | K₃ [pN, 20°C]: | 12.4 |
| ∑ | 100.0 | LTS bulk [h, -20°C]: | >1000 |

### Mixture N-19

| | | | |
|---|---|---|---|
| B(S)-2O-O4 | 3.0 | Clearing point [°C]: | 80 |
| B(S)-2O-O5 | 4.0 | Δn [589 nm, 20°C]: | 0.0996 |
| CC-3-V | 36.5 | nₑ [589 nm, 20°C]: | 1.5831 |
| CC-V-V1 | 20.0 | nₒ [589 nm, 20°C]: | 1.4835 |
| CCP-V-1 | 2.5 | Δε [1 kHz, 20°C]: | 2.2 |
| CDUQU-3-F | 4.0 | ε_{∥} [1 kHz, 20°C]: | 7.6 |
| CLY-3-O2 | 4.0 | ε_{⊥} [1 kHz, 20°C]: | 5.4 |
| COB(S)-2-O4 | 5.5 | γ₁ [mPa s, 20°C]: | 71 |
| DGUQU-4-F | 4.0 | K₁ [pN, 20°C]: | 13.2 |
| PGUQU-4-F | 6.5 | K₃ [pN, 20°C]: | 15.6 |
| CPY-3-O2 | 8.0 | LTS bulk [h, -20°C]: | >1000 |
| CY-3-O2 | 2.0 | | |
| ∑ | 100.0 | | |

### Mixture N-20

| | | | |
|---|---|---|---|
| CC-3-V | 19.5 | Clearing point [°C]: | 78.5 |
| CCP-V-1 | 10.0 | Δn [589 nm, 20°C]: | 0.1020 |
| PUQU-3-F | 9.5 | nₑ [589 nm, 20°C]: | 1.5850 |
| CPY-3-O2 | 3.0 | nₒ [589 nm, 20°C]: | 1.4830 |
| B(S)-2O-O4 | 4.0 | Δε [1 kHz, 20°C]: | 2.2 |
| B(S)-2O-O5 | 4.0 | ε_{∥} [1 kHz, 20°C]: | 7.7 |
| CC-2V-V2 | 30.0 | ε_{⊥} [1 kHz, 20°C]: | 5.6 |
| COB(S)-2-O4 | 9.0 | K₁ [pN, 20°C]: | 16.4 |
| CDUQU-3-F | 5.0 | K₃ [pN, 20°C]: | 13.8 |
| Y-4O-O4 | 2.0 | | |
| CCQU-3-F | 4.0 | | |
| ∑ | 100.0 | | |

### Mixture N-21

| | | | |
|---|---|---|---|
| B(S)-2O-O4 | 4.0 | Clearing point [°C]: | 78 |
| B(S)-2O-O5 | 3.0 | Δn [589 nm, 20°C]: | 0.1025 |
| CC-2V-V2 | 15.0 | nₑ [589 nm, 20°C]: | 1.5887 |
| CC-3-V | 32.5 | nₒ [589 nm, 20°C]: | 1.4862 |
| CCP-V-1 | 19.0 | Δε [1 kHz, 20°C]: | 2.4 |
| CPY-3-O2 | 10.5 | ε_{∥} [1 kHz, 20°C]: | 6.7 |
| PG P-2-2 V | 1.0 | ε_{⊥} [1 kHz, 20°C]: | 4.3 |
| PPGU-3-F | 0.5 | K₁ [pN, 20°C]: | 13.6 |
| PUQU-3-F | 14.5 | K₃ [pN, 20°C]: | 14.3 |
| ∑ | 100.0 | LTS bulk [h, -20°C]: | >1000 |

### Mixture N-22

| | | | |
|---|---|---|---|
| B(S)-2O-O4 | 4.0 | Clearing point [°C]: | 81.5 |
| B(S)-2O-O5 | 4.0 | Δn [589 nm, 20°C]: | 0.1010 |
| CC-3-V | 30.0 | nₑ [589 nm, 20°C]: | 1.5842 |
| CC-V-V1 | 20.0 | nₒ [589 nm, 20°C]: | 1.4832 |
| CCP-V-1 | 4.5 | Δε [1 kHz, 20°C]: | 2.2 |
| CDUQU-3-F | 10.0 | ε_{∥} [1 kHz, 20°C]: | 7.9 |
| CLY-3-O2 | 9.0 | ε_{⊥} [1 kHz, 20°C]: | 5.7 |
| C LY-3-03 | 5.0 | K₁ [pN, 20°C]: | 14.1 |
| COB(S)-2-O4 | 2.0 | K₃ [pN, 20°C]: | 15.8 |
| CPY-2-O2 | 1.0 | | |
| PGUQU-4-F | 6.0 | | |
| PP-1-2V1 | 2.5 | | |
| Y-4O-O4 | 2.0 | | |
| ∑ | 100.0 | | |

The media according to the invention show excellent low-temperature stability.

## Claims

1. A liquid-crystalline medium with positive dielectric ansisotropy comprising
a) one or more compounds of formula I 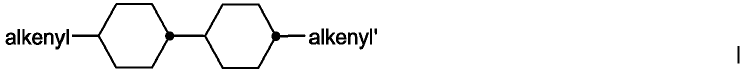 in which
alkenyl and alkenyl', identically or differently, denote an alkenyl radical having 2 to 5 C atoms,
and
b) one or more compounds selected from the group of compounds of the formulae II and III 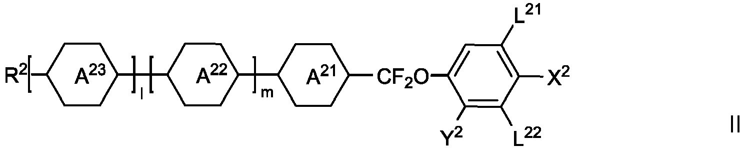 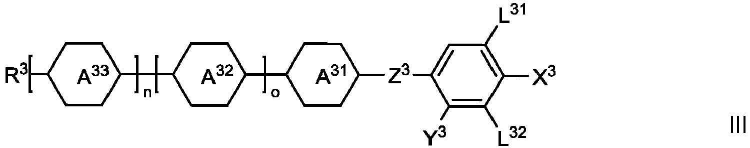 in which
R² and R³ independently of one another, denote a straight-chain or branched alkyl or alkoxy radical that is unsubstituted or halogenated and has 1 to 15 C atoms, where one or more CH₂ groups in these radicals may each be replaced, independently of one another, by 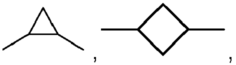 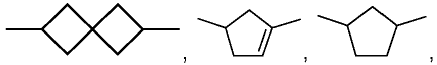 -C≡C-, -CF₂O-, -CH=CH-, -O-, -CO-O- or -O-CO- in such a way that O atoms are not linked directly to one another, 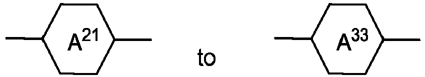 identically or differently, denote 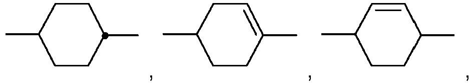 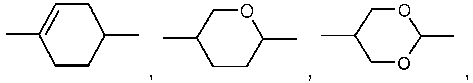 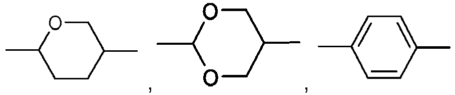 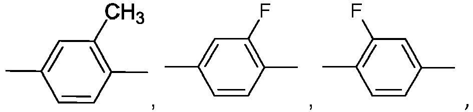 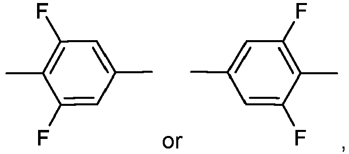
L²¹, L²², L³¹ and L³² independently of each other, denote H or F, preferably F,
Y² and Y³ identically or differently, denote H or CH₃,
X² and X³ independently of each other, denote halogen, halogenated alkyl or alkoxy with 1 to 3 C-atoms or halogenated alkenyl or alkenyloxy with 2 or 3 C-atoms, preferably F, Cl, OCF₃ or CF₃, most preferably F, CF₃ or OCF₃,
Z³ denotes -CH₂CH₂-, -CF₂CF₂-, -COO-, *trans-* -CH=CH-, *trans-*CF=CF-, -CH₂O- or a single bond, and
I, m, n and o are, independently of each other, 0 or 1,
and
c) one or more compounds selected from the compounds of the formulae Y and B 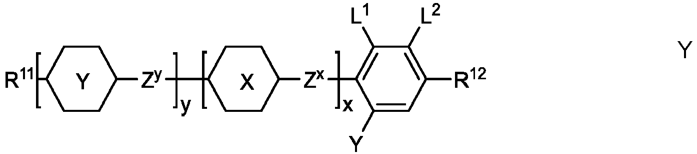 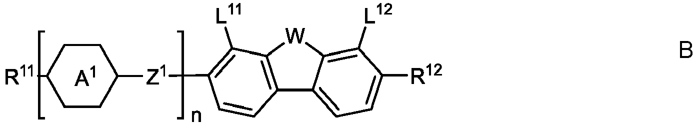 in which the individual radicals, on each occurrence identically or differently, have the following meaning: 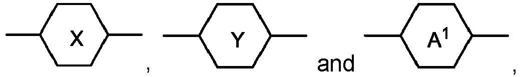 independently of one another, 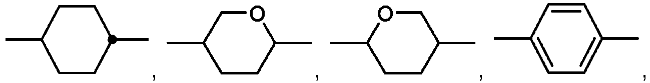 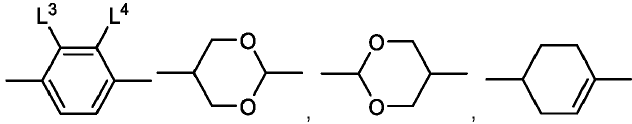 or 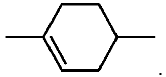
R¹¹, R¹² identically or differently, a straight-chain or branched alkyl or alkoxy radical that is unsubstituted or halogenated and has 1 to 15 C atoms, where one or more CH₂ groups in these radicals may each be replaced, independently of one another, by 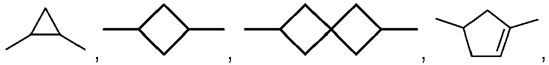 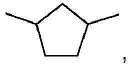 -C≡C-, -CF₂O-, -CH=CH-, -O-, -CO-O- or -O-CO- in such a way that O atoms are not linked directly to one another, and where R² and R¹² alternatively denote F,
Z^{x}, z^{y} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond,
Z¹ -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond,
W OorS,
L¹, L², L¹¹, L¹² identically or differently F or CI,
L³, L⁴ identically or differently H, F CI or CH₃,
Y H, F, Cl, CF₃, CHF₂ or CH₃,
x, y 0, 1 or 2, with x+y ≤3,
n denotes 0 or 1,
wherein the medium comprises one or more compounds selected from the compounds of the formulae B-1 and B-2 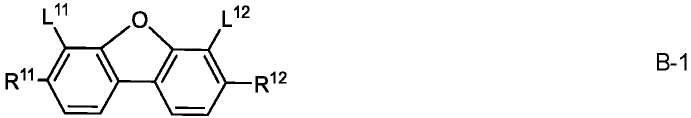 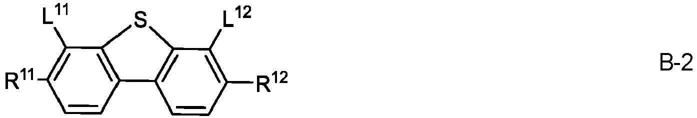 in which R¹¹, R¹², L¹¹ and L¹² have the meanings given under formula B, with the proviso that the media X-1, X-2, X-3 and X-4 having the following compositions are excluded:
X-1
| | |
|---|---|
| B(S)-2O-O4 | 4.0 % |
| B(S)-2O-O5 | 4.0 % |
| CC-3-V | 36.0 % |
| CC-V-V1 | 20.0 % |
| CCP-V-1 | 3.5 % |
| CDUQU-3-F | 5.5 % |
| CLY-3-O2 | 5.0 % |
| COB(S)-2-O4 | 4.0 % |
| CPY-2-O2 | 8.5 % |
| DGUQU-4-F | 3.5 % |
| PGUQU-4-F | 5.5 % |
| Y-4O-O4 | 0.5 % |
| Σ | 100.0 % |
X-2
| | |
|---|---|
| B(S)-2O-O4 | 4.0 % |
| B(S)-2O-O5 | 4.0 % |
| CC-3-V | 36.0 % |
| CC-V-V1 | 20.0 % |
| CCP-V-1 | 5.0 % |
| CDUQU-3-F | 5.0 % |
| CLY-3-O2 | 5.0 % |
| COB(S)-2-O4 | 5.0 % |
| CPY-2-O2 | 6.5 % |
| DGUQU-4-F | 4.0 % |
| PGUQU-4-F | 4.5 % |
| PY-3-O2 | 1.0 % |
| Σ | 100.0 % |
X-3
| | |
|---|---|
| B(S)-2O-O4 | 4.0 % |
| B(S)-2O-O5 | 4.0 % |
| CC-2V-V2 | 20.0 % |
| CC-3-V | 38.0 % |
| CCP-V-1 | 3.0 % |
| CDUQU-3-F | 7.5 % |
| COB(S)-2-O4 | 5.5 % |
| CPY-2-O2 | 4.0 % |
| PGUQU-4-F | 6.5 % |
| PY-3-O2 | 7.5 % |
| Σ | 100.0 % |
X-4
| | |
|---|---|
| B(S)-2O-O4 | 3.0 % |
| B(S)-2O-O5 | 4.0 % |
| CC-3-V | 36.5 % |
| CC-V-V1 | 20.0 % |
| CCP-V-1 | 2.5 % |
| CDUQU-3-F | 4.0 % |
| CLY-3-O2 | 4.0 % |
| COB(S)-2-O4 | 5.5 % |
| DGUQU-4-F | 4.0 % |
| PGUQU-4-F | 6.5 % |
| CPY-3-O2 | 8.0 % |
| CY-3-O2 | 2.0 % |
| Σ | 100.0 % |

2. The medium according to claim 1, wherein the one or more compounds of formula I are selected from the compounds of the formula I-1 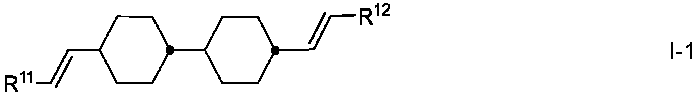 in which
R¹¹ and R¹², identically or differently, denote H, CH₃, or C₂H₅.

3. The medium according to claim 1 or 2, wherein the total concentration of the one or more compounds of formula I is in the range of from 2% to 65%.

4. The medium according to one or more of claims 1 to 3, wherein the medium comprises one or more compounds of formula II selected from the compounds of the formulae II-1, II-2 and II-3 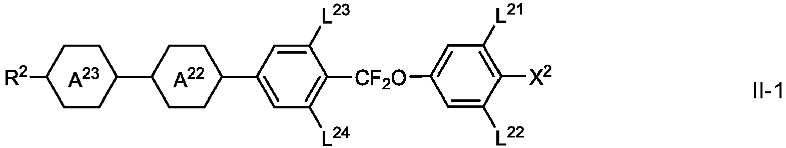 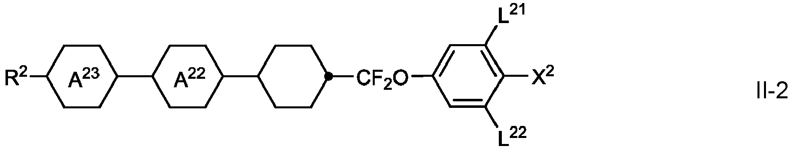 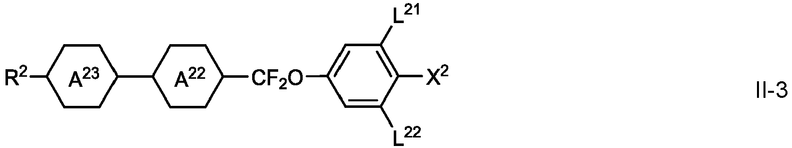 in which
L²³ and L²⁴ denote H or F,
and the remaining groups have the meanings given under formula II in claim 1.

5. The medium according to one or more of claims 1 to 4, wherein the medium comprises one or more compounds of formula III selected from the compounds of the formulae III-1 and III-2 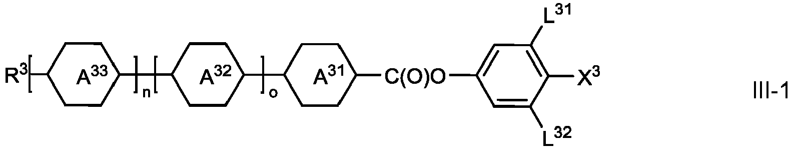 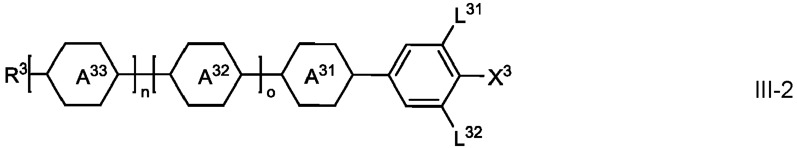 in which R³, X³, L³¹, L³², the ring elements A³¹, A³² and A³³, and n and o have the meanings defined in claim 1 for formula III.

6. The medium according to one or more of claims 1 to 5, wherein the medium comprises one or more compounds of the formula Y-3 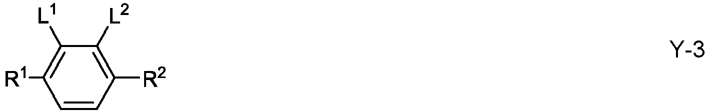 in which R¹, R², L¹ and L² have the meanings given in claim 1.

7. The medium according to one or more of claims 1 to 6, wherein the medium comprises one or more compounds of formula Y and/or B of claim 1 in which the group R¹² denotes F or fluorinated alkyl or fluorinated alkoxy each having 1 to 3 C atoms.

8. The medium according to one or more of claims 1 to 7, wherein the medium comprises one or more compounds selected from the compounds of the formulae IV and V: 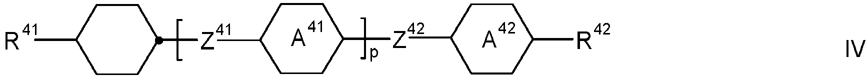 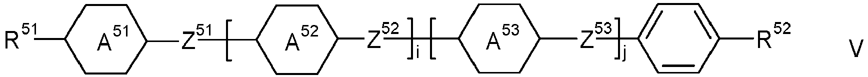 in which
R⁴¹, R⁴², independently of one another, have the meaning indicated in claim 1 for R² under formula II, 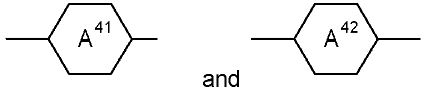 independently of one another and, if 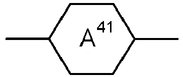 occurs twice, also these independently of one another, denote 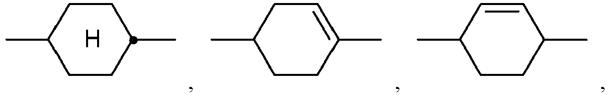 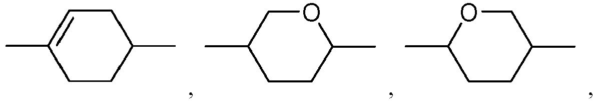 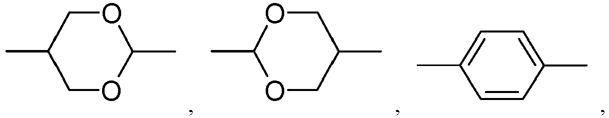 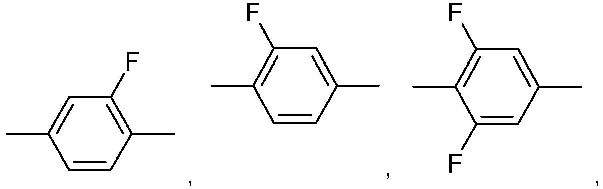 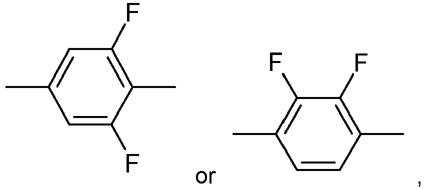
Z⁴¹ and Z⁴², independently of one another and, if Z⁴¹ occurs twice, also these independently of one another, denote -CH₂CH₂-, -COO-, *trans-*CH=CH-, *trans*-CF=CF-, -CHzO-, -CF₂O-, -C=C- or a single bond,
p denotes 0, 1 or 2,
R⁵¹ and R⁵², independently of one another, have one of the meanings given for R⁴¹ and R⁴², 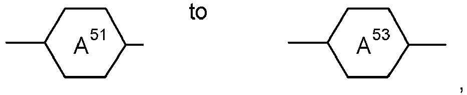 independently of one another, denote 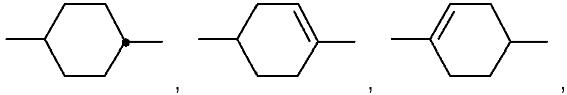 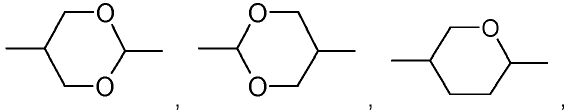 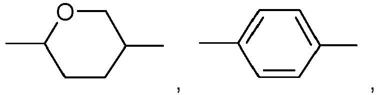 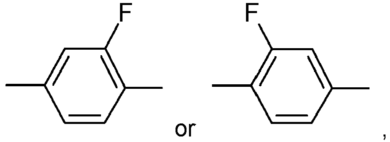
Z⁵¹ to Z⁵³ each, independently of one another, denote -CH₂-CH₂-, -CHz-O-, -CH=CH-, -C=C-, -COO- or a single bond, and
i and j each, independently of one another, denote 0 or 1.

9. The medium according to one or more of claims 1 to 8, wherein the medium additionally comprises one or more chiral compounds and/or stabilizers.

10. Electro-optical display or electro-optical component, **characterized in that** it comprises a liquid-crystalline medium according to one or more of claims 1 to 9.

11. Display according to claim 10, arranged and configured to operate in the IPS- or FFS mode.

12. Display according to Claim 10 or 11, wherein the display contains an active-matrix addressing device.

13. Use of a medium according to one or more of Claims 1 to 9 in an electro-optical display or in an electro-optical component.

14. Process for the preparation of a liquid-crystalline medium according to one or more of claims 1 to 9, **characterized in that** one or more compounds of formula I are mixed with one or more compounds of the formulae II and/or III and with one or more compounds of the formulae B and/or Y wherein one or more compounds selected from the compounds of the formulae B-1 and B-2 are added.

## Patentansprüche

1. Flüssigkristallines Medium mit positiver dielektrischer Anisotropie, enthaltend
a) eine oder mehrere Verbindungen der Formel I 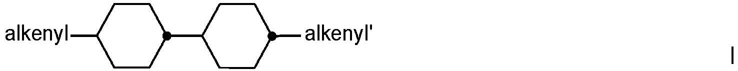 worin
alkenyl und alkenyl' gleich oder verschieden einen Alkenylrest mit 2 bis 5 C-Atomen bedeuten,
und
b) eine oder mehrere Verbindungen, die ausgewählt sind aus der Gruppe der Verbindungen der Formeln II und III 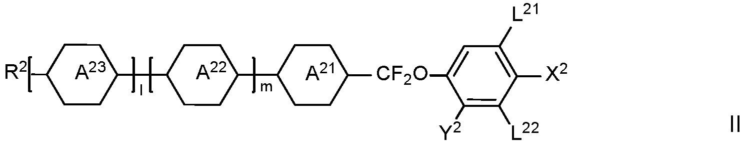 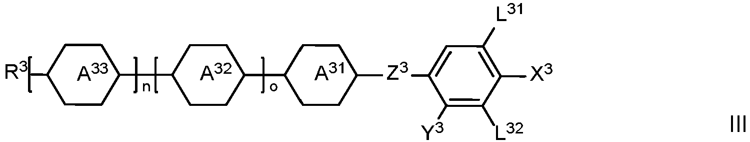 worin
R² und R³ unabhängig voneinander einen geradkettigen oder verzweigten Alkyl- oder Alkoxyrest bedeuten, der unsubstituiert oder halogeniert ist und 1 bis 15 C-Atome aufweist, wobei in diesen Resten eine oder mehrere CH₂-Gruppen jeweils unabhängig voneinander so durch 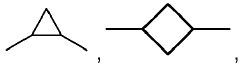 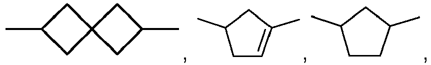 -C≡C-, -CF₂O-, -CH=CH-, -O-, -CO-O- oder -O-CO- ersetzt sein können, dass O-Atome nicht direkt miteinander verknüpft sind, 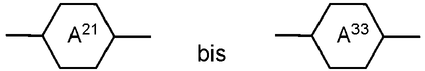 gleich oder verschieden 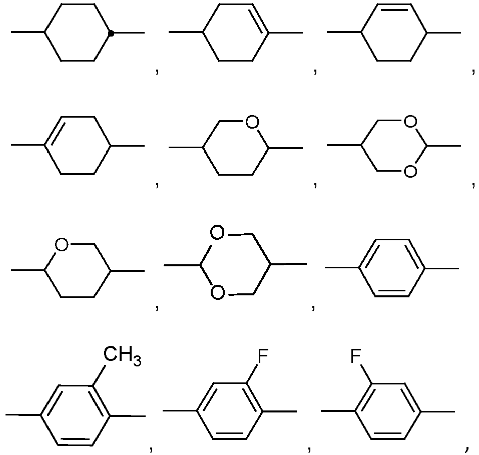 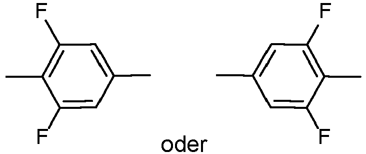 bedeuten,
L²¹, L²², L³¹ und L³² unabhängig voneinander H oder F, vorzugsweise F bedeuten,
Y², Y³ gleich oder verschieden H oder CH₃ bedeuten,
X² und X³ unabhängig voneinander Halogen, halogeniertes Alkyl oder Alkoxy mit 1 bis 3 C-Atomen oder halogeniertes Alkenyl oder Alkenyloxy mit 2 bis 3 C-Atomen, vorzugsweise F, CI, OCF₃ oder CF₃, am stärksten bevorzugt F, CF₃ oder OCF₃, bedeuten,
Z³ -CH₂CH₂-, -CF₂CF₂-, -COO-, *trans-*-CH=CH-, *trans*-CF=CF-, -CH₂O- oder eine Einfachbindung bedeutet und
I, m, n und o unabhängig voneinander 0 oder 1 sind,
und
c) eine oder mehrere Verbindungen, die ausgewählt sind aus den Verbindungen der Formeln Y und B 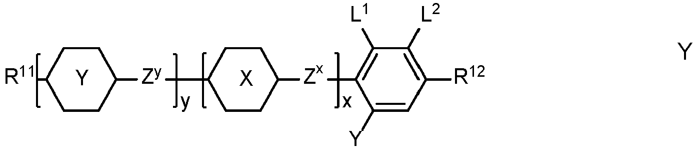 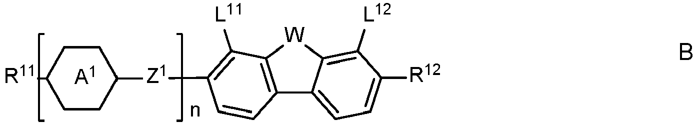 worin die einzelnen Reste bei jedem Auftreten gleich oder verschieden die folgende Bedeutung besitzen: 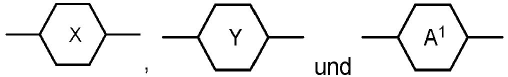 unabhängig voneinander 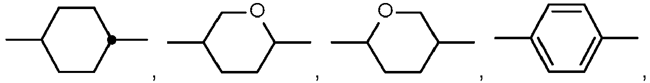 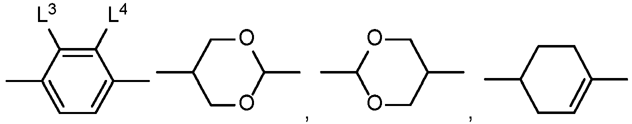 oder 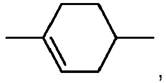
R¹¹, R¹² unabhängig voneinander einen geradkettigen oder verzweigten Alkyl- oder Alkoxyrest, der unsubstituiert oder halogeniert ist und 1 bis 15 C-Atome aufweist, wobei in diesen Resten eine oder mehrere CH₂-Gruppen jeweils unabhängig voneinander so durch 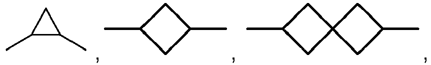 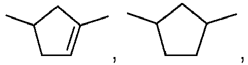 -C≡C-, -CF₂O-, -CH=CH-, -O-, -CO-O- oder -O-CO- ersetzt sein können, dass O-Atome nicht direkt miteinander verknüpft sind, und wobei R² und R¹² alternativ F bedeuten,
Z^{x}, Z^{y} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung,
Z¹ -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung,
W O oder S,
L¹, L², L¹¹, L¹² gleich oder verschieden F oder CI,
L³, L⁴ gleich oder verschieden H, F, CI oder CH₃,
Y H, F, CI, CF₃, CHF₂ oder CH₃,
x, y 0, 1 oder 2, wobei x+y ≤3,
n bedeutet 0 oder 1,
bei dem das Medium eine oder mehrere Verbindungen enthält, die ausgewählt sind aus den Verbindungen der Formeln B-1 und B-2 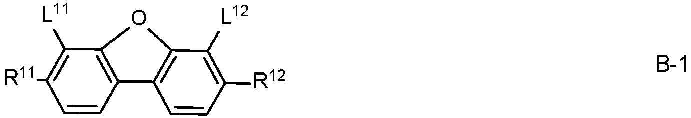 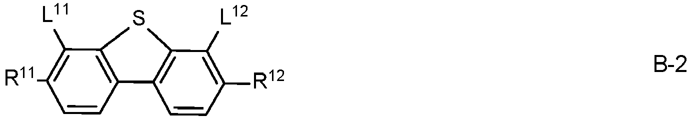
worin R¹¹, R¹², L¹¹ und L¹² die unter Formel B genannten Bedeutungen besitzen,
mit der Maßgabe, dass die Medien X-1, X-2, X-3 und X-4 mit den folgenden Zusammensetzungen ausgeschlossen sind:
X-1
| | |
|---|---|
| B(S)-2O-O4 | 4,0 % |
| B(S)-2O-O5 | 4,0 % |
| CC-3-V | 36,0 % |
| CC-V-V1 | 20,0 % |
| CCP-V-1 | 3,5 % |
| CDUQU-3-F | 5,5 % |
| CLY-3-O2 | 5,0 % |
| COB(S)-2-O4 | 4,0 % |
| CPY-2-O2 | 8,5 % |
| DGUQU-4-F | 3,5 % |
| PGUQU-4-F | 5,5 % |
| Y-4O-O4 | 0,5 % |
| Σ | 100,0 % |
X-2
| | |
|---|---|
| B(S)-2O-O4 | 4,0 % |
| B(S)-2O-O5 | 4,0 % |
| CC-3-V | 36,0 % |
| CC-V-V1 | 20,0 % |
| CCP-V-1 | 5,0 % |
| CDUQU-3-F | 5,0 % |
| CLY-3-O2 | 5,0 % |
| COB(S)-2-O4 | 5,0 % |
| CPY-2-O2 | 6,5 % |
| DGUQU-4-F | 4,0 % |
| PGUQU-4-F | 4,5 % |
| PY-3-O2 | 1,0 % |
| Σ | 100,0 % |
X-3
| | |
|---|---|
| B(S)-2O-O4 | 4,0 % |
| B(S)-2O-O5 | 4,0 % |
| CC-2V-V2 | 20,0 % |
| CC-3-V | 38,0 % |
| CCP-V-1 | 3,0 % |
| CDUQU-3-F | 7,5 % |
| COB(S)-2-O4 | 5,5 % |
| CPY-2-O2 | 4,0 % |
| PGUQU-4-F | 6,5 % |
| PY-3-O2 | 7,5 % |
| Σ | 100,0 % |
X-4
| | |
|---|---|
| B(S)-2O-O4 | 3,0 % |
| B(S)-2O-O5 | 4,0 % |
| CC-3-V | 36,5 % |
| CC-V-V1 | 20,0 % |
| CCP-V-1 | 2,5 % |
| CDUQU-3-F | 4,0 % |
| CLY-3-O2 | 4,0 % |
| COB(S)-2-O4 | 5,5 % |
| DGUQU-4-F | 4,0 % |
| PGUQU-4-F | 6,5 % |
| CPY-3-O2 | 8,0 % |
| CY-3-O2 | 2,0 % |
| Σ | 100,0 % |

2. Medium nach Anspruch 1, bei dem die eine oder mehreren Verbindungen der Formel I ausgewählt sind aus den Verbindungen der Formel I-1 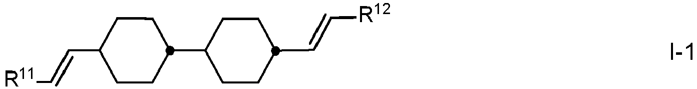 worin
R¹¹ und R¹² gleich oder verschieden H, CH₃ oder C₂H₅ bedeuten.

3. Medium nach Anspruch 1 oder 2, bei dem die Gesamtkonzentration der einen oder mehreren Verbindungen der Formel I im Bereich von 2% bis 65% liegt.

4. Medium nach einem oder mehreren der Ansprüche 1 bis 3, bei dem das Medium eine oder mehrere Verbindungen der Formel II enthält, die ausgewählt sind aus den Verbindungen der Formeln II-1, II-2 und II-3 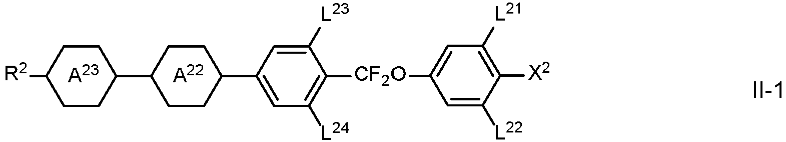 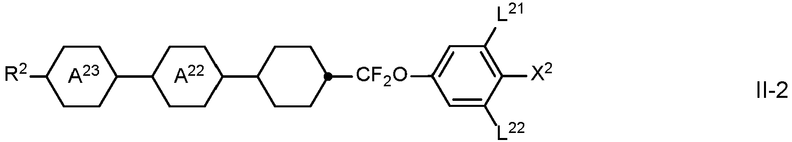 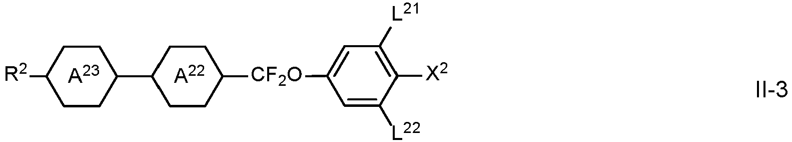 worin
L²³ und L²⁴ H oder F bedeuten,
und die restlichen Gruppen die unter Formel II in Anspruch 1 genannten Bedeutungen besitzen.

5. Medium nach einem oder mehreren der Ansprüche 1 bis 4, bei dem das Medium eine oder mehrere Verbindungen der Formel III enthält, die ausgewählt sind aus den Verbindungen der Formeln III-1 und III-2 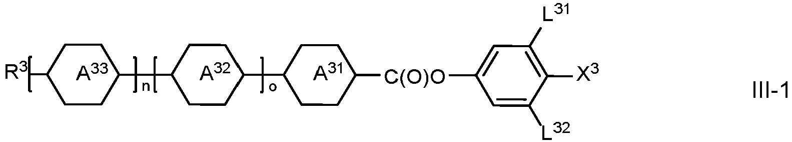 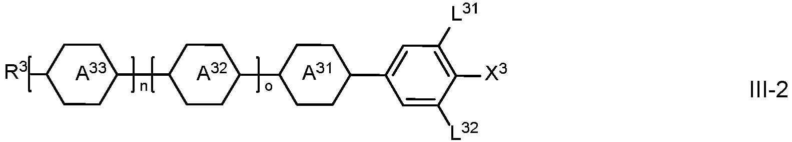 worin R³, X³, L³¹, L³², die Ringelemente A³¹, A³² und A³³ und n und o die in Anspruch 1 für Formel III definierten Bedeutungen besitzen.

6. Medium nach einem oder mehreren der Ansprüche 1 bis 5, bei dem das Medium eine oder mehrere Verbindungen der Formel Y-3 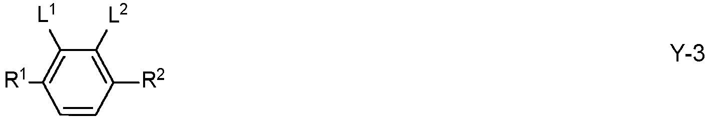 enthält, worin R¹, R², L¹ und L² die in Anspruch 1 genannten Bedeutungen besitzen.

7. Medium nach einem oder mehreren der Ansprüche 1 bis 6, bei dem das Medium eine oder mehrere Verbindungen der Formel Y und/oder B des Anspruchs 1 enthält, worin die Gruppe R¹² F oder fluoriertes Alkyl oder fluoriertes Alkoxy mit jeweils 1 bis 3 C-Atomen bedeutet.

8. Medium nach einem oder mehreren der Ansprüche 1 bis 7, bei dem das Medium eine oder mehrere Verbindungen enthält, die ausgewählt sind aus den Verbindungen der Formeln IV und V: 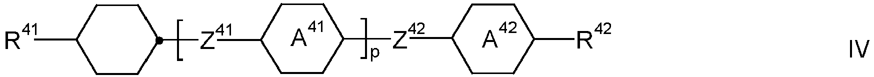 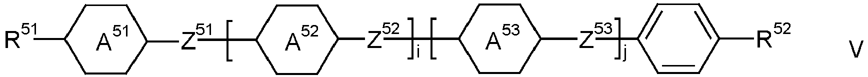 worin
R⁴¹, R⁴² unabhängig voneinander die in Anspruch 1 für R² unter Formel II angegebene Bedeutung besitzen, 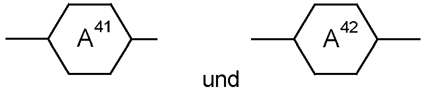 unabhängig voneinander und, wenn 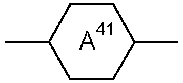 zweimal auftritt, auch diese unabhängig voneinander 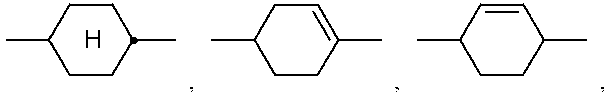 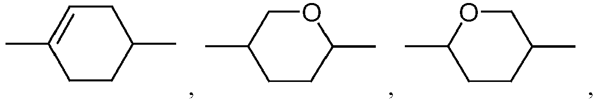 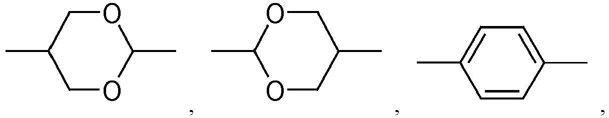 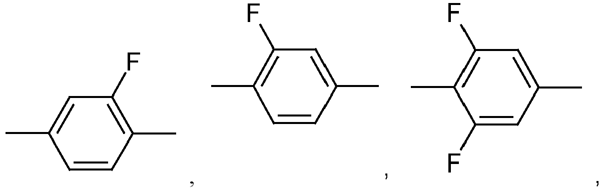 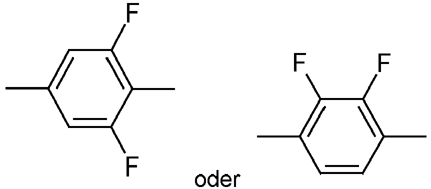 bedeuten,
Z⁴¹ und Z⁴² unabhängig voneinander und, wenn Z⁴¹ zweimal auftritt, auch diese unabhängig voneinander -CH₂CH₂-, -COO-, *trans-*CH=CH-, *trans*-CF=CF-, -CH₂O-, -CF₂O-, -C=C- oder eine Einfachbindung bedeuten,
p 0, 1 oder 2 bedeutet,
R⁵¹ und R⁵² unabhängig voneinander eine der für R⁴¹ und R⁴² genannten Bedeutungen besitzen, 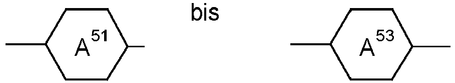 unabhängig voneinander 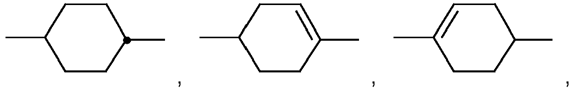 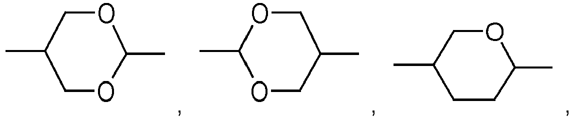 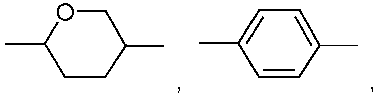 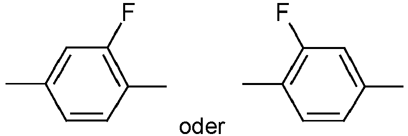 bedeuten,
Z⁵¹ bis Z⁵³ jeweils unabhängig voneinander -CH₂-CH₂-, -CH₂-O-, -CH=CH-, -C=C-, -COO- oder eine Einfachbindung bedeuten, und
i und j jeweils unabhängig voneinander 0 oder 1 bedeuten.

9. Medium nach einem oder mehreren der Ansprüche 1 bis 8, wobei das Medium zusätzlich eine oder mehrere chirale Verbindungen und/oder Stabilisatoren enthält.

10. Elektrooptische Anzeige oder elektrooptische Komponente, **dadurch gekennzeichnet, dass** sie ein flüssigkristallines Medium nach einem oder mehreren der Ansprüche 1 bis 9 enthält.

11. Anzeige nach Anspruch 10, ausgelegt und konfiguriert dafür, im IPS- oder FFS-Modus zu arbeiten.

12. Anzeige nach Anspruch 10 oder 11, bei der die Anzeige eine Aktivmatrix-Adressierungsvorrichtung enthält.

13. Verwendung eines Mediums nach einem oder mehreren der Ansprüche 1 bis 9 in einer elektrooptischen Anzeige oder in einer elektrooptischen Komponente.

14. Verfahren zur Herstellung eines flüssigkristallinen Mediums nach einem oder mehreren der Ansprüche 1 bis 9, **dadurch gekennzeichnet, dass** man eine oder mehrere Verbindungen der Formel I mit einer oder mehreren Verbindungen der Formeln II und/oder III und mit einer oder mehreren Verbindungen der Formeln B und/oder Y mischt, bei dem eine oder mehrere aus den Verbindungen der Formeln B-1 und B-2 ausgewählte Verbindungen zugegeben werden.

## Revendications

1. Milieu cristallin liquide ayant une anisotropie diélectrique positive, comprenant
a) un ou plusieurs composés de formule I 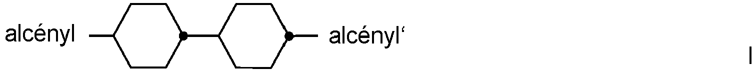 dans laquelle
alcényl et alcényl', de manière identique ou différente, désignent un radical alcényle ayant de 2 à 5 atomes de C,
et
b) un ou plusieurs composés choisis dans le groupe constitué par les composés de formules Il et III 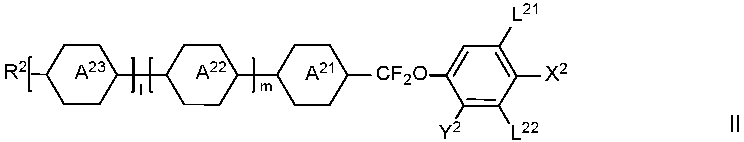 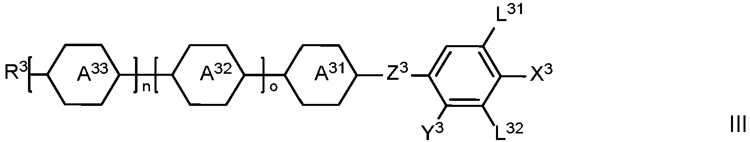 dans lesquelles
R² et R³ indépendamment l'un de l'autre, désignent un radical alkyle ou alcoxy à chaîne linéaire ou ramifiée qui est non substitué ou halogéné et possède de 1 à 15 atomes de C, où un ou plusieurs groupements CH₂ dans ces radicaux peuvent chacun être remplacés, indépendamment les uns des autres, par 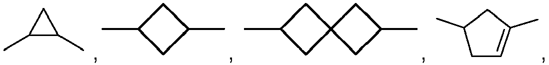 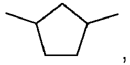 -C≡C-, -CF₂O-, -CH=CH-, -O-, -CO-O- ou -O-CO-de telle sorte que les atomes de O ne soient pas liés directement les uns aux autres, 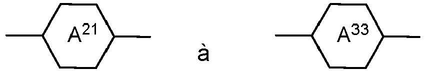 de manière identique ou différente, désignent 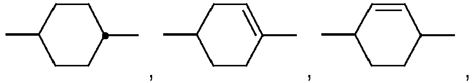 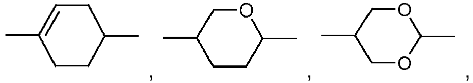 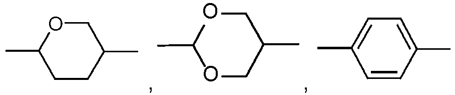 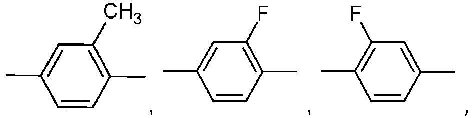 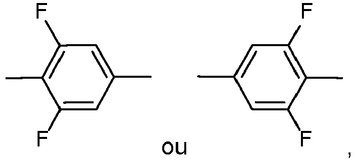
L²¹, L²², L³¹ et L³² indépendamment les uns des autres, désignent H ou F, préférablement F,
Y², Y³ de manière identique ou différente, désignent H ou CH₃,
X² et X³ indépendamment l'un de l'autre, désignent halogène, alkyle ou alcoxy halogéné ayant de 1 à 3 atomes de C ou alcényle ou alcényloxy halogéné ayant 2 ou 3 atomes de C, préférablement F, Cl, OCF₃ ou CF₃, tout préférablement F, CF₃. ou OCF₃,
Z³ désigne -CH₂CH₂-, -CF₂CF₂-, -COO-, *trans-* -CH=CH-, *trans-*CF=CF-, -CH₂O- ou une liaison simple, et
I, m, n et o valent, indépendamment les uns des autres, 0 ou 1,
et
c) un ou plusieurs composés choisis parmi les composés de formules Y et B 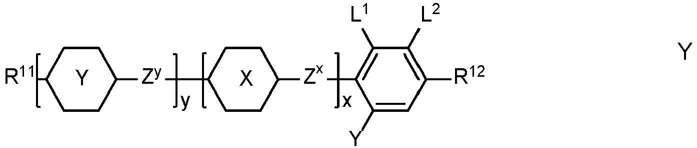 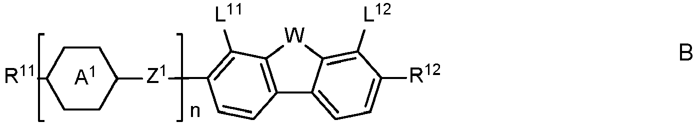 dans lesquelles les radicaux individuels, à chaque occurrence de manière identique ou différente, revêtent la signification suivante : 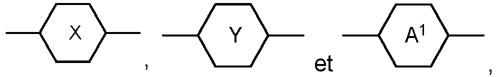 indépendamment les uns des autres, 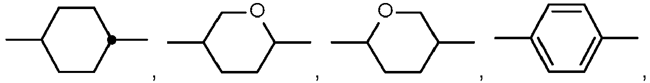 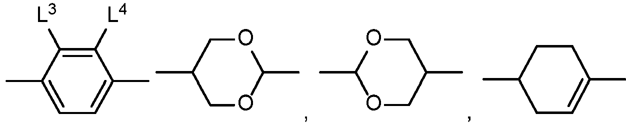 ou 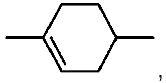
R¹¹, R¹² de manière identique ou différente, un radical alkyle ou alcoxy à chaîne linéaire ou ramifiée qui est non substitué ou halogéné et possède de 1 à 15 atomes de C, où un ou plusieurs groupements CH₂ dans ces radicaux peuvent chacun être remplacés, indépendamment les uns des autres, par 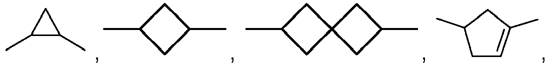 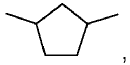 -C≡C-, -CF₂O-, -CH=CH-, -O-, -CO-O- ou -O-CO-de telle sorte que les atomes de O ne soient pas liés directement les uns aux autres, et où R² et R¹² désignent de manière alternative F,
Z^{x}, Z^{y} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, ou une liaison simple,
Z¹ -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, ou une liaison simple,
W O ou S,
L¹, L², L¹¹, L¹² de manière identique ou différente F ou CI,
L³, L⁴ de manière identique ou différente H, F, CI ou CH₃,
Y H, F, CI, CF₃, CHF₂ ou CH₃,
x, y 0, 1 ou 2, avec x+y ≤3,
n désigne 0 ou 1,
le milieu comprenant un ou plusieurs composés choisis parmi les composés de formules B-1 et B-2 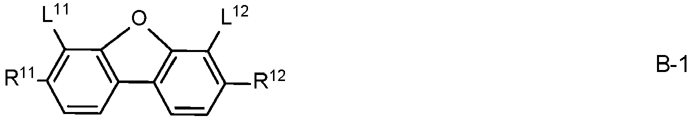 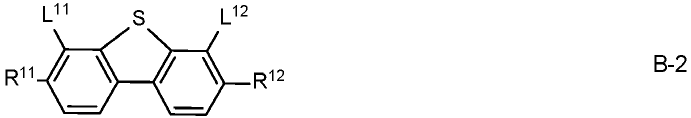
dans lesquelles R¹¹, R¹², L¹¹ et L¹² revêtent les significations données pour la formule B,
à condition que les milieux X-1, X-2, X-3 et X-4 présentant les compositions suivantes soient exclus :
X-1
| | |
|---|---|
| B(S)-2O-O4 | 4,0 % |
| B(S)-2O-O5 | 4,0 % |
| CC-3-V | 36,0 % |
| CC-V-V1 | 20,0 % |
| CCP-V-1 | 3,5 % |
| CDUQU-3-F | 5,5 % |
| CLY-3-O2 | 5,0 % |
| COB(S)-2-O4 | 4,0 % |
| CPY-2-O2 | 8,5 % |
| DGUQU-4-F | 3,5 % |
| PGUQU-4-F | 5,5 % |
| Y-4O-O4 | 0,5 % |
| Σ | 100,0 % |
X-2
| | |
|---|---|
| B(S)-2O-O4 | 4,0 % |
| B(S)-2O-O5 | 4,0 % |
| CC-3-V | 36,0 % |
| CC-V-V1 | 20,0 % |
| CCP-V-1 | 5,0 % |
| CDUQU-3-F | 5,0 % |
| CLY-3-O2 | 5,0 % |
| COB(S)-2-O4 | 5,0 % |
| CPY-2-O2 | 6,5 % |
| DGUQU-4-F | 4,0 % |
| PGUQU-4-F | 4,5 % |
| PY-3-O2 | 1,0% |
| Σ | 100,0 % |
X-3
| | |
|---|---|
| B(S)-2O-O4 | 4,0 % |
| B(S)-2O-O5 | 4,0 % |
| CC-2V-V2 | 20,0 % |
| CC-3-V | 38,0 % |
| CCP-V-1 | 3,0 % |
| CDUQU-3-F | 7,5 % |
| COB(S)-2-O4 | 5,5 % |
| CPY-2-O2 | 4,0 % |
| PGUQU-4-F | 6,5 % |
| PY-3-O2 | 7,5% |
| Σ | 100,0 % |
X-4
| | |
|---|---|
| B(S)-2O-O4 | 3,0 % |
| B(S)-2O-O5 | 4,0 % |
| CC-3-V | 36,5 % |
| CC-V-V1 | 20,0 % |
| CCP-V-1 | 2,5 % |
| CDUQU-3-F | 4,0 % |
| CLY-3-O2 | 4,0 % |
| COB(S)-2-O4 | 5,5 % |
| DGUQU-4-F | 4,0 % |
| PGUQU-4-F | 6,5 % |
| CPY-3-O2 | 8,0 % |
| CY-3-O2 | 2,0 % |
| Σ | 100,0 % |

2. Milieu selon la revendication 1, dans lequel les un ou plusieurs composés de formule I sont choisis parmi les composés de formule I-1 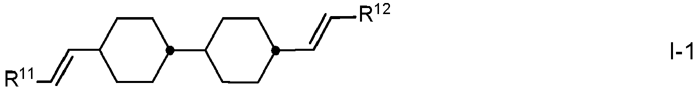 dans laquelle
R¹¹ et R¹², de manière identique ou différente, désignent H, CH₃, ou C₂H₅.

3. Milieu selon la revendication 1 ou 2, dans lequel la concentration totale des un ou plusieurs composés de formule I se trouve dans la plage allant de 2% à 65%.

4. Milieu selon l'une ou plusieurs parmi les revendications 1 à 3, le milieu comprenant un ou plusieurs composés de formule Il choisis parmi les composés de formules II-1, II-2 et II-3 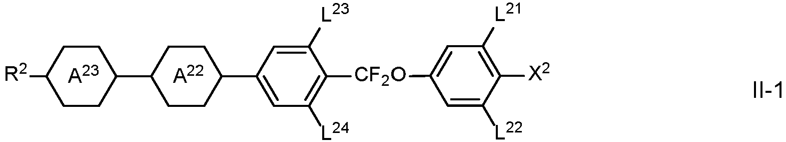 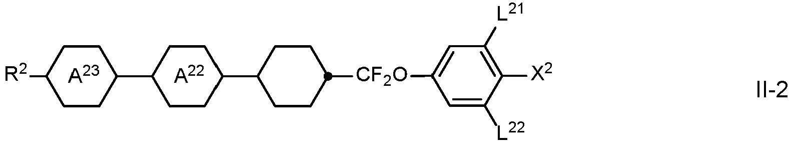 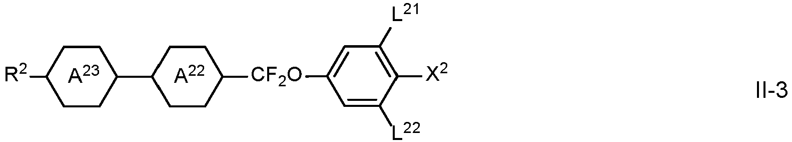 dans lesquelles
L²³ et L²⁴ désignent H ou F,
et les groupements restants revêtent les significations données pour la formule Il selon la revendication 1.

5. Milieu selon l'une ou plusieurs parmi les revendications 1 à 4, le milieu comprenant un ou plusieurs composés de formule III choisis parmi les composés de formules III-1 et III-2 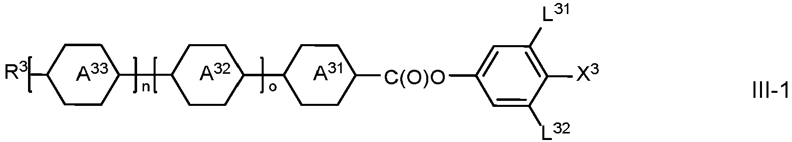 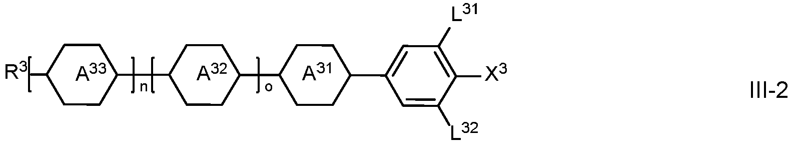 dans lesquelles R³, X³, L³¹, L³², les éléments de cycle A³¹, A³² et A³³, et n et o revêtent les significations définies selon la revendication 1 pour la formule III.

6. Milieu selon l'une ou plusieurs parmi les revendications 1 à 5, le milieu comprenant un ou plusieurs composés de formule Y-3 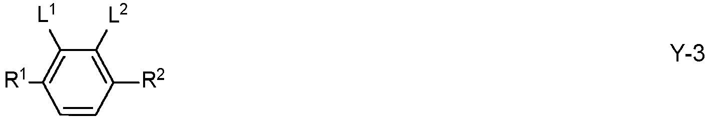 dans laquelle R¹, R², L¹ et L² revêtent les significations données selon la revendication 1.

7. Milieu selon l'une ou plusieurs parmi les revendications 1 à 6, le milieu comprenant un ou plusieurs composés de formule Y et/ou B selon la revendication 1 dans laquelle le groupement R¹² désigne F ou alkyle fluoré ou alcoxy fluoré ayant chacun de 1 à 3 atomes de C.

8. Milieu selon l'une ou plusieurs parmi les revendications 1 à 7, le milieu comprenant un ou plusieurs composés choisis parmi les composés de formules IV et V : 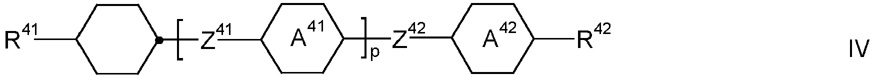 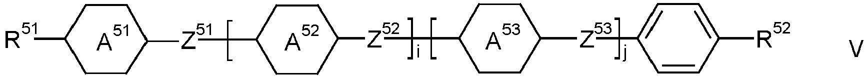 dans lesquelles
R⁴¹, R⁴², indépendamment l'un de l'autre, revêtent la signification indiquée selon la revendication 1 pour R² pour la formule II, 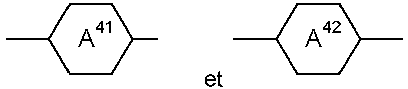 indépendamment l'un de l'autre et, si 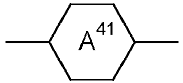 est présent deux fois, de même ceux-ci indépendamment l'un de l'autre, désignent 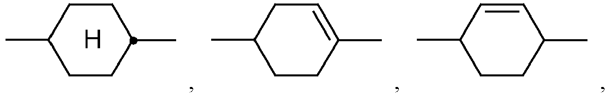 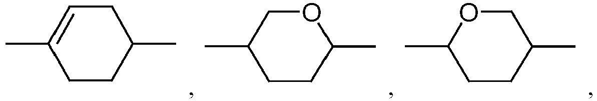 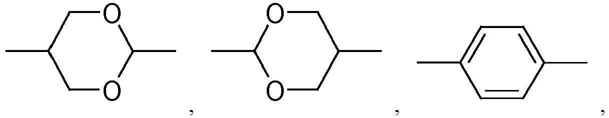 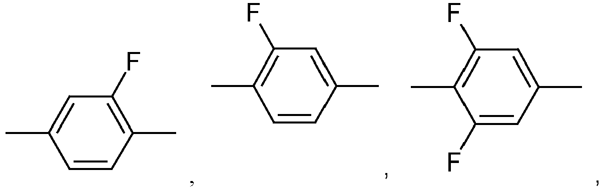 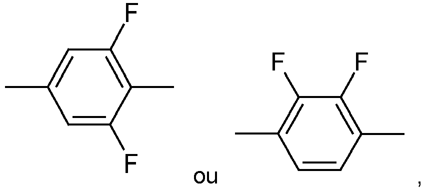
Z⁴¹ et Z⁴², indépendamment l'un de l'autre et, si Z⁴¹ est présent deux fois, de même ceux-ci indépendamment l'un de l'autre, désignent -CH₂CH₂-, -COO-, *trans*-CH=CH-, *trans*-CF=CF-, -CH₂O-, -CF₂O-, -C=C- ou une liaison simple,
p désigne 0, 1 ou 2,
R⁵¹ et R⁵², indépendamment l'un de l'autre, revêtent l'une des significations données pour R⁴¹ et R⁴² 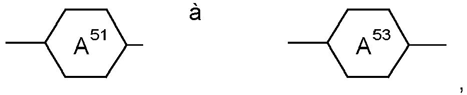 indépendamment l'un de l'autre, désignent 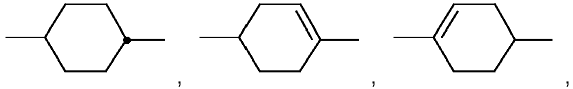 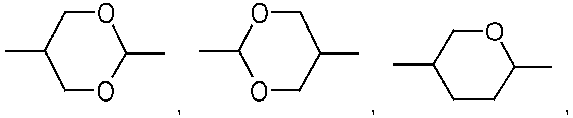 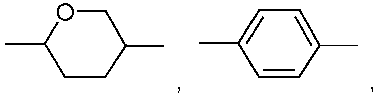 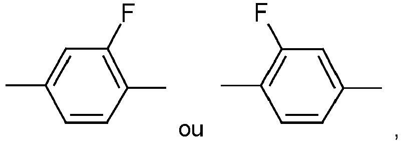
Z⁵¹ à Z⁵³ chacun, indépendamment l'un de l'autre, désignent -CH₂-CH₂-, -CH₂-O-, -CH=CH-, -C=C-, -COO- ou une liaison simple, et
i et j chacun, indépendamment l'un de l'autre, désignent 0 ou 1.

9. Milieu selon l'une ou plusieurs parmi les revendications 1 à 8, le milieu comprenant en outre un ou plusieurs composés chiraux et/ou stabilisateurs.

10. Affichage électro-optique ou composant électro-optique, **caractérisé en ce qu'**il comprend un milieu cristallin liquide selon l'une ou plusieurs parmi les revendications 1 à 9.

11. Affichage selon la revendication 10, agencé et configuré pour fonctionner selon le mode IPS ou FFS.

12. Affichage selon la revendication 10 ou 11, l'affichage contenant un dispositif d'adressage à matrice active.

13. Utilisation d'un milieu selon l'une ou plusieurs parmi les revendications 1 à 9, dans un affichage électro-optique ou dans un composant électro-optique.

14. Procédé de préparation d'un milieu cristallin liquide selon l'une ou plusieurs parmi les revendications 1 à 9, **caractérisé en ce qu'**un ou plusieurs composés de formule I sont mélangés avec un ou plusieurs composés de formules Il et/ou III et avec un ou plusieurs composés de formules B et/ou Y, où un ou plusieurs composés choisis parmi les composés de formules B-1 et B-2 sont ajoutés.
